(19) **Europäisches Patentamt**

**European Patent Office**

**Office européen des brevets**

(11) **EP 0 705 521 B1**

(12) **EUROPEAN PATENT SPECIFICATION**

(45) Date of publication and mention
of the grant of the patent:
**10.05.2000 Bulletin 2000/19**

(21) Application number: **94919616.6**

(22) Date of filing: **07.06.1994**

(51) Int. Cl.[7]: **H04Q 7/20**, H04B 7/26

(86) International application number:
**PCT/EP94/01854**

(87) International publication number:
**WO 94/30022 (22.12.1994 Gazette 1994/28)**

(54) **SIGNALING PROCESSOR FOR DIGITAL MOBILE RADIO SYSTEMS**

SIGNALISIERUNGSPROZESSOR FÜR DIGITALE MOBILFUNKSYSTEME

PROCESSEUR DE SIGNALISATION POUR SYSTEMES RADIO/TELEPHONIQUES MOBILES
NUMERIQUES

(84) Designated Contracting States:
**AT BE CH DE DK ES FR GB GR IT LI NL SE**

(30) Priority: **15.06.1993 IT MI931267**

(43) Date of publication of application:
**10.04.1996 Bulletin 1996/15**

(73) Proprietor: **Italtel s.p.a.**
**20154 Milano (IT)**

(72) Inventors:
 • **BRIONI, Massimo**
  **I-29012 Caorso (IT)**
 • **CANESI, Massimiliano**
  **I-20096 Pioltello (IT)**

 • **COLOMBO, Giulio**
  **I-22030 Lipomo (IT)**
 • **MORINI, Luigi**
  **I-29100 Piacenza (IT)**
 • **ZAMBARDI, Maurizio**
  **I-20060 Cassina de' Pecchi (IT)**

(74) Representative: **Giustini, Delio**
  **c/o Italtel S.p.A.,**
  **Cascina Castelletto**
  **20019 Settimo Milanese (MI) (IT)**

(56) References cited:
 • **PHILIPS TELECOMMUNICATION REVIEW,
  vol.50, no.2, August 1992, HILVERSUM NL pages
  78 - 83, XP000315529 MCMATHON 'Base station
  control using DSP techniques'**

**Description**

The present invention relates to mobile radio telephone systems and more particularly to a processor for telephone signalling generated by transmission measurements for digital mobile radio systems.

As is known, digital mobile radio systems differ from the analog type mainly in that they use transmission carriers modulated in accordance with numerical modulation techniques which are made necessary by the fact that the base band signal is already modulated digitally at the source. Digital mobile radio systems are now arising on the basis of more advanced concepts compared with those which inspired analog systems which make up the great majority of the systems now in use.

It is also known that the telephone systems of the different countries conform to specifications issued in the form of recommendations by special supranational bodies (CEPT/CCITT) having the purpose of standardizing the operation of the different systems to make them mutually compatible and hence capable of communicating.

The design of a modern mobile radio telephone system of the digital type is such a vast and ambitious project that it has required, at least in the European framework, cooperation of the principal managers of national networks and major manufacturers. Therefore, in 1983 in the framework of the European standardization agency CEPT there was created a special sub-group (ETSI) charged with preparing the specifications of a European digital mobile radio telephone system. At the present status, the phase of specification of a digital mobile radio system denominated GSM® has been completed and some prototypes are already going into service. For the sake of brevity the symbol ® will be omitted hereinafter.

Since the non-limiting embodiment of the present invention relates to a particular application thereof within the pan-European digital mobile radio system GSM, some information of a general nature becomes necessary to explain said system. It is useful to recall that in extraEuropean areas, e.g. the United States and Japan, other digital mobile radio systems are in operation but the GSM system is without doubt the more sophisticated and modern in conception. It is thus presently the most suitable to accommodate the present invention.

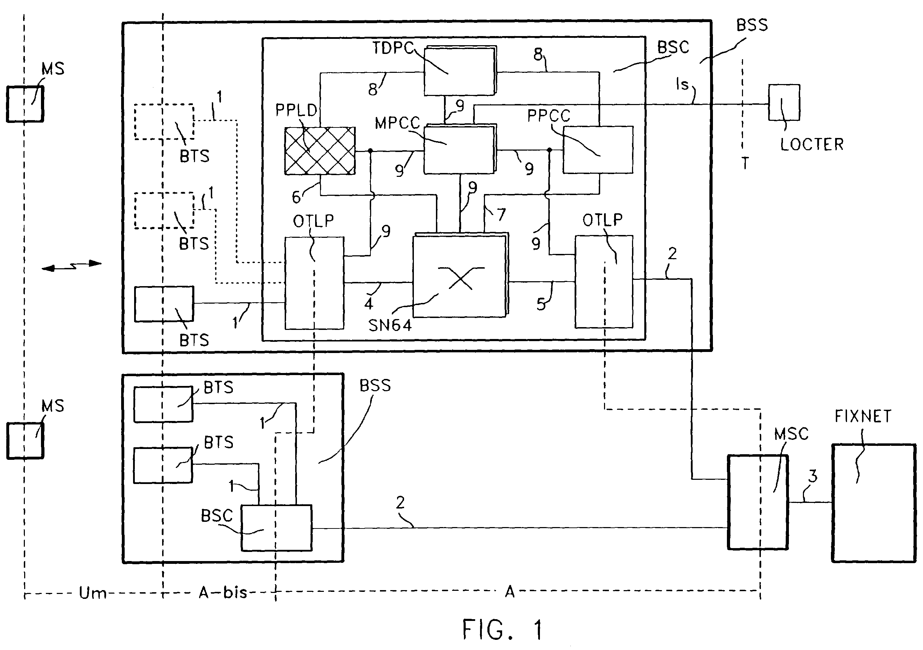

FIG. 1 shows a synthetic but explanatory block diagram of a GSM mobile radio system. In the figure the symbols MS (Mobile Station) designate mobile terminals, e.g. radio telephones mounted in motor vehicles, connected via radio with the respective transceivers TRX, not shown in the figures, belonging to one or more fixed radio stations indicated by the symbols BTS (Base Transceiver Station). Multiple BTS are connected to a base station (fixed) controller indicated by BSC (Base Station Controller), whose constituent blocks will be better explained below. The entirety collection of multiple BTSes governed by one BSC forms a functional sub-system indicated by BSS (Base Station System). Multiple BSC (BSS) are connected to an automatic telephone switching for mobile radio MSC (Mobile Switching Center) which is in turn connected to an automatic telephone switching of the fixed network FIXNET. At the MSC are located two data bases denominated HLR and VLR not shown in the figures. The former contains the permanent data of each MS while the second contains the variable data. The two bases cooperate in allowing the system to trace a user who makes broad movements in the territory. An Operation and Maintenance Center, also not shown in the figures, dialogues with MSC and BSC and carries out functions of supervision, alarm management, traffic measurement etc. termed E&M.

The connection between a generic BTS with its own BSC, as between BSC and MSC, and between MSC and FIXNET, takes place over fixed numerical lines indicated by 1, 2 and 3 respectively. The figures show vertical broken lines delimiting the borders of the interfaces between the principal functional blocks and specifically Um indicates the radio interface between MS and BTS, A-bis that between BTS and BSC, A the interface between BSC and MSC, and T the RS232 interface between BSC and a local terminal LOCTER. The figures do not show the interface 0 provided between BSC and MSC. Said interfaces are described in ETS 300 500 (Um), 300 592 (A-bis), 300 587-1 (A), GSM 12.20 and 12.21 (0) Recommendations.

The number of BTS, BSC and MSC blocks in FIG. 1 is only indicative since in reality their actual number, like their location, is established in such a manner as to ensure uniformity of service all over the territory covered by the mobile radio service. For this purpose said territory is ideally divided in cells of appropriate size, each of which in case of central excitation is served by a BTS.

Every BTS comprises a group of transceivers TRX, one for each radio frequency carrier used in the cell. Every TRX is connected to a group of antennas whose configuration ensures uniform radio coverage of the cell. A group of N adjacent cells which together engage all of the carriers available to the mobile radio service is called a cluster. Said carriers can be reused in contiguous clusters. As set forth in GSM Recommendation 05.02 on multiple access to the radio path, the radio frequency band associated with a generic carrier is 200 kHz and is used with time division by 8 different MS. The individual periods of use, approximately 0.577 ms, are termed 'time slots' and constitute the physical channels on which travels the information whether voice, data or signalling. Said information is divided in bursts consisting of appropriate bit sequences with each bit having a duration of approximately 3.69 μs which occupy the respective time slots.

The group of 8 contiguous time slots constitutes a base frame lasting approximately 4.615 ms, repeated cyclically. The interface Um associates a logic channel with each physical channel and for this purpose multiple successive base frames are numbered and considered part of a repetitive multiframe. The meaning of the logic channel depends only on the position taken by the base frame in the multiframe in accordance with a diagram fixed by ETS 300 573 and GSM 05.02 Recommendations. If to the time slot is assigned a single logic channel the channel is termed full-rate. If to the time slot are assigned two logic channels with alternate frames, the two channels are termed half-rate.

The individual carriers used in a cell cluster are allocated contiguously in the radio frequency spectrum reserved for the GSM mobile radio service. Specifically, 124 carriers are possible for the sub-band reserved for uplink connection from MS to BTS (890 MHz to 915 MHz) and the same number for the downlink connection from BTS to MS (935 MHz to 960 MHz). The result is a maximum possible number of 992 full-rate channels or 1984 half-rate channels.

The logic channels are distinguished in traffic channels called TCH which carry voice and data, and control channels which serve essentially for dialog between MS and BTS and carry signalling information and the values of some engineerable parameters.

Concerning voice channels TCH carried by the uplink connection time slot their generation starts from a digital modulation of the voice signal of the speaker. Said modulation produces a low bit-rate digital signal, typically 13kbit, as set forth in ETS Recommendations 580-1 and 580-2. The individual bits of the modulated voice signal are then manipulated in a complex manner to cipher and immunize to errors the transmitted information. Lastly, the bits are packaged in the bursts making up the TCH channels. Dual operations are completed on the voice reception signal bits of the TCH channel in the downlink connection.

As regards the control channels, there is provided a broadcast type control channel indicated by BCCH, a common control channel indicated by CCCH, and dedicated control channels indicated by DCCH.

The BCCH channel is a channel existing only in the downlink direction and serves to carry information on the cell type to the mobiles. It is unique for each cell and is broadcast from each BTS to all the listening MS only during the 0 time slot of a purpose-assigned carrier indicated by hereinafter BCCH carrier. The BCCH channel includes the subchannels FCCH and SCH consisting of homonymous bursts used by the mobiles to synchronize the frequency of its carrier and the frame of the digital channels with carrier and frame arriving from BTS respectively. The subchannel SCH comprises a field BSIC with the cell code number.

The channel CCCH is a two-way channel which serves the entire cell. It comprises a subchannel RACH in uplink direction with shared access which serves the entire cell and carries the access requests (random) of MS to the network, and two downlink subchannels AGCH and PCH which carry the responses of the network to the access requests and paging messages respectively.

The channels DCCH carry signalling and are divided in two categories of which the first comprises channels indicated by SDCCH which carry the signalling for control of the calls until assignment of the channels TCH. A second category comprises channels indicated by SACCH which carry a signalling associated with the respective main channels, i.e. channels SDCCH or traffic channels TCH. They are therefore inserted in the same frame structure of said main channels.

The telephone signalling used in the framework of the GSM system makes use of the functions supported by a protocol with several hierarchical levels in large part taken from that presently in use in analog mobile radio systems or in land telephone systems. Level 1 of the above protocol indicates more specifically the type of physical carrier used for the connection. Level 2 develops functions which control the correct sequential flow of messages (transport functions) with the intention of providing a virtual carrier free of errors between the connected points. Level 3 (termed 'network') and the higher levels develop message processing functions for control of the main application processes.

In the GSM mobile radio telephone system the mobile equipment MS carries out a certain activity even without a call. Indeed, as the first step to be able to communicate through the network, the mobile needs to be obliged to continuously choose a cell with which to associate while moving. This activity falls within the "Cell Selection and Reselection" function described in ETS Recommendations 300 535 and 300 578.

The mobile chooses the cell with which to associate by completing a scanning of all the BCCH carriers provided by the GSM of which the MS has advance knowledge. For each of these it measures the power of the received signal, demodulates the RF signal, synchronizes with the multiframe structure of the demodulated signal to be able to acquire the cell code number and other useful information from the channel BCCH, and lastly updates a list of six most favoured cells. Among these, the preselected cell, also called 'serving' cell, is the one which results most reliable. The above operations are carried out periodically in the idle status, even when the mobile is already associated with a cell, in order to be able to reassociate with a different cell if it receives therefrom a BCCH carrier with better reliability (Cell Reselection). The mobiles which are synchronized with the frame of a BCCH carrier are also synchronized with the frames of the other carriers used in the cell since the TRX of a BTS are all mutually synchronous. It follows that the frame number is unique within a cell.

The need of the MS to remain synchronized with the BTS with which they are associated does not end after association with a cell but reappears at every request for access thereof and persists throughout the conversation with BTS. A function termed 'Adaptive Frame Alignment' provides for this necessity, as set forth in ETS Recommendation 300 552, which allows the BTS to keep for a given channel three fixed advance time slots between the transmission and reception frames regardless of the movements of the mobile. In practice, when MS wants to accede to the network it sends to BTS an access burst which enables BTS to measure the actual delay and calculate a corresponding parameter termed 'timing advance' for the correction which MS must make in sending the subsequent frames on the uplink channel. At the end of the access phase a dialog is started between MS and BTS and the latter adjusts the timing advance continuously while calculating the subsequent delays of the uplink frames. The timing advance values are communicated by BTS to MS using a respective channel SACCH.

Access of MS to the network takes place in the following cases:

- by initiative of the user in originated call;
- by autonomous initiative of MS upon signalling of the network in paging call;
- by autonomous initiative of MS on signalling of the network in case of Handover (see below);
- by autonomous initiative of MS without intervention of user or network in case of particular functions, such as for example: affiliation, authentication, etc., which will not be discussed below.

In each of the cases mentioned MS sends an access burst on the control channel RACH or, in case of Handover, on the new assigned channel (SDCCH or TCH). Multiple requests can occur simultaneously but BTS solves the disputes. The MS which wins the dispute obtains from the network assignment of a free channel SDCCH on which a level 2 connection is established by activation in MS and BTS of the functions called for by the protocol termed LAPDm, as per ETS Recommendation 300 555. The level 3 messages for the services underway can therefore flow. Said functions are activated for the traffic channel TCH which replaces the channel SDCCH.

Lastly there are illustrated two important functions of the GSM system, termed 'Power Control' and 'Handover', based on performance of special transmission measurements by the mobiles and BTS. Information on them is supplied in ETS Recommendation 300 578. Power Control and Handover, because of their importance, must continue to act even when a particular function termed 'Discontinuous Transmission' is activated and by which the mobile, and optionally the BTS, are enabled for transmission of the carrier only if it is modulated, i.e. if there is vocal activity on the channels TCH. The purpose of this last function is to reduce the mean interference level in the network and at the same time increase the mobile operating range. The Handover function is typical of all mobile radio systems and therefore it is provided, although in a less perfect manner, also in analog mobile radio systems. However, it does not seem that the latter carry out a function similar to that of Power Control of the GSM.

The transmission measurements performed by MS, in downlink direction, concern the level and quality of the channels TCH and SDCCH in use, and the level of the BCCH carriers of the adjacent cells. These measurements generate values sent to BTS on the SACCH channels. Specifically, every MS which performs the measurements calculates a mean of the values measured extended to a SACCH multiframe of 104 base frames, which corresponds to a time of approximately 480ms and the mean is inserted in the SACCH channel of the next multiframe.

The transmission measurements performed by BTS in uplink direction concern the level and quality of the TCH and SDCCH channels in use, the value of the timing advance parameter, and the interference on the free time slots. Also in this case, for every MS to which the measurements are related, the measured values are averaged on the SACCH multiframe, the mean calculated by BTS is associated with that calculated by MS and the two means together are sent to BSC through the interface A-bis to be used in the Power Control and Handover functions.

In case of 'Discontinuous Transmission' the measurements are performed and averaged only on 12 of the 104 frames of the SACCH channel surely always present.

The Power Control function consists of the gradual change of power of a transmitter in steps of predetermined amplitude. The Power Control is governed by BSC and is performed obligatorily on the mobiles and optionally on the TRX. It takes place on all the time slots for the TCH traffic channels and SDCCH control channels independently for each individual channel and each individual MS. Excluded are the time slots of the BCCH carriers which carry control channels. Taking into consideration the Power Control activated on the mobiles, two cases are possible of which, in the first case transmitter power is decreased by steps of predetermined amplitude until it reaches a minimum level sufficient for the transmission conditions in the framework of the serving cell. In the second case power is increased by the same procedure until it reaches the maximum level deliverable by the transmitter. In the first case the purpose is to reduce the interference level on each channel, practically making activable very small cells also; secondarily the operating range of the mobile increases. In the second case the purpose is to avoid performance of Handovers for radio reasons when in reality they could be avoided.

The Handover function is to transfer on a free channel of good quality an on-going communication between an MS and a BTS on a channel (TCH or DCCH), which is released upon completion of the transfer. Handover is a basic function for any mobile radio telephone system because it is the function which allows the mobile to communicate while completing broad movements around the territory during the communication. Indeed, it prevents degradation of the transmission of the communication channel which otherwise would occur inevitably by way of the gradual moving away of the mobile from the complex of antennas of its initially serving cell. The preventive action must also be carried out without the user being able to perceive a disturbance on the on-going communication.

In the GSM system the Handover is started by BSC if the reason is faulty transmission quality on the channel in use. It is requested and governed by MSC if the reason is excessively intense traffic within a cell. And lastly it can also be requested by the Operation and Maintenance Center for carrying out E&M functions. As regards the type of the Handovers, if they are performed between channels of the same cell they are termed 'intracell', but if they are performed between different cell channels they are termed 'intercell'. An intracell Handover involves an MS and a BTS and is usually governed by the BSC which has charge of the BTS. An intercell Handover involves an MS and two BTS and can be the internal or external type depending on whether the two BTS belong to a single or to two different BSC. In the first case the Handover can be governed by the BSC while in the second case it must be governed by MSC.

Of the numerous and complex functions indispensable for operation of a mobile radio system of advanced conception, only those having the greater impact on the object of the present invention have been mentioned until now. But it can already be inferred, and will appear more fully justified below, that the above functions require the support of powerful signalling managed by an adequate hardware and software structure. The processor of the telephone signalling originated by transmission measurements which are the object of the present invention confers on a digital mobile radio system in which it can be used, e.g. the GSM system, the necessary requisites.

In mobile radio systems in accordance with the known art, essentially of the analog type, operation is governed by a specific configuration of processors wherein a first processor manages the radio resources on the basis of the users' mobility, one or more second processors manage the lower signalling levels, and a third processor carries out maintenance and supervision functions. The above mentioned processors are generally microprocessors belonging to a controller of the fixed radio stations.

The above processors configuration, unless very costly processors are used, if it were translated into a digital mobile radio system of advanced conception, could not ensure optimal management of the signalling originated by the transmission measurements. This is basically due to the fact that in modern digital systems, telephone signalling between mobile equipment and the fixed radio station control equipment is very much more intense and sophisticated compared with that used in known mobile radio systems. The additional signalling is on the whole originated by the more extended control performed on the mobile equipment and on the transceivers of the fixed radio stations, mainly as concerns adjustment of the power of the transmitters and performance of better Handovers. In the GSM system, for example, the only signalling originated by the transmission measurements generates two level-3 messages per second for each traffic channel, whose processing also requires performance of a considerable number of arithmetic operations.

In view of the foregoing, using the processor configuration of the known art in a controller of the fixed radio stations of a digital mobile radio system of advanced conception, the real time available to the processor dedicated to radio resource management would be quickly saturated, because in this case it would also have to take on the additional processing load generated by the transmission measurements. However it is not expedient to transfer this processing to a processor dedicated to management of the lower levels of signalling because the latter, because of the very nature of their task, is already absorbed by pressing real time problems. Accordingly, the above remarks on the basic inadequacy of the known processor configuration appear justified.

It can be readily understood how vital it is for a mobile radio system to have a very efficient hardware and software structure for management of the signalling generated by transmission measurements, since it is exactly from said processing that descends the possibility of equipping the mobile radio system with specific functions designed to make it of advanced conception.

The required efficiency means mainly high computing speed and processing capability able to face intense telephone traffic without creating long waiting queues and all this while using economical hardware.

The present invention satisfies these requirements, having for its object a processor of telephone signalling generated by transmission measurements as defined in Claim 1, as well as a corresponding method, as defined in Claim 4.

The processor of the telephone signalling generated by transmission measurements which is the object of the present invention belongs to a control unit for multiple fixed radio stations of a digital mobile radio telephone system. Said control unit also comprises a telephone processor dedicated to the management of radio resources on the basis of the users' mobility, and an administrative processor which carries out maintenance and supervision functions, and it is connected by means of first and second numerical lines carrying voice, data and signalling channels to fixed radio stations and to an automatic telephone switch for mobile radio systems respectively.

Said telephone signalling processor consists substantially of a first processing unit, based on the use of a general-purpose microprocessor, which communicates with a second processing unit, based on the use of a microprocessor specialized in the performance of arithmetic operations in real time, through a dual-access RAM. The first processing unit is also connected to the telephone and administrative processors and to the first numerical lines by means of respective interfaces.

The first processing unit manages the lower levels of signalling existing on the first numerical lines to allow flow of high-level messages in both transmission directions, among which it selects those generated by transmission measurements and writes the information content thereof in the dual-access RAM and sends, by means of said interfaces, the messages which do not concern transmission measurements to corresponding destination members.

The second processing unit reads from the dual-access RAM the information content written by the first processing unit and writes it in the areas of its own memory dynamically assigned to the channels, then it processes appropriately said contents to obtain further messages comprising indications and commands for performance of the Handovers and for control of the power of the transmitters included in the mobile units, and optionally fixed units, and writes said further messages in the dual-access RAM.

The first processing unit reads from the dual-access RAM the messages written by the second processing unit and adds thereto control fields to obtain complete messages which it sends, through the above interfaces, to the fixed radio stations and mobile units for performance of Power Control and Handovers.

A mobile radio system possessing a processing unit purposely dedicated only to transmission measurements has undoubted advantages compared with known systems.

A first advantage is that, although faced with the new and more burdensome processing requirements, the work load is substantially balanced between the different processors; consequently the telephone processor which manages radio resources dedicated to users can handle more intense telephone traffic.

A second advantage, substantially due to the use of a mathematical microprocessor, is that of being able to monitor in real time the actual operating conditions, from the transmission viewpoint, of the mobile and fixed units, in order to be able to optimize said conditions. Specifically: the power of the transmitters of the fixed and mobile units can be systematically regulated in such a manner that it is adequate for the transmission situation, thus making feasible very small cells where the telephone traffic is most intense; the Handovers can be decided on a much broader data base and this allows Handover decisions more responsive to the requirement to extend in time the good quality of the voice channels and reliability of the data channels.

From the above considerations, we point out a very original feature concerning the operation of the processor of the telephone signalling object of the present invention, i.e. the dynamic management of the memory associated with the second processing unit, also termed internal memory in the claims. As known, a mathematical microprocessor is generally used like a co-processor charged, only when necessary, with single arithmetic tasks, and no large memory is needed consequently. In the present invention, on the contrary, the mathematical microprocessor is charged with a complex management job concerning the continuous and autonomous elaboration of the messages generated by transmission measurements related to all the communication simultaneously active in a Base Station. In so, it must carry out an additional job, non strictly arithmetic, but more properly concerning the managing in real time of a very large information embedded in the signalling channels.

Because of the above original features of the mathematical microprocessor, and the complex software which governs the operation of the two-processors complex as a whole, another object of the present invention is a method of managing the telephone signalling generated by transmission measurements, as disclosed in the claims 4 to 12.

A third advantage of the processor, mainly due to the method of governing its operation, is that the dynamic management thereof allows the use of a small RAM to meet the necessities deriving from intense telephone traffic.

The foregoing remarks together with the fact that the two processing unit comprise low-cost microprocessors easy to find, involves a low overall cost of the processor in question. In the prior art concerning the telephone radiomobile systems, a hardware structure constituted of a general-purpose processor interfaced with an arithmetical processor through a dual access memory, like in the present invention, is also described in the intermediate document EP-A-0560388, which falls within the terms of Article 54(3) EPC.

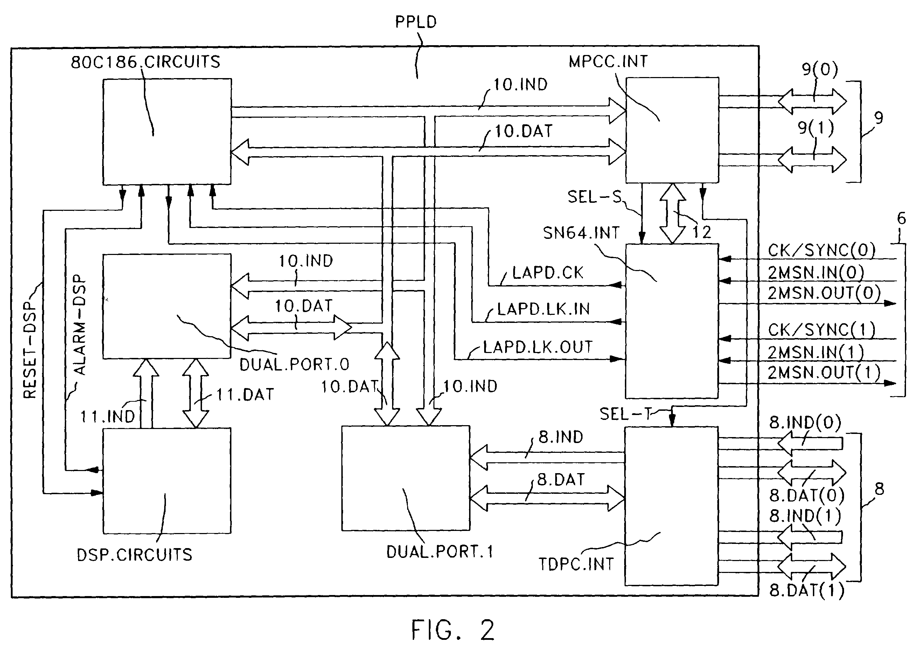

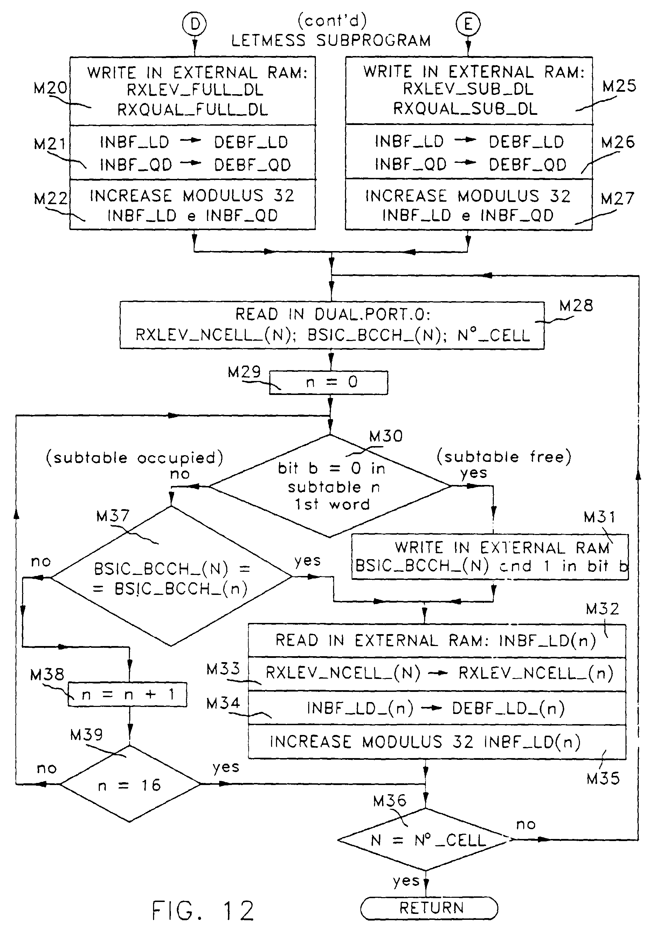

With particular reference to the claim 1 and the Figures 2, 12a, 12b, and 12c of the cited document, a plurality of data processing circuits located into a Base Station (equivalent to our BTS) are described. Each circuit is connected to a respective radio transceiver T/R and provides with speech and signalling three full-rate, or six half-rate, time slots multiplexed to a single radio frequency carrier. Said data processing circuits are connected to "external circuits", shown in Fig. 2, (equivalent to our BSC) through a Control Signal I/O Unit (20) and a Speech Signal I/O Unit (30).

In spite of the similarity in the hardware architecture from our invention and the citation, there is not such a similarity in the operation of the couple of processors in the two cases and in their allocation. In fact, while our couple of processors is a centralised organ located in the BSC for dealing with the signalling generated by transmission measurements of all the BTS, the couple of processors of the citation more properly appears as a peripheral member located in the BTS for converting the communication protocol at the Um radio interface into the protocol at the A-bis interface, and vice versa. So, the processing means for ... of the claim 1 is quite different from each other in the two cases.

Additional purposes and advantages of the present invention will be clarified by the following detailed description of an embodiment thereof given by ay of non-limiting example in which:

FIG. 1 shows a very general block diagram of a mobile radio system of the GSM type;
FIG. 2 shows a more detailed diagram of a block, indicated by PPLD in FIG. 1, representing the processor of telephone signalling originated by transmission measurements which is the object of the present invention;
FIG. 3 shows a more detailed block diagram indicated by DSP.CIRCUITS in FIG. 2 and representing a processing unit dedicated to the level 3 messages originated by said transmission measurements;
FIG. 4 shows a block diagram of the governing program of another processing unit dedicated to level 2 messages and represented by a block indicated by 80C186.CIRCUITS in FIG. 2;
FIG. 5 shows messages processed by the unit DSP.CIRCUITS of FIG. 3;
FIGS. 6a and 6b show the main fields included in a message of FIG. 5;
FIG. 7 shows a table structure used by the processing unit DSP.CIRCUITS to address dynamically a memory indicated by the symbol RAM in FIG. 3;
FIG. 8 shows the image of the partial content of said RAM of FIG. 3, and
FIGS. 9 to 15 show the flow charts for the program governing operation of the processing unit DSP.CIRCUITS of FIG. 3.

With further reference to FIG. 1 it can be noted that the controller of the base station BSC comprises two identical blocks indicated by OTLP, a block SN64, a block PPLD, a block TDPC, a block MPCC, and lastly a block PPCC. A first of the two blocks OTLP is connected to multiple BTS by means of the lines 1 and to the block SN64 by means of other two-way numerical lines 4. A second block OTLP is also connected to the block SN64 by means of two-way numerical lines 5 and to the block MSC through the lines 2. The block SN64 is also further connected to the blocks PPLD and PPCC by means of two other numerical lines indicated by 6 and 7 respectively. Each of the lines 4, 5, 6 and 7 consists in reality of a one-way line for each transmission direction. The block TDPC is connected to the blocks PPLD and PPCC by means of a bus 8. The block MPCC is connected to all the blocks of BSC by means of bus 9 and to the terminal LOCTER by means of a serial data line 1s. In the figures, for the sake of brevity, there is not shown a block comprising a high-stability oscillator generating a clock signal from which are derived all the timings used by the BSC blocks.

For reasons of reliability the blocks MPCC, TDPC, SN64 and clock are duplicate and consequently the busses 8 and 9 are duplicate busses just as the numerical lines 4, 5, 6 and 7 are duplicate.

The lines 1 are one-way lines in both transmission directions which carry serial numerical flows conforming to interface A-bis. Said flows are of PCM type with 2048 kbit/s, in conformity with CCITT G. 703, and comprise 64 kbit/s traffic and signalling channels. The signalling is based on protocol LAPD (Link Access Procedure on the D-channel) as per CCITT Recommendations Q920, Q921. A signalling channel LAPD, termed also 'channel D', is associated with a preset number of traffic channels, maximum 30 full rate. In the GSM system there is also provided the possibility of replacing a 64 kbit/s signalling channel LAPD with one or more 16 kbit/s channels. The operation of conversion from interface Um to A-bis and vice versa is completed mainly by the BTS, which involves conversion of the voice channels TCH in time slot PCM to 8 bit and conversion of the signalling protocols from LAPDm to LAPD.

The lines 2 are one-way lines in both transmission directions which carry serial numerical flows conforming to interface A. Said flows are also of PCM type at 2048 kbit/s CCITT G. 703, but comprising 64 kbit/s signalling channels of the Common Channel CCITT No. 7 type.

One of the signalling channels is used to implement the O interface based on protocol CCITT X.25 provided between the Operation and Maintenance Center and BSC. Conversion between the interfaces A-bis and A and vice versa is completed by the BSC.

Below is given some information on the constitution and operation of the blocks MPCC, PPCC, TDPC, OTLP and SN64 to make more comprehensible the present invention substantially included in the block PPLD which will be discussed more thoroughly below.

The block MPCC shows an administrative processor which controls and supervises the entire operation of the BSC and as such has a standard double interface toward all the blocks of BSC considered as peripherals and to which it is connected by means of duplicate busses for addresses, data and control signals and indicated by 9 in FIG. 1. The two copies of MPCC work in active/hot-standby configuration and in each block MPCC is included a circuit which implements the configuration and control logic of the BSC as concerns redundancy. Said circuit generates the copy selection signals used by the peripheral blocks to select the bus 9 of the active copy to which to connect.

The block PPCC is a peripheral processor which manages levels 1 and 2 of the CCITT No. 7 signalling used at interface A.

The block TDPC shows a telephone processor which manages the application processes for control of the calls, administrating the radio resources on the basis of user mobility. It also has the task of exchanging messages between the two peripheral signalling processors PPLD and PPCC, which implies conversion of the exchanged messages between protocols LAPD and CCITT No. 7.

The two identical blocks OTLP constitute line terminations for the 2048 kbit/s PCM lines 1 and 2 and supply the interface between these lines and a duplicate switching network represented by the block SN64. As such, the two blocks OTLP carry out all the functions which a normal known termination must carry out, i.e. equalization of the arriving signal from which is extracted a clock signal optionally usable for timing the various circuits, conversion of the line codes, preparation of an elastic memory to compensate the line delays and for plesiochronous operation, detection of on-line alarm conditions, extraction of frame synchronisms, etc.; there is also included the function of extraction/insertion of the 64 kbit/s signalling channel from/to the Operation and Maintenance Center. Each block OTLP possesses a line controller which interfaces with the administrative processor MPCC with which it cooperates for supervision and maintenance operations.

The switching network SN64 supplies the two-way connections between the traffic channels at 16 kbit/s or 64 kbit/s which are present on lines 1 and 2. It is required, because said channels are distributed differently between the two line groups, the lines 2 are generally fitted out in a smaller number because they are longer and costlier, hence more densely utilized.

Another important function of the network SN64 is to provide the semi-permanent (nailed up) connections for the signalling channels to the peripheral processors PPLD and PPCC. For this purpose the signalling time slots LAPD which travel on the lines 4 toward SN64 are extracted and inserted in 2 Mbit/s serial numerical flows consisting of only signalling channels carried by the lines 6 to PPLD. Reciprocally, the signalling channels LAPD generated by PPLD constitute the time slots of 2 Mbit/s numerical serial flows of signalling channels carried by the lines 6 to SN64. Fully equivalent operations take place as regards sorting of the CCITT No. 7 signalling channels from the lines 5 to PPCC and vice versa through the lines 7.

The terminal LOCTER is a personal computer which dialogues with MPCC and provides the man/machine interface for starting of operations such as for example: initialization, software loading, diagnosing, etc.

The diagramming of the controller BSC of FIG. 1 being general in nature it does not relate to an actual on-site installation case. Therefore, since each block BSC is implemented in one or more boards, the quantity of the different boards is not given. As concerns the number of boards for the blocks MPCC, TDPC, SN64 and clock generator, it is constant for the BSC. While as concerns the number of boards for the blocks OTLP, PPLD and PPCC it will be determined upon each new installation on the basis of the telephone traffic expected for the mobile radio service in the area served by the BSC. Said number is also redounded by one unit for reliability reasons.

With reference to FIG. 2, in which the same elements of FIG. 1 are indicated by the same symbols, there is described block PPLD which includes the object of the present invention.

In FIG. 2 can be seen a first processing unit 80C186.CIRCUITS connected by means of two busses 10.IND and 10.DAT to first gates of two dual-access RAM DUAL.PORT.0 and DUAL.PORT.1 and to an interface circuit MPCC.INT to the two copies of the administrative processor MPCC of FIG. 1. A second processing unit DSP.CIRCUITS is connected by means of two busses 11.IND and 11.DAT to a second gate of the memory DUAL.PORT.0. An interface circuit TDPC.INT to the duplicate telephone processor TDPC of FIG. 1 is connected, by means of two busses 8.IND and 8.DAT, to a second gate of the memory DUAL.PORT.1.

The interface MPCC.INT is also connected by means of two busses 9(0) and 9(1), corresponding to the busses 9 of FIG. 1, to two respective copies of MPCC. Similarly the interface TDPC.INT is also connected by means of two pairs of busses 8.DAT(0), 8.IND(0) and 8.DAT(1), 8.IND(1) respectively, corresponding to the busses 8 of FIG. 1, to two respective copies of TDPC.

The unit 80C186.CIRCUITS is also connected to an interface circuit SN64.INT towards the duplicate switching network SN64 of FIG. 1 by means of the numerical lines 6 (FIG. 1). Specifically, from each copy of the network SN64 arrives at SN64.INT one or more 2 Mbit/s serial numerical flows (made up only of time slots LAPD) indicated by 2MSN.IN(0) and 2MSN.IN(1) respectively and each flow being associated with a timing indicated by CK/SYNC(0) and CK/SYNC(1) respectively. From the circuit SN64.INT emerges a plurality of 16/64 kbit/s LAPD numerical serial signalling flows indicated by LAPD.LK.IN and accompanied by a plurality of clock signals LAPD.CK. Said plurality is directed to the processing unit 80C186.CIRCUITS. Similarly, from the unit 80C186.CIRCUITS emerges a plurality of as many 16/64 kbit/s LAPD numerical serial signalling flows indicated by LAPD.LK.OUT directed to the circuit SN64.INT where it originates one or more pairs of 2 Mbit/s serial numerical flows (made up of only LAPD time slots) indicated by 2MSN.OUT(0) and 2MSN.OUT(1) and directed to the two copies of the network SN64 respectively.

Specifically, each flow 2MSN.IN(0) or 2MSN.IN(1) caries 8 LAPD time slots to the PPLD board, the remaining time slots being available for other PPLD boards optionally fitted out. A signalling channel LAPD remains identified in both transmission directions by the identical position which the related time slot takes in the flows 2MSN.IN(0), 2MSN.OUT(0) or 2MSN.IN(1), 2MSM.OUT(1).

The interface circuit SN64.INT is also connected to MPCC.INT by a two-way bus indicated by 12.

From the interface circuit MPCC.INT depart two selection signals SEL-S and SEL-T directed to the interface circuits SN64.INT and TDPC.INT respectively.

The two processing units 80C186.CIRCUITS and DSP.CIRCUITS exchange two signals denominated RESET-DSP and ALARM-DSP, whose meaning is explained below.

The explanation of the operation of the individual PPLD blocks, as regards the purely circuit point of view, is given without the aid of detailed drawings of the individual circuits included therein with the exception of those belonging to the block DSP.CIRCUITS. The following considerations on the circuit constitution thereof together with what is published in the technical sheets accompanying the various devices used, to which reference is made, are sufficient for those skilled in the art to obtain the constitutive hardware of said blocks. It is specified that the list of the circuits referring to a block is not always physically present in said block. Indeed, a good part of the hardware constituting the PPLD is obtained by means of a gate array designed purposely.

The unit 80C186.CIRCUITS comprises the following circuits and devices:

- an Intel 80C186XL-20 microprocessor indicated hereinafter by 80C186 and characterized by having a 20-line bus on which it multiplexes the addresses and data and with which are associated further lines for the appropriate control signals for the operations on the bus. The data consist of 16-bit words transferable wholly in a single operation (in word mode) or by means of two distinct operations (in byte mode) in which the two bytes making up each individual word are individually addressable;
- latches which hold steady for the entire duration of a bus cycle the address signals generated by the microprocessor making them separately available on the bus 10.IND;
- transceivers which are enabled selectively by the read and write control signals generated by the microprocessor for setting the correct input or output direction of the data on the bus 10.DAT;
- an EPROM in which is memorized the firmware concerning the basic operation of the 80C186;
- a static RAM of ample size in which is loaded the application software physically divided in two banks with which is associated another bank reserved for the parity bits. The two banks are respectively designed for the lower and upper bytes of the bus 10.DAT;
- serial communication controllers SAB 82525 termed hereinafter HSCX;
- a selection circuit (chip select) connected to the bus 10.IND which decodes for each read and write operation in memory or input/output the address configuration present on the bus 10.IND and generates therefor a respective enablement signal for a device or circuit belonging to the unit or to the other PPLD blocks reached through its buses;
- a circuit generating one or more parity bits of the data during the write operations performed by the microprocessor, said bits having purposeful dedicated lines on the bus 10.DAT, and which check parity during the read operations, generating an alarm signal in case of parity error;
- a register in which is memorized the above alarm and the address present at that time on the bus 10.IND;
- a logic circuit which in case of alarm for parity error generates an interrupt toward the 80C186 causing inhibition by the software of the write operations addressed to the DUAL.PORT.0 or to the DUAL.PART.1 or to a group of communication registers with MPCC located in the block MPCC.INT until the alarm is removed;
- a register in which is memorized a parity error alarm coming from DSP.CIRCUITS;
- a register in which is written a bit used as a control point for reset of a microprocessor inside the unit DSP.CIRCUITS; and
- additional devices which aid the microprocessor in some particular operations as for example management of direct memory access (DMA) and interrupt.

All the above listed circuits and devices making up the unit 80C186.CIRCUITS are connected to the busses 10.IND and 10.DAT; with said busses are also associated the lines for the control signals generated by the microprocessor, for those of interrupt and for said enablement signals.

Each serial communications controller HSCX is assigned to a serial numerical flow LAPD. Specifically, the serial reception part of HSCX receives a flow LAPD.LK.IN and the serial transmission part transmits a flow LAPD.LK.OUT. The speed of the serial communication is set by MPCC independently for each HSCX, because 16 kbit/s LAPD numerical flows are also possible. The HSCX have reception/transmission buffers for transfer of data to/from the processing unit RAM, which takes place on the basis of interrupts sent by the HSCX to the 80C186.

The microprocessor 80C186 can address 1Mbyte of physical memory for normal read/write operations and possesses another addressable 64kbyte space reserved for input/output operations. Its addressing space is shared among all the devices and circuits to which it has access through its busses and this applies also for sharing of the space reserved for input/output operations. Operation of the 80C186 is timed by a 40MHz clock signal taken locally.

The blocks DUAL.PORT.0 and DUAL.PORT.1 are two identical static dual-access RAM having 16-bit words plus two bits of parity. These are provided by commonly available integrated circuits. Each memory possesses two access gates to which are connected the busses of two different processors respectively. The above memories are partitionable in areas in which read and write accesses are disciplined by respective one-bit registers, called hereinafter semaphores, programmable independently from each other. The programming consists of engagement of the semaphore to be able to accede to the memory area associated with it or to release of the semaphore after completion of the access. Semaphorized management of the dual-access RAM in practice makes possible two simultaneous accesses by two processors, provided said accesses are for two different memory areas. The dual-access memory chips have inputs for respective enablement signals.

The circuit configuration of MPCC.INT is in large part like that of two identical interface circuits used by the duplicate processor MPCC to implement the standard double interface toward the peripheral blocks reached by the busses 9 of FIG. 1. Incidentally each of said peripheral blocks must therefore include an interface circuit of the MPCC.INT type. The bus 9 comprises eight lines on which the active processor MPCC multiplexes the addresses and data and a ninth line for a parity bit added to the data. In addition, the bus 9 being the only connection indicated in FIG. 1 between MPCC and the peripheral blocks, it must necessarily comprise the lines reserved for the control, interrupt, copy selection, board enablement, etc. signals.

The interface circuit MPCC.INT comprises the following circuits:

- of the transceivers connected to the buses 9(0) and 9(1);
- a selection circuit to whose inputs arrive copy selection signals from both the interface circuits included in the duplicate block MPCC. The selection circuit generates a signal which enables only the transceivers connected to the bus 9 which leads to the interface used by the active MPCC copy and said bus is thus extended in PPLD;
- circuits which control the parity of data and addresses of the active bus 9 and, in case of parity error, generate respective alarm signals;
- an alarm register in which are memorized said alarms;
- a logic circuit which in case of parity error alarm on the active bus 9 generates an interrupt toward MPCC causing reading of the related alarm register by MPCC and inhibition of its possible write cycles toward MPCC.INT until the alarm register is zeroed;
- a first group of registers comprising: registers in which is memorized the recapitulatory situation of the PPLD alarms to which MPCC can accede in reading; status registers in which MPCC writes software control points, corresponding to the signals SEL-S and SEL-T; registers in which the microprocessor 80C186 writes software control points to force an alarm condition in the different PPLD alarm registers to verify correct operation of the circuits generating and verifying said alarms; registers in which the 80C186 writes other software control points to force circuit configurations different from those of normal operation in order, for example, to verify the integrity of the path of a generic LAPD channel; or to start other operations provided for circuit maintenance;
- a second group of registers in which MPCC writes the position of the time slots of the flows 2MSN.IN to be assigned to respective channels LAPD.LK.IN; the same position applies also for the time slots of the 2MSN.OUT flows in which are inserted the corresponding channels LAPD.LK.OUT; also included are registers in which MPCC writes two speed values, 16kbit or 64kbit per sec, of each LAPD flow;
- a third group of registers comprising communication registers between the microprocessor 80C186 of PPLD and the processor MPCC; the registers of the third group are 8-bit registers connected together and to the busses 10.IND, 10.DAT and active 9, in such a manner as to allow a dual read and write access by both the processors; for this purpose, to said registers reach appropriate timings taken from the control signals coming from the processing unit 80C186.CIRCUITS and from the processor MPCC, with the purpose of making the busses 10.IND, 10.DAT and active 9 congruent. Some of the registers of the third group are also used as semaphores to discipline access to the communication registers, similarly to what takes place inside the DUAL.PORT.0 and DUAL.PORT.1 memories;
- a selection circuit (chip select) connected to the active bus 9 which decodes the address configuration and generates enablement signals directed to the registers of the three different groups and to the semaphores associated with the registers of the third group respectively.

The interface circuit TDPC.INT comprises the following circuits:

- of the transceivers connected to the busses 8.DAT(0) and 8.DAT(1);
- of the selectors connected to the busses 8.IND(0) and 8.IND(1);

- a logic circuit to which arrives the signal SEL-T for enablement of only the transceivers connected to the bus 8.DAT which leads to the active copy TDPC; said bus is then extended into the PPLD; the signal SEL-T also reaches the selection input of said selectors of the address busses to determine the choice of the active bus 8.IND, which is also extended into the PPLD;

- of the circuits which at each bus cycle verify the parity of data and addresses of the active bus 8 and, in case of parity error, generate an alarm signal;

- of the registers in which are memorized said alarms;

- a logic circuit which in case of alarm generates an interrupt to TDPC, causing reading of the alarm registers by the latter and inhibition of its possible write cycles in the DUAL.PORT.1 until the alarm registers are zeroed;

- a selection circuit (chip select) connected to the bus 8.IND which decodes the address configuration and generates for the enablement signals directed to the alarm registers, to the memory DUAL.PORT.1, and to its assigned semaphores.

The interface circuit SN64.INT comprises two-input selectors to which arrive respectively:

- the timing signals CK/SYNC(0) and CK/SYNC(1);
- the numerical flows 2MSN.IN(0) and 2MSN.IN(1);
- two first numerical parity flows (not shown in FIG. 2) associated with the flows 2MSN.IN(0) and 2MSN.IN(1);
- the numerical flows 2MSN.OUT(0) and 2MSN.OUT(1);
- two second numerical parity flows (not shown in FIG. 2) associated with the flows 2MSN.OUT(0) and 2MSN.OUT(1).

At the selection input of each selector arrives the signal SEL-S which selects at output the numerical flows from, or directed to, the active copy of the switching network SN64 of FIG. 1. Said selected flows are also indicated for convenience by 2MSN.IN, 2MSN.OUT and CK/SYNC. The timing signals CK/SYNC comprise 8 MHz clock signals CK, from which are taken 2 MHz signals, and related 8 kHz signals SYNC which designate the frame start of the numerical flows 2MSN.IN and 2MSN.OUT.

The circuit SN64.INT also comprises:

- a synchronism generator to whose inputs arrive the timings CK/SYNC and, by bus 12, the output configurations of the MPCC.INT registers belonging to the second group. Said generator generates at its outputs the following signals: synchronism signals for extraction of the time slots from the 2 Mbit/s flows, and dually for the related insertion; synchronism signals for generation and verification of parity on the parity flows; and the plurality of 16/64 kbit/s clock signals indicated by LAPD.CK;

- a time slot extraction circuit generating at output the pluralities of numerical flows LAPD.LK.IN to whose inputs arrive the flows 2MSN.IN, the timings CK/SYNC and the signals output from the synchronism generator;

- a time slot insertion circuit generating at output the flows 2MSN.OUT to whose inputs arrive the pluralities of numerical flows LAPD.LK.OUT, the timings CK/SYNC, and all the signals output from the synchronism generator;

- a circuit which verifies the parity of the flows 2MSN.IN and generates an alarm every time it finds a parity alarm and to whose inputs arrive said flows 2MSN.IN, the respective first numerical parity flows, the timings CK/SYNC, and said synchronisms for parity verification;

- a circuit generating second numerical parity flows associated with the flows 2MSN.OUT to whose inputs arrive said flows 2MSN.OUT, the timings CK/SYNC and said synchronisms for parity generation;

- a circuit verifying the integrity of the paths of the LAPD channels comprising two groups of two-way electronic switches to which arrives, by the bus 12, a respective command (control point) from 80C186. The first group of switches serves to verify the path taken by a generic LAPD channel predominantly in the network SN64 of FIG. 1 and the interface SN64.INT. For this purpose the line carrying the channel LAPD.LK.IN preselected is switched onto that carrying the corresponding channel LAPD.LK.OUT avoiding the microprocessor 80C186; after which the network SN64 sends a known pattern on the flow 2MSN.IN and verifies correct reception of said pattern on the flow 2MSN.OUT. The second group of switches serves to verify the path taken by a generic channel LAPD predominantly within PPLD. For this purpose the line carrying the flow LAPD.LK.OUT comprising a preselected LAPD channel is switched onto that carrying the corresponding flow LAPD.LK.IN avoiding the path inside the network SN64; after which the microprocessor 80C186 sends a known pattern on the channel LAPD.LK.OUT and verifies the correct reception of the pattern on the channel LAPD.LK.IN.

The synchronism generator comprises substantially first and second counters and digital comparators. The extraction circuits and time slot insertion circuits comprise substantially shift registers with parallel loading. The parity verification and generation circuits are obtained with purposeful integrated circuits easy to find.

The synchronism generator in its operation uses said first counters for generation of the 16/64 kHz clock signals LAPD.CK. For this purpose the signals SYNC start counting the rising edges of the signals CK and the outputs of the counters corresponding to division by 32/128 are used to generate the signals LAPD.CK. The second counters are increased by the edges of the signals LAPD.CK and at each increase their output configuration is compared with the respective content of said second registers of MPCC.INT and the cases of coincidence originate the extraction/insertion synchronisms corresponding to active signals for the entire duration of the respective time slots. The parity synchronisms are pulses which mark the start of each time slot and are taken from the timings already present.

The time slot extraction circuit uses the timings CK/SYNC and the extraction synchronisms to load in first shift registers the time slots of the flows 2MSN.IN when the respective extraction synchronisms happen. Immediately after loading, the content of the shift registers is unloaded in parallel in second shift registers to whose clock inputs arrive the pluralities of signals LAPD.CK. The serial signals emerging from said registers are the pluralities of numerical flows LAPD.LK.IN. The insertion circuit for time slots belonging to the flows LAPD.LK.OUT in the numerical flows 2MSN.OUT operates in a perfectly dual manner.

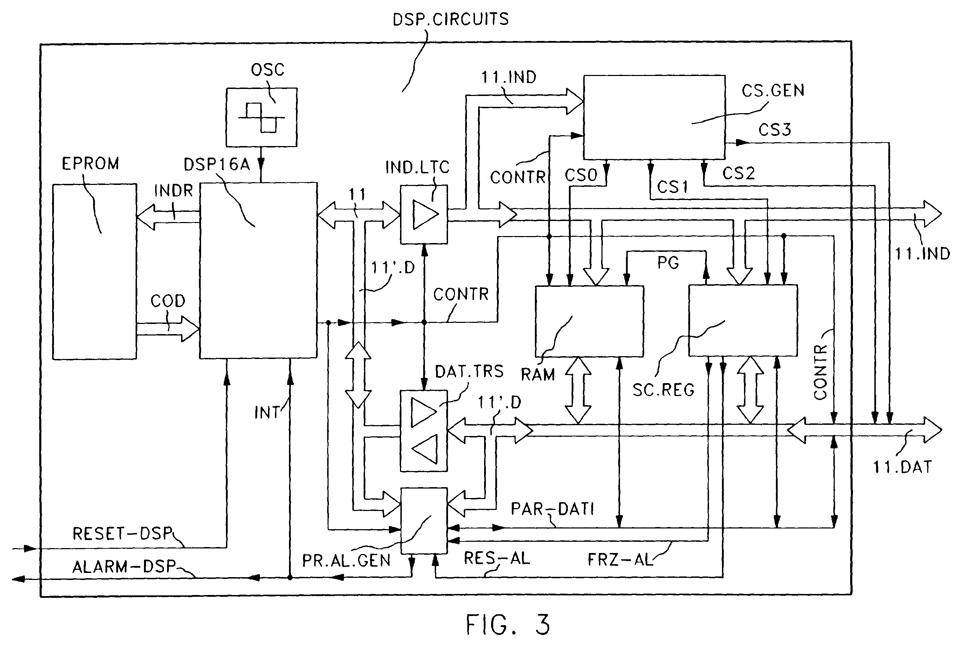

With reference to FIG. 3, in which the same elements as in FIG. 2 are indicated by the same symbols, there is now illustrated in detail the second processing unit DSP.CIRCUITS of FIG. 2. In the figure, the symbol DSP16A indicates an AT&T microprocessor DSP 16A characterized in that it has a first 16-line bus 11 on which are multiplexed the addresses and data, both 16-bit, and two other busses INDR and COD on which the addresses and data are available separately. The microprocessor generates control signals CONTR for governing the read and write operations, performed through the bus 11, to external devices. For this purpose said bus is connected to latches IND.LTC and transceiver DAT.TRS to which arrive the control signals CONTR for demultiplexing of the addresses in an address bus 11.IND and of the data in a data bus 11'.D.

An oscillator OSC, also belonging to the DSP.CIRCUITS unit, sends to the microprocessor DSP16A a 40MHz clock signal to time its operation. To the busses INDR and COD is connected an EPROM indicated by the symbol EPROM in which is memorized the program (firmware) performed by the microprocessor DSP16A. The configuration of the address bits present on the bus 11.IND is decoded by a logic circuit to which arrive also the signals CONTR and which generates four enablement signals (chip select) CS0, CS1, CS2 and CS3 directed to a static RAM indicated by the symbol RAM, to a direction and control point register SC.REG and, through the bus 11.DAT, to the memory DUAL.PORT.0 of FIG. 2 and its semaphores respectively. The busses 11.IND and 11'.D and the signals CONTR of the microprocessor DSP16A arrive at the RAM, the register SC.REG, and a parity generation and verification circuit indicated by PR.AL.GEN.

Said circuit, at each write operation performed by DSP16A, generates parity bits on as many lines associated with the bus 11'.D and, during each read operation, verifies the parity on the data read from the bus 11'.D. It is noted that the bus 11.DAT corresponds to the bus 11'.D with the addition of lines for the signals CONTR and for the enablement signals CS2 and CS3. In case of parity error there is generated the alarm signal ALARM-DSP sent to the unit 80C186.CIRCUITS of FIG. 2 and to the microprocessor DSP16A as an interrupt signal INT.

As regards the size of the memory indicated by RAM, it should be premised that said memory is used to store the information deriving from transmission measurements contained in messages for 100 different signalling channels which can be active simultaneously and each having available 1024 words for its own needs. Since the addressing capacity of the DSP16A is 64 kwords while the overall RAM space necessary for the job for which the microprocessor is assigned exceeds said capacity, the solution adopted was to use a memory having 128 kwords of 16-bit divided in two separately accessible 64 kword pages. Access is completed in two consecutive bus cycles, of which the first is used to write a control point PG in the register SC.REG for the choice of the memory page 0 or 1 to which it accedes during the second cycle. The DSP16A avoids performing the first access cycle, writing of the control point PG, if it is not necessary to change page. In each of the two RAM pages the area actually used to memorize the data which concern the channels is of only 56 kwords while the remaining area is unused.

The addressing space included in the 56 kwords used for the RAM and the 64 kwords actually addressable by the DSP16A is used by the latter to accede to the register SC.REG, to the DUAL.PORT.0 and to the related semaphores regardless of the value of the control point PG and in a single bus cycle.

Another 128 kbytes divided in two 64-kbyte pages are available for memorizing the parity bits associated with the bus 11'.D.

The microprocessor DSP16A writes in the register SC.REG three control points of which one is the above control point PG; the other two originate two respective signals FRZ-AL and RES-AL sent to the circuit PR.AL.GEN to verify correct operation thereof. The signal FRZ-AL forces generation of the signal ALARM-DSP while RES-AL zeroes it. The active signal ALARM-DSP originates in the register SC.REG a sense point bit read when needed from DSP16A.

The AT&T microprocessor DSP 16A is specialized in the performance of arithmetic operations and therefore lends itself well to carrying out the functions which will be seen better below. As was said above, it communicates with the processing unit 80C186.CIRCUITS of FIG. 2 through the memory DUAL.PORT.0 to which it accedes by means of the busses 11.IND and 11.DAT. On a separate way the unit 80C186.CIRCUITS sends to the DSP16A the reset signal RESET-DSP when it serves.

There is now explained the operation of the telephone signalling processor represented by the block PPLD, first considering operation of the microprocessor 80C186 which processes the protocol LAPD and makes the microprocessor DSP16A able to perform the higher level processing. Subsequently operation of the latter is explained.

It is useful to recall that the purpose of the protocol LAPD, which operates on level 2 messages, is to convey information between level 3 entities through a user/network interface of the A-bis type or equivalent (ISDN). The structure with multiple hierarchical levels allows division of the signalling protocol functions in a succession of independent levels in which each level makes use of the communication services made available by the lower level and offers its own to the higher level. The level 2 messages comprise generally a numbering field, a head field and a tail field, an informative content, an address, and control fields. The level 2 messages, termed also 'frames', are optionally preceded and followed by filling frames free of informative content. The structure of the frames is defined by CCITT Recommendation Q 921.

The microprocessor 80C186 first analyses the various fields of the level 2 messages which reach it on the channels LAPD.LK.IN and obtains information on the basis of which it carries out the level 2 functions (described in ETS Recommendation 300 595) which concern management of the connection between BTS and BSC to ensure regular flowing of the planned flow of level 3 messages between the BTS and the telephone processor TDPC or directly between MS and TDPC. Said level 3 messages are mainly those of the protocols denominated RR', RR* and BTSM (BTS Management) described in ETS Recommendation 300 596 in which BTSM allows dialog between BSC and BTS; RR' and RR* constitute the radio protocol RR which manages the functions of Power Control, Frequency Hopping, Configuration of the channels on the radio frame, Ciphering, and Handover; specifically, RR' allows dialog between MS and BTS; and RR* allows dialog between MS and BSC, passing transparently through BTS.

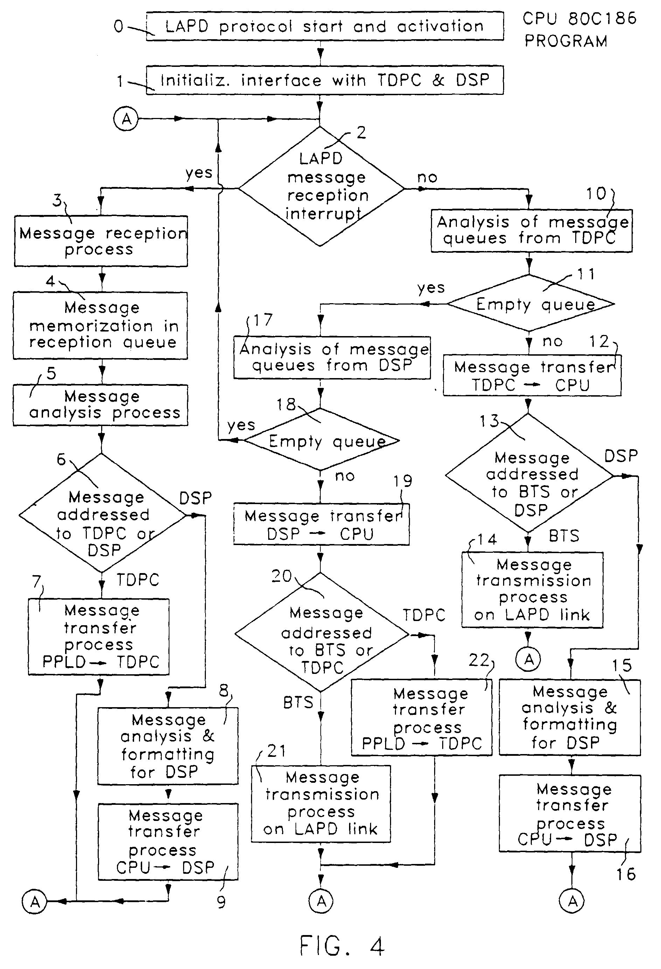

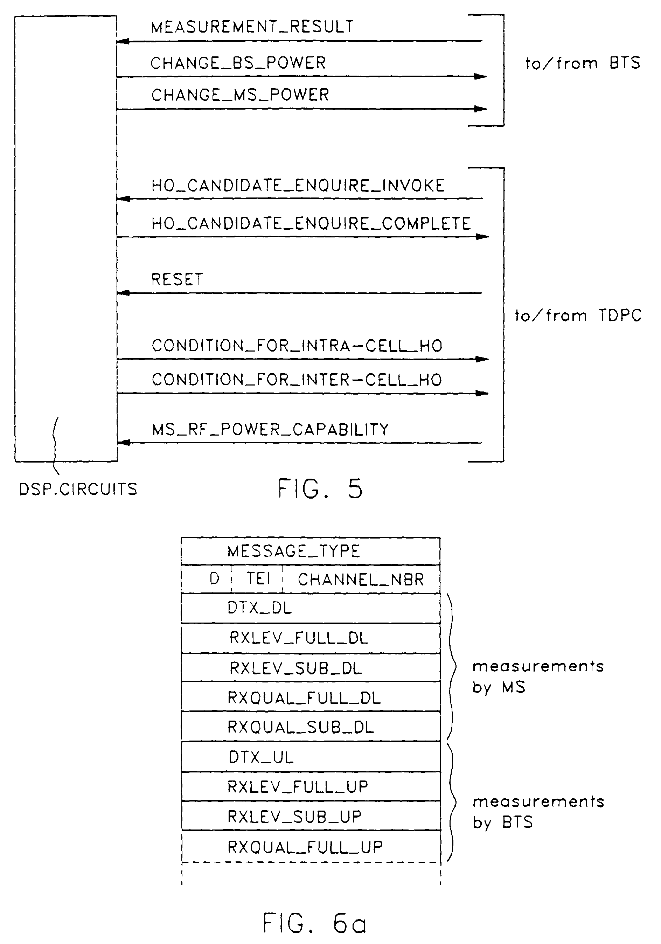

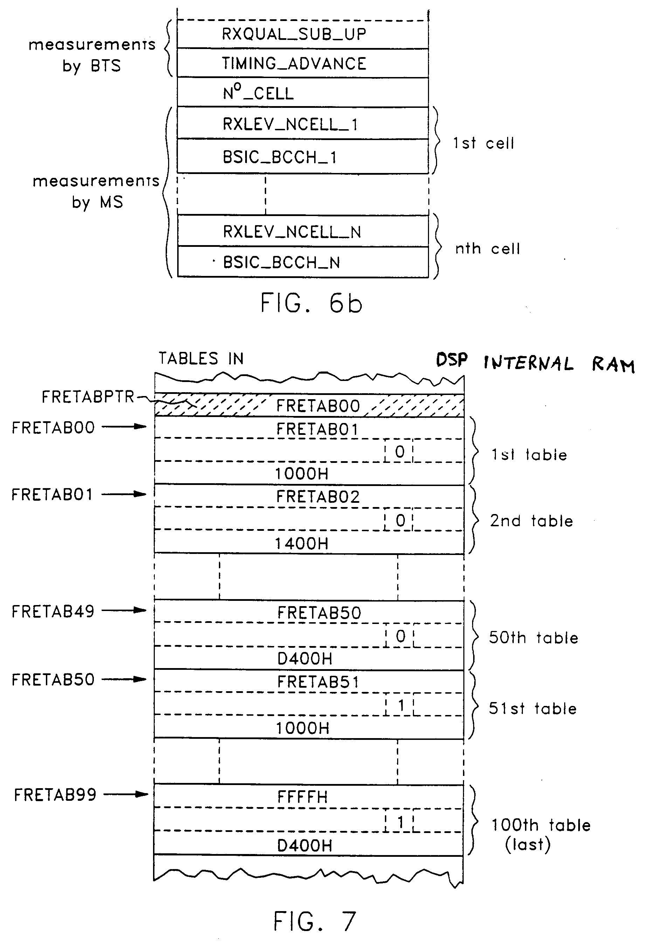

In the flow chart of FIG. 4 detailed indications on the different types of message are not given. FIGS. 5, 6a and 6b examine in greater detail the subset of messages belonging to the unit DSP16A. In addition, said chart does not show any exchange of messages between PPLD and the administrative processor MPCC. This does not mean that an exchange does not occur. In reality, between MPCC and PPLD information is exchanged mainly on the hardware and software configuration of PPLD, the operations to be undertaken for maintenance of the board, and the values of some E&M parameters used in the application programs. Said information does not fall within the type of messages as they are understood from the signalling viewpoint and therefore the figure does not show any message concerning it.

The flow chart of FIG. 4, in which the elements common to FIGS. 1, 2 and 3 are indicated by the same symbols, comprises the following phases:

- a start phase 0 in which the microprocessor 80C186, referred to hereinafter as CPU, performs a microprogram to prepare appropriately the status of the various registers and devices used, after which it activates the protocol LAPD by sending on the flows LAPD.LK.OUT frames containing special activation messages addressed to each TRX of every BTS respectively and then waits to receive on the flows LAPD.LK.IN corresponding frames backward comprising the correct answer messages from each TRX. When this has occurred the protocols LAPD are activated for all the TRX of the BTS leading to the BSC. Said protocols remain activated for an indefinite time, at least until the network is reconfigured and in this case the protocols are deactivated by an equivalent procedure. After the activation phase the program enters phase 1 in which the CPU prepares memory areas, termed hereinafter buffers, in which to store the message queues to be sent to the BTS, to the telephone processor TDPC, to the administrative processor MPCC and to the microprocessor DSP16A, termed hereinafter DSP, respectively. Buffers of equivalent size are reserved for storage of the queues of message from BTS, DSP, TDPC and MPCC. Said buffers are physically located in the working memory of the CPU and in DUAL.PORT.0 and DUAL.PORT.1. The messages are inserted in the respective queues in the order in time in which they were acquired or generated and are taken in decreasing priority order which assigns the highest priority to the oldest message in the queue. With every buffer is associated a semaphore whose purpose is to discipline write and read access, and an indicator of the buffer fill status.

- the CPU then enters phase 2 in which it checks if it has received a reception interrupt from one of the serial communication devices HSCX corresponding to the sending of a valid LAPD message by a TRX of a BTS and, if has this occurred, phase 3 is performed but otherwise there is a jump to phase 10 which will be discussed below;

- in phase 3 are performed the level 2 operations which concern the message reception process and specifically the level 2 frames are memorized by checking the head and tail fields and the CRC (Cyclic Redundancy Control) field which indicates the integrity of the message received. There is also checked the order of arrival of the various frames and, if it does not correspond to a correct sequence, the latter is restored. In case of lacking messages there is requested a retransmission. In case of corrupt bits the CPU attempts to correct the errors. After completion of this phase, if all has gone well, the program goes into phase 4 in which the message is memorized in the buffer of the messages coming from the BTS;

- the program then enters phase 5 in which is analyzed the address field of the message to establish to whom said message is addressed. For this purpose, in the following phase 6 there is performed a test to establish whether the addressee of the message from the BTS is the telephone processor TDPC or DSP. If the addressee is TDPC the message is memorized in the buffer of messages to be sent to TDPC, but if the addressee is DSP the message is memorized in the buffer of messages to be sent to DSP;

- in the following phase 7 the CPU performs a process of transfer to TDPC of the above message. The process starts with cyclic interrogation by the CPU of a semaphore of the DUAL.PORT.1 until it is free and in this case the CPU engages it and writes the message in the DUAL.PORT.1, after which it releases the semaphore. At this point with an equivalent procedure the processor TDPC can read the message transferred to it. After performing phase 7 the program jumps to a point A preceding phase 2 in which the CPU waits for a reception interrupt of a new LAPD message.

- The program reaches phase 8 if in the preceding phase 6 the addressee of the message from the BTS is DSP. In this case the CPU takes the message from the buffer of messages to be sent to DSP and completes a reformatting thereof consisting of selecting the informative content and some control fields, taking a message for DSP;

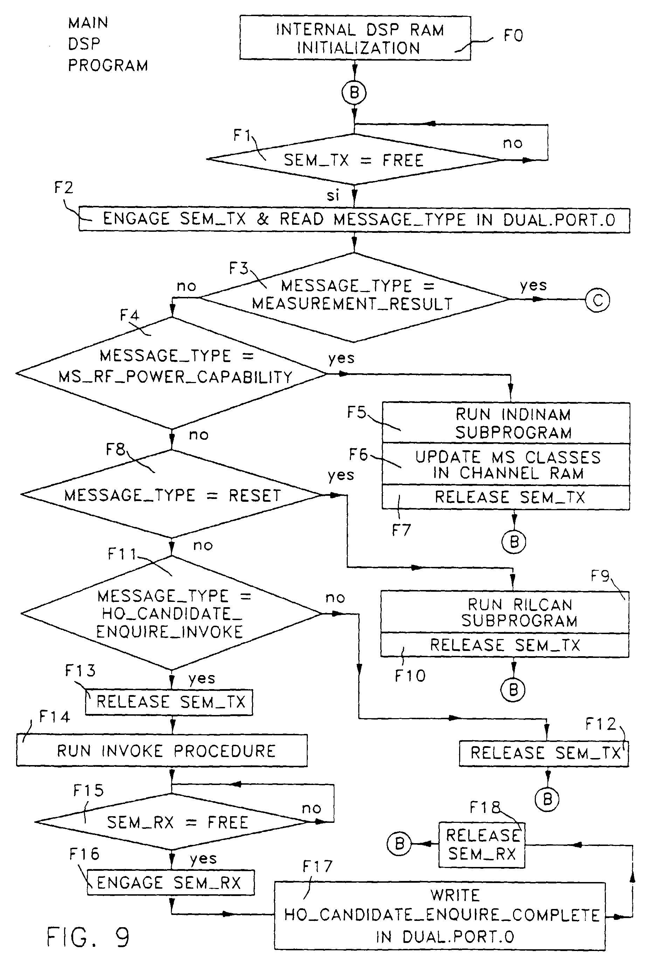

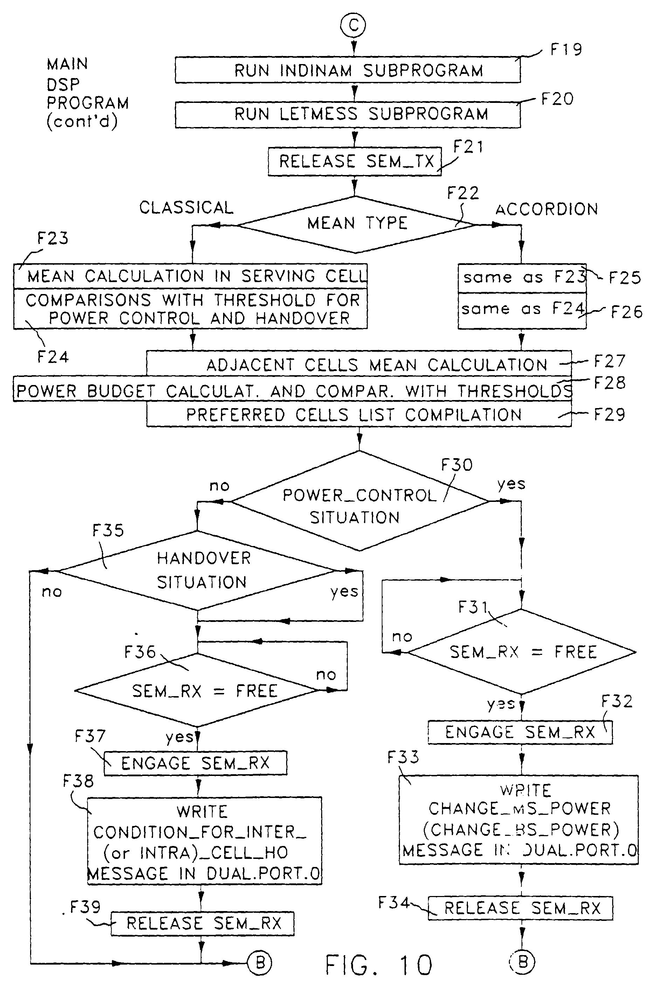

- in the following phase 9 the CPU performs a process of message transfer to DSP. The process begins with the cyclic interrogation by CPU of the semaphore which regulates access to the buffer of DUAL.PORT.0 in which are memorized the messages to be sent to DSP. Hereinafter, when discussing FIGS. 9 and 10, said semaphore will be indicated by SEM_TX. When the semaphore is free the CPU engages it to prevent any read access by DSP and writes the message in the buffer, after which it releases the semaphore and the program jumps to point A.

- The program reaches phase 10 if in phase 2 there occurred no reception interrupts of LAPD messages. All the phases described subsequently are for the activity normally carried out by the CPU during the time between the interrupts received in phase 2. This activity consists principally of acquisition of messages by TDPC and DSP and in the transfer thereof to the respective addressees. In phase 10 the CPU interrogates cyclically a semaphore of the DUAL.PORT.1 until it is free and in this case the CPU engages it and reads in DUAL.PORT.1 the logic value of the fill status indicator of the buffer of the messages coming from TDPC. This last operation corresponds to the test of the next phase 11 performed to verify whether in said buffer there is no message;

- if the condition of phase 11 is not verified it means that one or more messages are present in the buffer. In this case the CPU keeps the semaphore engaged and performs phase 12 in which it reads the first message of the queue present in DUAL.PORT.1 after which it releases the semaphore;

- in the following phase 13 the CPU performs a test on the address field of the message just read to establish if it is addressed to BTS or to DSP. If the addressee is BTS the message is memorized in the buffer of messages to be sent to BTS and otherwise is memorized in the buffer of the messages to be sent to DSP. After which the CPU performs phase 14, at the end of which the program jumps to point A.

- In phase 14 the CPU performs a process of sending the message to the TRX addressee. The process starts with writing of a control point in a serial communication device register HSCX which generates the flow LAPD.LK.OUT to said TRX. Upon reception of the control point there follows the sending by HSCX of a transmission interrupt to the CPU, which transfers the message from the buffer in which it is found to a transmission buffer in HSCX and the process is thus completed.

- The program reaches phase 15 if in the preceding phase 13 the addressee of the message coming from TDPC is DSP. In this case there are performed phases 15 and 16 which are the same as phases 8 and 9, after which the program jumps to point A.

- The program reaches phase 17 if in the preceding phase 11 the queue of messages sent from TDPC to CPU is empty. In phases 17 and 18 the CPU verifies the presence of messages in the queue of messages from DSP; as may be imagined, phases 17 and 18 are like phases 10 and 11 but apply to DSP and DUAL.PORT.0. If from the test of the phase 18 the queue of messages from DSP is empty, the program jumps to point A but otherwise phase 19 is performed;

- in phase 19 the CPU performs a process of message reception from DSP. The process begins with cyclic interrogation by the CPU of the semaphore which regulates access to the buffer of DUAL.PORT.0 reserved for messages received from DSP. In the comments on FIGS. 9 and 10 below said semaphore is indicated by SEM_RX. When the semaphore is free the CPU engages it to prevent any write accesses by DSP and reads the first message of the list of messages present in the buffer, after which it releases the semaphore;

- in the following phase 20 the CPU performs a test on the address field of the message just read to establish if it is addressed to BTS or to TDPC. If the addressee is BTS the message is memorized in the buffer of messages to be sent to BTS but otherwise it is memorized in the buffer of the messages to be sent to TDPC. After which the CPU performs phase 21 which is the same as phase 14. At the end of phase 21 the program jumps to point A.

- The program reaches phase 22 if in the preceding phase 20 the addressee of the message from DSP is TDPC. In this case the CPU performs phase 22 which is the same as phase 7 and then the program jumps to point A.

FIG. 5 shows some messages indicated in FIG. 4 by the generic term 'message' and specifically those regarding DSP. The figure shows two groups of messages indicated by the names assigned them by GSM Recommendation 01.04. A first group comprises the following messages: MEASUREMENT_RESULT, CHANGE_BS_POWER and CHANGE_MS_POWER of which the first comes from BTS while the other two are directed to BTS. A second group comprises the following messages:

HO_CANDIDATE_ENQUIRE_INVOKE,
HO_CANDIDATE_ENQUIRE_COMPLETE,
CONDITION_FOR_INTRA_CELL_HO,
CONDITION_FOR_INTER_CELL_HO, RESET
and MS_RF_POWER_CAPABILITY, of which the first, third and sixth messages come from TDPC while the second, fourth and fifth are directed to TDPC. With further reference to FIG. 4 the message
MEASUREMENT_RESULT is the one transferred in phase 9. The messages CHANGE_BS_POWER and CHANGE_MS_POWER are those transferred in phase 21. The messages HO_CANDIDATE_ENQUIRE_INVOKE, RESET and
MS_RF_POWER_CAPABILITY are those transferred in phase 16. And lastly the messages HO_CANDIDATE_ENQUIRE_COMPLETE, CONDITION_FOR_INTRA_CELL_HO and CONDITION_FOR_INTER_CELL_HO are those transferred in phase 22. It will be seen shortly that, in reality, some of the messages directed to BTS and TDPC continue to MS and MSC respectively, just as some messages from BTS and TDPC are originated by MS and MSC.

The messages of FIG. 5 are explained below in the order in which they appear in the figures: MEASUREMENT_RESULT comprises the values of the transmission measurements performed by MS and BTS in the course of the calls, as per ETS Recommendation 300 578 including Annex A. The content of this message is the subject of a large part of the processing performed by the DSP and a more detailed representation of this is therefore given in FIGS. 6a and 6b.

CHANGE_BS_POWER is a command given to a TRX of a BTS to change in the indicated manner the transmission power for a certain channel indicated as per ETS Recommendations 300 596 and 300 578.
CHANGE_MS_POWER is a command given to an MS to change in the indicated manner the power of its transmitter as per ETS Recommendations 300 557 and 300 578.
HO_CANDIDATE_ENQUIRE_INVOKE comprises indication of a list of cells in which for each cell of the list and for a subset of mobiles associated with the cell the DSP must start the homonymous Handover procedure to transfer said mobiles to other cells, as set forth in ETS Recommendations 300 590. This message is sent by MSC which requires a Handover for traffic reasons.
HO_CANDIDATE_ENQUIRE_COMPLETE is a message sent to MSC to close the procedure started by the preceding message. RESET releases the resources made available to a channel which is closed due to end of communication.
CONDITION_FOR_INTRA_CELL_HO comprises a command which TDPC must send to an MS and to the BTS of the serving cell so that an Intracell Handover will be carried out as per ETS Recommendations 300 578 and 300 590.
CONDITION_FOR_INTER_CELL_HO comprises a command which TDPC or optionally MSC must send respectively to an MS, to the BTS of the presently serving cell, and to a BTS of an adjacent cell which will become the new serving cell so that an Intercell Handover will be carried out as per ETS Recommendations 300 578 and 300 590. The message contains a list of preferred cells.
MS-RF-POWER-CAPABILITY comprises an indication of the mobile power class, i.e. of the upper power limit which can be reached by the MS transmitter.

With reference to FIGS. 6a and 6b a table sets forth the main fields contained in the message MEASUREMENT_RESULT called by the names assigned to them by ETR 100 Recommendation. Said message respects the cadence of the mainframe SACCH which has a period of approximately 480 ms, which corresponds to the time of 104 base frames. When the function 'Discontinuous Transmission' is active, some fields of the message comprise a suffix _SUB, because the measurements are averaged on a subset of 12 frames out of 104 and in the opposite case comprise a suffix _FULL. Said fields also comprise a suffix _DL, which stands for downlink, if the measurements are completed by MS; but they comprise a suffix _UP, which stands for uplink if the measurements are completed by BTS.

The meaning of the various fields is as follows:

MESSAGE_TYPE: level 3 control field which indicates the type of message among those of FIG. 5 to which the fields relate; in the case in question the message is obviously that of MEASUREMENT_RESULT;

D|TEI|CHANNEL_NBR: level 2 fields in which field D identifies the number of the flow LAPD.LK.IN which carries the message to DSP; the field TEI identifies the TRX, within BTS, from which comes the signalling channel transferred onto the flow D, which is equivalent to defining the transmission and reception carrier pair; the subfield CHANNEL_NBR identifies the time slot number assigned to the mobile for use with time division of said carrier pair, i.e. it identifies the voice channel TCH and the channel SACCH involved with the message.

The following fields are all level 3 and constitute the information content of the message:

DTX_DL and DTX_UL: indicate whether the carrier of a channel TCH has been actually transmitted in the previous frame. As concerns the channels SDCH, in particular SACCH, the transmission procedure DTX is not used;

RXLEV_FULL_DL, RXLEV_SUB_DL, RXLEV_FULL_UP, RXLEV_SUB_UP: indicate the level of the channel TCH in use, respecting the FULL/SUB and DL/UP procedures;

RXQUAL_FULL_DL, RXQUAL_SUB_DL, RXQUAL_FULL_UP, RXQUAL_SUB_UP: indicate the quality of the channel in use expressed by the value of the related BER (bit error rate), respecting the FULL/SUB and DL/UP procedures;

TIMING_ADVANCE: indicates the value of the homonymous parameter for the channel in use;

No_CELL: indicates the total number of adjacent cells present in the MEASUREMENT_RESULT message; it is a number which can vary from 0 to 6.

RXLEV_NCELL_1: indicates the level of the carrier BCCH of an adjacent cell located in the first position in a list of 6 cells whose carriers BCCH are sensed by the mobile with a stronger level. In reality the mobile can measure the level of 32 adjacent cells, however each MEASUREMENT_RESULT message, because of length problems, only comprises 6 of them which can thus vary from one message to the next.

BSIC_BCCH_1: contains the cell code number and the frequency value of the carrier BCCH of the first cell of said list compiled by the mobile;

RXLEV_NCELL_N: indicates the level of the carrier BCCH of the Nth cell of said list;

BSIC_BCCH_N: contains the cell code number and the frequency value of the carrier BCCH of the nth cell of said list.

All of the above fields are read by DSP in DUAL.PORT.0 and written dynamically in the external RAM of the DSP using for this purpose pointers, memorized in said external RAM, which refer to respective addressing tables contained in the internal RAM of the DSP.

With reference to FIG. 7 there can be seen the image of a part of the internal memory of the DSP just after termination of the initialization phase. As can be seen, it comprises a sequential list of 100 addressing tables three words long each and concatenated by means of pointers FRETAB00, ... FRETAB99 which indicate the address of the first word of the respective table to which they point. Each table is associated with a respective channel whose transmission measurement values must be processed; it contains an indication on the position of the external RAM of the DSP where there is temporarily allocated an area of 1024 consecutive words reserved for the fields of the message being processed. The meaning of the three consecutive words of which is made up each table is the following: in the first word is memorized the starting address of the following table concatenated in the list and it is therefore one of said pointers; the second word consists of a single significant bit whose value zero or one means that the memory area reserved for the channel is located on page zero or one of the external RAM of the DSP; the third word is the starting address of the respective external memory area temporarily assigned to the channel. The hexadecimal value of said address is between 1000 and D400 in both pages of the external RAM. At the head of the table list is allocated a pointer FRETABPTR which indicates the address of the first free table in the list.

In FIG. 7 the pointer FRETABPTR coincides with the starting address FRETAB00 of the first table of the list because initially the tables are obviously all free, and the pointer contained in each table refers back to the address table immediately increasing. The pointer belonging to the last table, memorized at the address FRETAB99, possesses a hexadecimal value FFFF, which does not correspond to another concatenated table but will later be interpreted as the fact that in the external RAM there are no more areas available for the channels.

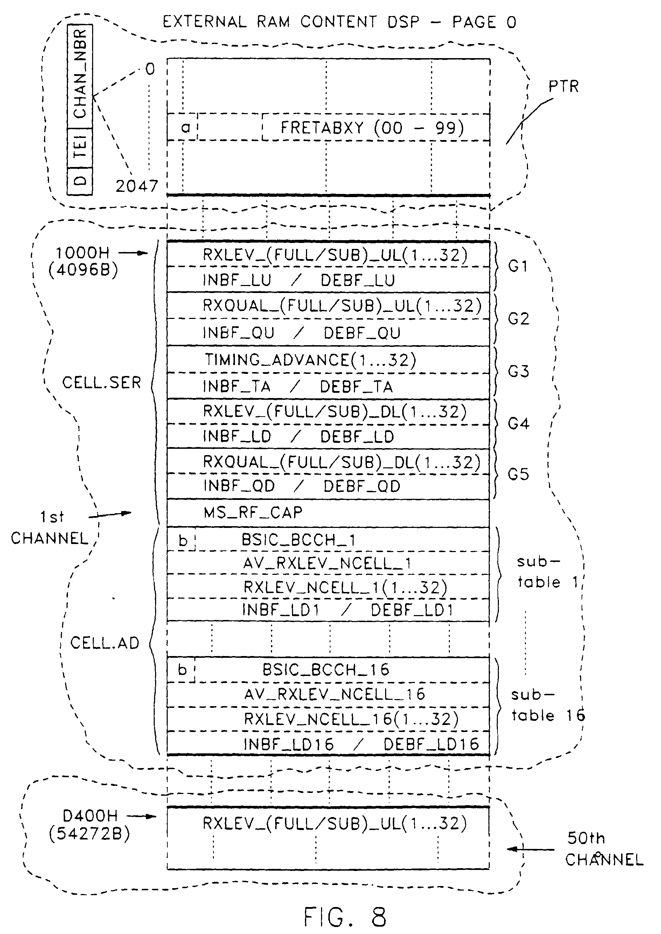

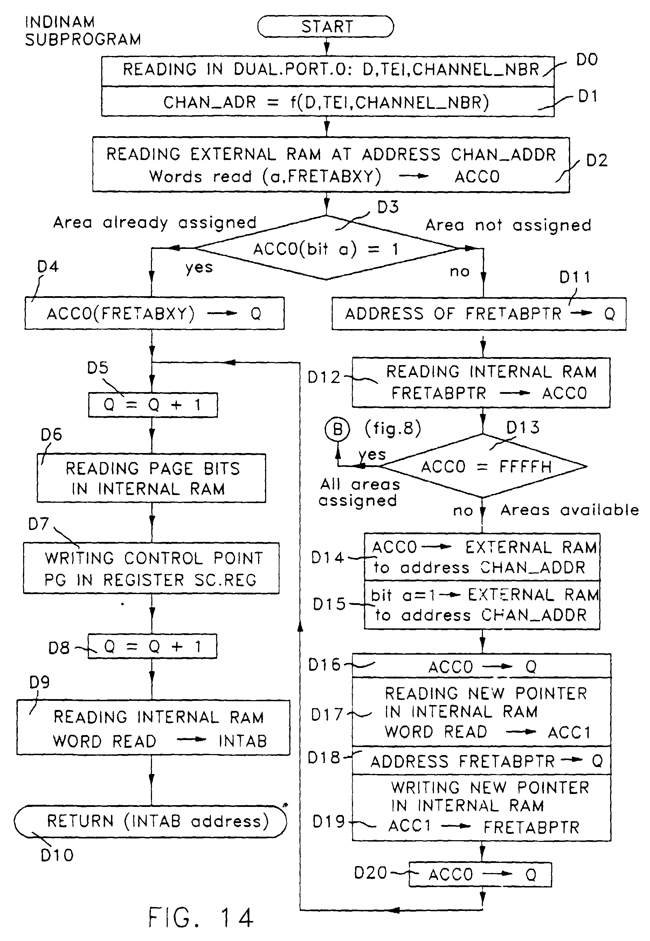

With reference to FIG. 8 in which the same elements of FIGS. 6a, 6b and 7 are indicated by the same symbols there is visible an image of page 0 of the external RAM to which accedes the DSP. In the memory page the areas assigned to the channels have been allocated in conformity with the contents of the address tables of FIG. 7. The initial part of the memory starting from the address 0 up to the address 2047 is an area PTR of 2048 words reserved for memorization of the pointers of the 100 address tables of FIG. 7 with a mechanism which will be clarified when FIG. 14 is discussed. Initially the area PTR is empty. Then, by the acquisition of the messages to be processed by the DSP, it is filled up to a maximum of 100 words distributed randomly in the available area. The addresses of the words of the PTR area are obtained by decoding of the 11 bits of the fields D, TEI and CHAN_NBR of the messages which reach the DSP. The bit 15 of a generic word, indicated by a, is written with value 1 every time an external RAM area is assigned to the corresponding channel and restored to value 0 when the area in question is freed. The remaining bits of the word indicate any pointer FRETAB00, ... FRETAB99, generically denominated FRETABXY.

The fields D, TEI and CHAN_NBR allow unequivocal identification, for purposes of processing the transmission measurements, of any channel among all those theoretically possible within a cluster of cells governed by a BSC. As was mentioned above, for the GSM system the maximum number is 1984 half-rate channels. But in practice the maximum number of channels actually usable is smaller because a larger number of full-rate channels is planned and because not all transceivers are initially fitted out within the BTS. Even thus, the maximum number of usable channels exceeds that of the respective 100 memory areas planned for them. But the fact does not cause inconveniences since the capacity of the DSP to process 100 channels simultaneously should be sufficient to ensure service even in peak traffic periods. Indeed, the value 100 was obtained by utilizing calculation methods typical of telephone traffic theory starting from a situation reflecting that of a cluster of cells with known traffic characteristics. If with the passage of time there should occur a remarkable increase of mobile radio telephone traffic within the preselected cluster it is sufficient to fit out additional PPLD boards (FIG. 1) in the controller BSC.

In FIG. 8 there can also be seen the actual arrangement of the fields of FIGS. 6a and 6b in a memory area assigned to a first channel starting from the address 1000H supplied by the first table (FRETAB00) of FIG. 7. By analogy, the same arrangement applies even for all the remaining 49 areas of page 0 and for the 50 areas of page 1.

Inside the area assigned to the 1st channel there can be seen two subareas indicated by CELL.SER and CELL.AD, for the serving cell and the adjacent cells respectively. The subarea CELL.SER comprises five groups of words indicated by G1, G2, G3, G4 and G5 respectively; the groups follow each other in the order given. Immediately after the group G5 is allocated a single word MS_RF_CAP also belonging to the area CELL.SER, coming from the message MS_RF_POWER_CAPABILITY. The groups from G1 to G5 comprise respective sequences of 32 words of memory reserved for the memorization of as many sequential values of some fields of the MEASUREMENT_RESULT message which will be listed shortly. In this manner there are available in memory for each of the fields to be processed the values for the last 16 seconds (32 x 480ms) of operation.

The above said sequences are treated by the software in such a manner as to simulate, as concerns the processing phases, as many shift registers which expel the oldest value upon each acquisition of a new value. To comply with the operating procedures mentioned above, the groups from G1 to G5 comprise 33rd and 34th words used as modulus 32 counters to address the words within the respective sequences as will be clarified below.

The meaning of the various groups is as follows:

- group G1 memorizes the value of the field RXLEV_FULL_UP or alternatively of the field RXLEV_SUB_UP, the 33rd word is indicated by INBF_LU and the 34th word by DEBF_LU;
- group G2 memorizes the values of the field RXQUAL_FULL_UP, or alternatively of the field RXQUAL_SUB_UP, the 33rd word is indicated by INBF_QU and the 34th word by DEBF_QU;
- group G3 memorizes the values of the field TIMING_ADVANCE, the 33rd word is indicated by INBF_TA and the 34th word by DEBF_TA;
- group G4 memorizes the values of the field RXLEV_FULL_DL, or alternatively of the field RXLEV_SUB_DL, the 33rd word is indicated by INBF_LD and the 34th word by DEBF_LD;
- group G5 memorizes the values of the field RXQUAL_FULL_DL, or alternatively of the field RXQUAL_SUB_DL, the 33rd word is indicated by INBF_QD and the 34th word by DEBF_QD.

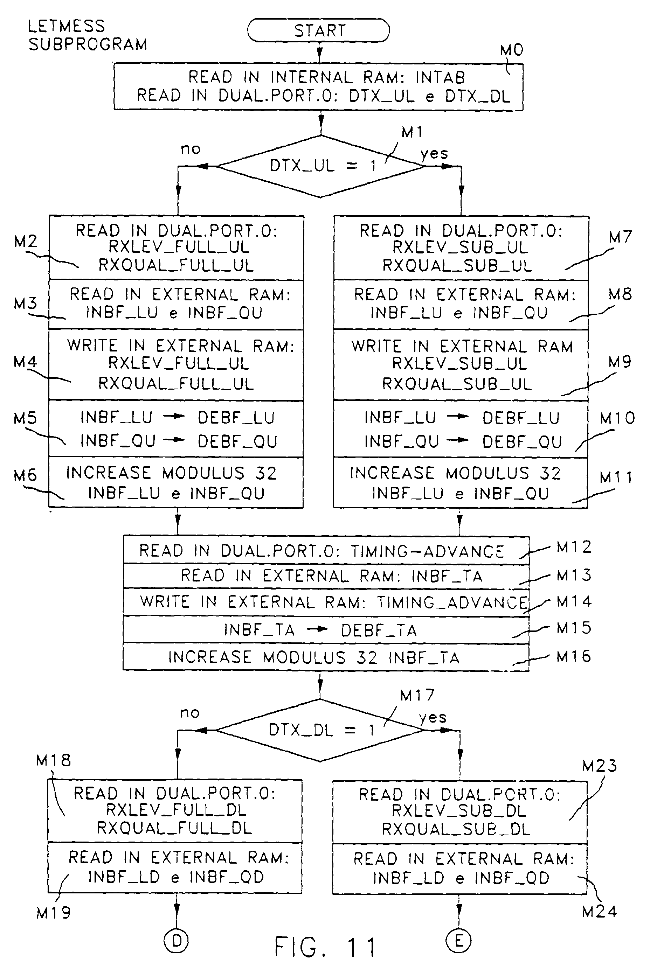

Subarea CELL.AD comprises a space for sixteen subtables for as many cells adjacent to the serving cell. Each subtable is made up of 36 consecutive words of which the first contains the field BSIC_BCCH_(n), by n $1 \leq n \leq 16$; the second word is a mean value AV_RXLEV_NCELL_(n) calculated as will be seen in a short while. The words from 3 to 34 correspond to 32 values of the field RXLEV_NCELL_(n); and lastly the 35th and 36th words indicated by INBF_LD(n) and DEBF_LD(n) respectively are used as modulus 32 counters like those of groups G1 to G5. As regards the relationship between the index N of the fields BSIC_BCCH_(N), RXLEV_NCELL_(N) read in the MEASUREMENT_RESULT message and the index n of said fields when they are written in the corresponding nth subtable, there will be given adequate explanations with the discussion of FIGS. 11 and 12. The 15th bits of the words BSIC_BCCH_(n) are indicated by b, written with value 1 when the corresponding subtables are occupied, and written with value 0 when said subtables are free.

The information contained in the memory words of FIG. 8 are those coming from MEASUREMENT_RESULT messages but they are also used inside the INVOKE procedure for the pair of messages

> HO_CANDIDATE_ENQUIRE_INVOKE,
> HO_CANDIDATE_ENQUIRE_COMPLETE.

With reference to the flow chart of FIGS. 9 and 10 there is now discussed the main program governing the operation of the DSP. The program comprises the following phases:

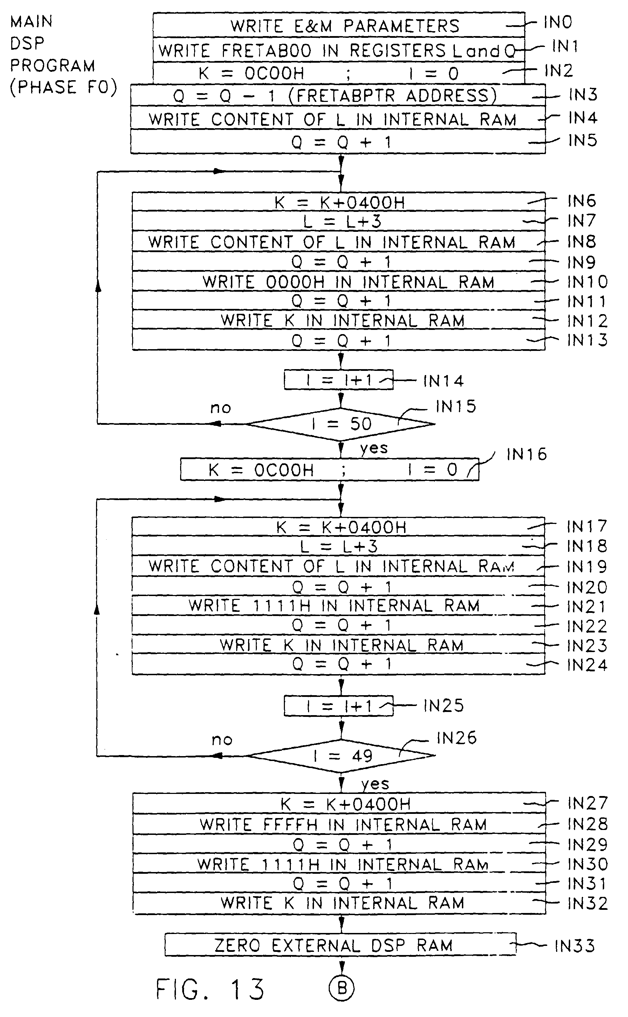

- an initial phase F0 in which the DSP writes in its internal RAM the table configuration of FIG. 7 and zeroes the external RAM. The details of the operations completed in this phase will be given with the discussion of FIG. 13. In this phase there are also written in the internal RAM all the E&M parameters necessary for the subsequent processing.
- The program then goes into phase F1 in which the DSP completes a cyclic interrogation of the semaphore SEM_TX of the DUAL.PORT.0 until it finds it free. During occupation of the semaphore SEM_TX the CPU is writing a message in the buffer of the messages to be sent to DSP allocated in the DUAL.PRT.0;
- as soon as SEM_TX is free the program enters phase F2 in which the DSP engages the semaphore SEM_TX and reads from the above said buffer the field MESSAGE_TYPE of the highest priority message;
- in phase F3 is performed a test on MESSAGE_TYPE to verify whether the related message is a MEASUREMENT_RESULT message; if it is, the program jumps to phase F19 for treatment thereof, otherwise it goes into phase F4 in which is repeated the test on the field MESSAGE_TYPE to verify whether the message in question is the MS_RF_POWER_CAPABILITY type;
- if it is, the program goes in to phase F5 in which is called and performed a subprogram INDINAM which finds dynamically the memory area associated with the channel.
- In the following phase F6 is updated the value of the field MS_RF_CAP which indicates the power class of the mobile, i.e. the maximum power deliverable by the transmitter. After which, in phase F7, is released the semaphore SEM_TX to allow the CPU to write other messages in the buffer of messages to be sent to DSP. Next the program jumps to a point B between phases F0 and F1 for repetition of the new message acquisition cycle;
- if in phase F4 the answer is 'no' the program jumps to phase F8 in which is repeated the MESSAGE_TYPE test to verify whether the message in question is the RESET type;
- if it is, the program goes into phase F9 in which is called and performed a subprogram RILCAN for freeing of the external RAM memory area associated with the channel. In the following phase F10 is released the semaphore SEM_TX and the program jumps to point B;
- if in phase F8 the answer is 'no' the program jumps to phase F11 in which is repeated the MESSAGE_TYPE test to verify whether the message in question is of the HO_CANDIDATE_ENQUIRE_INVOKE type;
- if the answer is 'no' the program goes into phase F12 in which is released the SEM_TX semaphore, after which there is a jump to point B;
- if in phase F11 the answer is 'yes' the program jumps to phase F13 in which is released in this case too the semaphore SEM_TX;
- in the following phase F14 is performed the INVOKE procedure which is very similar to the HANDOVER procedure activated by the MEASUREMENT_RESULT message on condition of having at least one cell included in the list of preferred cells given at the end of the HANDOVER procedure coinciding with a cell of the list indicated in the HO_CANDIDATE_ENQUIRE_INVOKE message. Since the HANDOVER procedure will be discussed in detail below, for the sake of brevity further details on the INVOKE procedure are not supplied.
- In the following phase F15 the DSP completes an interrogation cycle of the semaphore SEM_RX of the DUAL.PORT.0 until it finds it free. During occupation of the semaphore SEM_RX the CPU is reading a message in the buffer of the messages received from DSP allocated in the DUAL.PORT.0;
- as soon as SEM_RX is free the program enters phase F16 in which the DSP engages the semaphore SEM_RX and, in phase F17, writes in said buffer the HO_CANDIDATE_ENQUIRE_COMPLETE message.
- In the following phase F18 is released the semaphore SEM_RX after which there is a jump to point B.
  Now having exhausted the considerations on the main messages which reach the DSP, the discussion left in suspense in phase F3 when the MESSAGE_TYPE field indicated a MEASUREMENT_RESULT message is resumed. In this case the program called for a jump to phase F19.
- In phase F19 is performed the subprogram INDINAM, similarly to what took place in phase F15;
- in the following phase F20 is called and performed a subprogram LETMESS which updates the sequences of 32 values of FIG. 8 reserved for the present channel. The new field values are written in predetermined positions within the external RAM area reserved for the channel whose starting address is given by the subprogram INDINAM as will be seen better from the discussion of FIGS. 11, 12 and 14. After which, in phase F21, is released the semaphore SEM_TX and the program goes into phase F22 in which the processing executed on the memorized sequences in starting.

- In phase F22 is interrogated a field E&M denominated WAVT_FL to establish which type of mean was preselected as a first step of the subsequent processing. As regards only the fields which are influenced by the Discontinuous Transmission, i.e. RXLEV and RXQUAL, two different types of weighted mean are possible: 'classical' weighted mean and 'accordion type' weighted mean; for all the other fields of FIG. 8 is applied a normal arithmetical mean. The means are calculated with a cadence which respects that of reading of the messages from the DUAL.PORT.0. Calculation of the means is done allowing for respective pairs of E&M parameters denominated Hreqave and Hreqt. The first parameter indicates the number of consecutive samples which enter into the mean; the second indicates the number of subsets, of Hreqave samples each, on which a mean is made. Logically there must be respected the condition Hreqave x Hreqt $\leq$ 32. The purpose is to generate a representation for points of the behaviour in time of the averaged magnitude, an operation termed 'trend analysis'.

- If in phase F22 the choice falls on the classical weighted mean, the program goes into phase F23 in which for each subset Hreqt, in a generic sequence, the following expression is calculated.

$$\frac{P1 \sum_{i}^{m} c_i + P2 \sum_{j}^{n} c_j}{m p_1 + (n - m)p_2}; \quad (1)$$

in which: $c_i$ is a generic sample SUB; $p_1 = 1$ is the weight of the generic sample SUB; $c_j$ is a generic sample FULL; $p_2$ is the weight of the generic sample FULL; n = Hreqave; m is the number of the SUB samples on the n taken into consideration in the formula (1). As the samples FULL are more reliable than the SUB samples, they enter into the mean with greater weight, thus $p_2 > p_1$. The expression (1) is calculated for each new message for all the subsets Hreqt, which must then present to the calculation values updated with the same cadence as (1). In effect this takes place, in view of what was said about shifting of the words inside the respective sequences. Calculation of (1) is suspended for a time Hreqave x 480ms upon reception of the first MEASUREMENT_RESULT message so that the mean can actually be calculated on Hreqave values. The mean for the subsets Hreqt will gradually go to steady condition within 16 seconds.

- In phase F24 the means calculated in the preceding phase are compared with a first group of thresholds for the Power Control and then with a second group of thresholds for the Handover, and in both cases the threshold values are available as E&M parameters. The comparison is the multiple type and makes use for the purpose of numbers pairs Px, Nx associated with the thresholds, and these also available as E&M parameters. A generic threshold X is considered crossed over when on Nx comparisons at least Px are positive, since the prevailing condition is Nx > Px. As regards the Power Control, for each averaged magnitude there are two thresholds, one lower and one upper. The compared means are those for the magnitudes RXLEV_(FULL/SUB)_UL, RXQUAL_(FULL/SUB)_UL, RXLEV_(FULL/SUB)_DL and RXQUAL_(FULL/SUB)_DL. The magnitudes with suffix _DL supply indications for checking the power transmitted by BTS; those with suffix _UL supply indications for checking the power transmitted by an MS.

As regards the Handover, for every magnitude averaged there is a single comparison threshold. The means compared are all those for the magnitudes taken into consideration for the Power Control plus those for the TIMING_ADVANCE appropriately converted to a distance value DIST according to a known formula.

- Returning to the test of phase F22, if in this phase the choice falls on the weighted mean of the 'accordion type', the program goes into phase F25 in which is calculated an expression which differs from (1) in that the sum of the weights is constant and equal to Hreqave, while the number of samples taken into consideration for the mean varies consequently. This type of mean is preferable in some typical situations since it is faster to calculate. The description of the following phase F26 is like that of phase F24.

- Both phases F24 and F26 converge in phase F27 in which are calculated the 'unweighted' arithmetical means on each of the n sequences RXLEV_NCELL_(n) relative to the adjacent cells, using in the aforesaid manner the parameters Hreqave and Hreqt. For every sequence the mean corresponding to that of the most recent subset (Hreqave) is indicated in FIG. 8 by AV_RXLEV_NCELL_(n). During calculation there may occur the situation in which from a certain moment forward the messages no longer contain the fields of a certain sequence RXLEV_NCELL_(x), which means that the related adjacent cell is no longer perceived by the mobile as one of the 6 strongest. In this case calculation of the mean continues taking on null value for the missing fields until the mean cancels itself and the respective sequence becomes available again for another adjacent cell after zeroing of the bit b of the word BSIC_BCCH_(n).

- The program continues with phase F28 in which the AV_RXLEV_NCELL_(n) means are used for calculating as many merit parameters termed 'Power Budget', each for one of its own adjacent cells, which indicate the quality of the radio connection between the mobile and the BTS of the adjacent cell. In ETS Recommendation 300 578, version 4.12.0, Annex A, is given a mathematical function PBGT(n,x1,x2,x3) which allows calculation of the Power Budget for a generic adjacent cell (n). The variables x1,x2,x3 consist of E&M constant magnitudes and of variable magnitudes of RX_LEV_FULL_DL mean type of the serving cell, and AV_RXLEV_NCELL_(n) of the adjacent cell n to which the calculation refers. Specifically, the variable x1 represents the difference in dB between the maximum transmission power in the serving cell and in the nth adjacent cell. The variable x2 represents the difference between the path losses in the two above cells. The variable x3 represents the difference between the maximum powers usable by a mobile in the two cells.

   The Power Budgets appraisable for each new message acquired are 6 which, in view of the above, do not necessarily relate to the same adjacent cells, as they can vary from one message to the next. Herefrom arises the need to consider a larger number of adjacent cells, considered for convenience equal to 16. Still in phase F28, the Power Budgets PBGT(n) are compared with respective thresholds given as E&M parameters, taking values termed HO_MARGIN(n), which will be used for the Handover decisions.

- In the following phase F29 is compiled a list comprising a maximum of 16 preferred cells with which the mobile could make a Handover. ETS Recommendation 300 578, Annex A, indicates an inequality of the type AV_RXLEV_NCELL(n) > K, as a preliminary condition for admitting an adjacent cell n to the list; K represents the sum of constant magnitudes given as E&M parameters. In compiling the list allowance is also made for the outcomes of the comparisons made in phases F24, or F26, and F28. Another criterion is verification of the coincidence between the 16 cells examined and those assigned by E&M as preferable. The cells appear in all the lists respecting in decreasing order of the values of HO_MARGIN(n).

- In the following phase F30 are examined the results of the comparisons of phase F24, or F26, to decide on the Power Control. The conditions examined are the following:

   1) the means remain inside the respective thresholds; in this case no action is taken and the program goes into phase F35 where there will be examined improbable Handover conditions;

   2) the mean for RXLEV_FULL/SUB)_UL is less than the respective lower threshold, or the mean for RXQUAL_(FULL/SUB)_UL exceeds the respective upper threshold; in this case there is prepared a CHANGE_BS_POWER message to increase the power transmitted by BTS with a step defined by a special E&M parameter;

   3) the mean for RXLEV_(FUL/SUB)_UL is greater than the respective upper threshold, or the mean for RXQUAL_(FULL/SUB)_UL is less than the respective lower threshold; in this case there is prepared a CHANGE_BS_POWER message to decrease the power transmitted by BTS with a step defined by a special E&M parameter;

   4) the mean for RXLEV_(FULL/SUB)_DL is less than the respective lower threshold, or the mean for RXQUAL_DL exceeds the respective upper threshold; in this case there is prepared a CHANGE_MS_POWER message to increase the power transmitted by the mobile with a step defined by a special E&M parameter;

   5) the mean for RXLEV_(FULL/SUB)_DL is greater than the respective upper threshold, or the mean for RXQUAL_DL is less than the respective lower threshold; in this case there is prepared a CHANGE_MS_POWER message to decrease the power transmitted by the mobile with a step defined by a special E&M parameter. Any other conditions, which give rise to decision conflicts, are treated with priority for the decisions which derive only from the RXLEV_(FULL/SUB)_UL or RXLEV_(FULL/SUB)_DL magnitudes.

If the power increases or decreases have piloted the transmitters at the maximum power deliverable, or alternatively at the minimum allowed, it means that all the possibilities of the Power Control are exhausted. In this case, if any of the conditions from 2) to 5) persist, the program jumps to phase F35 but otherwise continues with phase 31.

- In phase F35 are examined the results of the comparisons of phases F24 or F26, and F28 to decide on the Handover. The conditions examined are the following:

   1) the mean for RXLEV_(FULL/SUB)_UL or RXLEV_(FULL/SUB)_DL is less than the E&M threshold indicating the minimum allowed level;

2) the mean for RXQUAL_(FULL/SUB)_UL or RXQUAL_(FULL/SUB)_DL is greater than the E&M threshold indicating the maximum allowed BER level;

3) the mean for the magnitude DIST is greater than the E&M threshold indicating the maximum allowed distance;

4) the thresholds for RXLEV_(FULL/SUB)_UL (or RXLEV_(FULL/SUB)_DL) and RXQUAL_(FULL/SUB)_UL (or RXQUAL_(FULL/SUB)_DL) are simultaneously exceeded, i.e. the mobile or the BTS work with high power level and poor quality;

5) for Nx consecutive times the following inequalities are simultaneously true or simultaneously false: PBGT(n) > 0; PBGT(n) > HO_MARGIN(n).

Condition 4 gives rise to the preparation of a CONDITION_FOR_INTRA_CELL_H0 message. Conditions 1, 2, 3 and 5 give rise instead to the preparation of a CONDITION_FOR_INTER_CELL_H0 message; of these only condition 5 causes a Handover for 'BETTER CELL' and has lower priority. If none of the conditions from 1 to 5 occurs the program jumps directly to point B but otherwise continues with interrogation phases F36 and F37 and engagement of the semaphore SEM_RX, like phases F15 and F16 already described.

- In the following phase F38 is written in DUAL.PORT.0 a Handover message which, on the basis of the conditions occurring in phase F35, can be either the CONDITION_FOR_INTER_CELL_H0 message, comprising also the list of preferred cells compiled in phase F29, or that of CONDITION_FOR_INTRA_CELL_H0. After which in phase F39 the semaphore SEM_RX is released and the program jumps to point B.

- Taking up again the test performed in phase F30, if there are verified any of the Power Control conditions, the program performs phases F31 and F32 in which it interrogates the semaphore SEM_RX and engages it, similarly to what was seen for phase F15 and F16.

- In the following phase F33 there is written in DUAL.PORT.0 a Power Control message which, on the basis of the conditions verified in phase F30, can be either the CHANCE_MS_POWER message or the CHANGE_BS_POWER message. After which in phase F34 the semaphore SEM_RX is released and the program jumps to point B.

FIGS. 11 and 12 illustrate the subprogram LETMESS used for writing the MEASUREMENT_RESULT message fields in external RAM respecting the image of FIG. 8. It is recalled that immediately before LETMESS there was performed the subprogram INDINAM which supplied the control point PG for choice of the external RAM page where there is allocated the 1024-word area reserved for the message to be processed and the address INTAB which indicates the beginning of said area in the memory page. The subprogram LETMESS comprises the following phases:

- a first phase M0 in which the DSP reads in DUAL.PORT.0 the fields DTX_UL and DTX_DL of the MEASUREMENT_RESULT message, and in internal RAM the INTAB address;
- the following phase M1 is a test of the value of DTX_UL; if the value is 0 it means that, as regards the present message, there has been no Discontinuous Transmission in the uplink direction and the program continues with phase M2 but otherwise jumps to phase M7;
- in phase M2 the DSP reads in DUAL.PORT.0 the present value of the two fields RXLEV_FULL_UP and RXQUAL_FULL_UP, then continues with phase M3;
- in phase M3 the DSP reads in external RAM the words INBF_LU and INBF_QU which it will use in the following phase M4 to address the writing of the two fields just read in the respective sequences RXLEV_FULL_UP(1...32) and RXQUAL_FULL_UP(1...32).
- In phase M4 the values of the fields RXLEV_FULL_UP and RXQUAL_FULL_UP are written in external RAM in the respective sequences. As regards the value RXLEV_FULL_UP, the write address is obtained by adding with INTAB a first fixed offset value by INTAB corresponding to the difference between the starting address of the subarea reserved for the homonymous sequence and the INTAB address itself, and to the two preceding terms is also added the present value of the word INBF_LU. Perfectly dual addressing procedures apply for the value RXQUAL_FULL_UP, also in this case to INTAB is added a second fixed offset value whose meaning is like that of the first offset value, and to the two preceding terms is added the present value of the word INBF_QU; - in the following phase M5 the values of INBF_LU and INBF_QU are written in the words DEBF_LU and DEBF_QU respectively; the latter will be used in phases F23 or F25 of the main program of the DSP to address reading of the terms of the RXLEV_FULL_UP(1...32) and RXQUAL_FULL_UP(1...32) sequences to calculate the means thereof. In this circumstance the read addresses are calculated in a manner similar to those of writing, substituting DEBF_LU and DEBF_QU for the words INBF_LU and INBF_QU;
- in the following phase M6 the words INBF_LU and INBF_QU are increased by one modulus 32, so that at the next writing in the respective sequences the oldest value will be covered by the last. The covering process takes place continuously thanks to the increment modulus 32, in accordance with which the words INBF_LU and INBF_QU are zeroed when the value written is the 32nd or a multiple thereof; in this case the write addresses return to the start of their respective sequences.

The instructions of the above phases justify what was said concerning the fact that, thanks to the words pairs used as modulus 32 counters associated with the 32-word sequences of FIG. 8, each sequence simulates a shift register. As regards the sequences considered thus far, the above said pairs of counters are represented by the word pairs INBF_LU, DEBF_LU and INBF_QU, DEBF_QU. The counters DEBF_LU and DEBF_QU count back from the value set in phase M5. Upon zeroing, the hexadecimal value 1F (decimal 31) is again set, and the back count continues until all 32 terms have been read and processed. Since in phase M6 the term from which back counting starts is shifted one position forward at each writing of a new term, the back reading of the sequence is equivalent to a shift of one position of all the terms of the sequence with expulsion of the oldest value and acquisition of the latest, as takes place in a shift register.

- Returning to the phase M1 test, if the answer reveals the presence of Discontinuous Transmission the program jumps to phase M7; the discussion of the following phases M7 to M11 is like that of the phases M2 to M6, but for the fields RXLEV_SUB_UL and RXQUAL_SUB_UL.

- Both phases M6 and M11 carry the program into phase M12; the discussion of the following phases M12 to M16 is like that of phases M2 to M6, but for the TIMING_ADVANCE field with whose sequence are associated the words INBF_TA and DEBF_TA as modulus 32 counters.

- The following phase M17 is a test of the value of DTX_DL; if the value is 0 it means that, as regards the present message, there was no Discontinuous Transmission in the downlink direction and the program continues with phase M18 but otherwise jumps to phase M23.

- The discussion of the following phases M18 to M22 is like that of phases M2 to M6 but for the fields RXLEV_FULL_DL and RXQUAL_FULL_DL with whose sequences are associated the words INBF_LD and INBF_QD respectively used as modulus 32 counters;

- if there is a jump to phase M23, the discussion of the following phases M23 to M27 is exactly like that of phases M18 to M22 but for fields RXLEV_SUB_DL and RXQUAL_SUB_DL.

- Both the phases M22 and M27 carry the program into phase M28 in which is read in DUAL.PORT.0 the value of a pair of fields RXLEV_NCELL_(N), BSIC_BCCH_(N) and the value of the field No_CELL, then the program goes into phase M29 in which is zeroed an index $\underline{n}$ used in the following phases;

- in the following phase M30 is completed a test on the bit $\underline{b}$ of the first word of the nth subtable and if bit b = 0 it means that the subtable is free and the program continues with phase M31 in which in the first word of the subtable in question is written the value of the field BSIC_BCCH_(N) giving value 1 to the related bit $\underline{b}$;

- the discussion of the following phases M32 to M35 is exactly like that of phases M19 to M22 but for fields RXLEV_NCELL_(n) with whose sequences are associated the words INBF_LD(n) and DEBF_LD(n) used as modulus 32 counters;

- the following phase M36 is a test of the value of N to establish if it coincides with that of the field No_CELL, whose value can vary from 0 to 6. If the answer is 'yes' it means that all the fields which are for the adjacent cells in the present MEASUREMENT_RESULT message were acquired and written in external RAM, and in this case the subprogram terminates with an instruction to return to the main program of the DSP. If the answer is 'no' there is a jump to phase M28 in which is read in DUAL.PORT.0 a new pair of fields RXLEV_NCELL_(N), BSIC_BCCH_(N) of the same message.

- Returning to the phase M30, if bit b = 1 it means that the nth subtable is occupied and in this case the program jumps to phase M37 in which the field BSIC_BCCH_(N) just read is compared with that contained in the first word of the nth subtable. If there is no coincidence between the two values, the program continues with phase M38 in which it increases the index n by one unit;

- the following phase M39 is a test of the index $\underline{n}$ to verify whether it has reached the value 16 corresponding to the maximum number of memorisable subtables. If n ≠ 16 there is a jump to phase M30 for repetition of the cycle consisting of phases M30, M37, M38 and M39 with increase of the index $\underline{n}$ at each comparison iteration.

- If the response to the M37 phase test is 'yes' it means that there is coincidence between BSIC_BCCH_(N) of the present message and the BSIC_BCCH_(n) written in the nth subtable during acquisition of the preceding messages. In other terms, the nth subtable is the one reserved for the adjacent cell of index N. In this case the program jumps to phase M32 and performs phases M32 to M35 for writing of RXLEV_NCELL_(N) in the related RXLEV_NCELL_(n) sequence. The program enters then in phase M36 and continues in the manner described above.

- Returning to the phase M39 test, if n = 16 it means that the BSIC_BCCH_(N) of the present message does not coincide with any of the BSIC_BCCH_(n) written in the 16 subtables during the preceding messages; in this case the program jumps directly to phase M36 ignoring the adjacent tell (N) and continues in the manner described above.

With reference to FIG. 13 there is now discussed a flow chart explaining in detail the processing performed in the individual phase F0 (FIG. 9) of the main DSP program. One of the purposes of said processing is to write in the internal RAM of the DSP the list of pointer tables of FIG. 7. It is also necessary to specify that the phase F0 is performed only upon starting the equipment and after each of hardware or software reinitialization of the DSP, and in particular after reception of the signal RESET-DSP.

The processing pertaining to this phase is described in the figures from the entirety of all the phases indicated by IN0 to IN33 in which:

- in phase IN0 are written in internal RAM all the E&M parameters necessary for the entirety of the processing performed by the DSP;
- in phase IN1 is written the value FRETAB00 in two registers of the DSP indicated by L and Q. As mentioned above, FRETAB00 represents the starting address in internal RAM of the list of tables of FIG. 7. The register Q is a register used by the DSP to generate the address for read and write access to its own internal RAM; specifically, the content of the register Q is said address;
- in phase IN2 an index I is zeroed and another address K set at hexadecimal value 0C00. The index I is used for counting the number of tables in the list; the function of the index K will be clarified below;
- in phase IN3 register Q is decreased by one unit to be able to address the word FRETABPTR which represents a pointer to the starting address of the first free table in the list which, in the case of FIG. 7, is that pointed to by FRETAB00;
- in phase IN4 the content of register L, i.e. FRETAB00, is written in internal RAM at the FRETAPTR address; after which in phase IN5 register Q is increased by one unit and thus again contains the FRETAB00 value.
  The following phases from IN6 to IN15 constitute a first write cycle of a first group of 50 tables which will be used for addressing as many 1024-word areas, allocated on page zero of the external RAM of the DSP to be assigned dynamically to the channels. Specifically:
- In phase IN6 with the pre-existing value of the index K is summed a hexadecimal value 0400. As can be seen from FIG. 7, with the first iteration of the write cycle the hexadecimal value reached by K is 1000;
- in phase IN7 the content of the register L is increased by 3 units and it will therefore contain the FRETAB01 value;
- in phase IN8 the content of L is written in internal RAM at the FRETAB00 address. Generalizing the remarks for phases IN6, IN7 and IN8 at all the iterations of the first write cycle, what is actually done is to write in the first word of the table being written the starting address of the following table;
- in phase IN9 the register Q is increased by one unit to address the second word of the table during the next write operation;
- in phase IN10 a word of all zeroes is written in internal RAM and there is thus placed at 0 also the bit which addresses the page 0 of the external RAM of the DSP;
- phase IN11 is like phase IN9;
- in phase IN12 the present value of the index K is written in internal RAM in the third word of the table being written. It is useful to recall that the third word of each table contains a respective external RAM address which in page 0 or 1 marks the start of a 1024-word area which will be assigned dynamically to the channels; this area is therefore constantly associated with the respective table. The increase of hexadecimal 0400 of the index K (corresponding to an increase of 1024 decimal) prepares for writing in the next table of the starting address list of the following external RAM area;
- phase IN13 is the same as phases IN9 and IN11;
- in phase IN14 index I is increased by one unit and in phase IN15 a test of index I is completed to see if the 50th table was also written in internal RAM; if not, there is a jump to the start of phase IN6 for repetition of the cycle IN6 to IN15 but otherwise the program continues with phase IN16 in which index I is zeroed and index K reinitialised at hexadecimal value 0C00.
- The following phases from IN17 to IN26 constitute a second write cycle of a second group of 50 tables, which will be used to address as many 1024-word areas placed in page 1 of the external RAM of the DSP to be assigned dynamically to the channels. The processing completed in the cycle IN17 to IN26 is like that for the cycle IN6 to IN15 to the description of which reference is made. The only differences between the two cycles consist of the fact that, as regards the cycle IN17 to IN26, in the second words of the tables all the bits are written with value 1, and hence even the bit used for addressing page 1 of the external RAM is 1; and the fact that in the phase IN26 test it is asked if index I has reached the value 49 corresponding to the 99th and penultimate table. If it has, the second write cycle also terminates and the program enters phase IN27;
- phase IN27 is like phases IN6 and IN17;
- in the following phase IN28 is written in the first word of the 100th and last table a hexadecimal value FFFF, which no longer represents a pointer to the following table but rather indicates that there are no more external RAM areas available for the channels;

- the following phases IN29 to IN32 are exactly like phases IN20 to IN23 to whose description reference is made;

- the last phase IN33 corresponds to a zeroing of the external RAM of the DSP, after which there is a jump to point B of the main program of the DSP (FIG. 9).

With reference to FIG. 14 there is now described the subprogram INDINAM whose primary purpose is to give the address of a 1024-word area of external RAM, presently free, to be assigned to the channel indicated in a MEASUREMENT_RESULT message acquired for the first time from the DSP. The processing completed in the various phases of INDINAM is as follows:

- in phase D0 are read in DUAL.PORT.0 the fields D, TEI and CHANNEL_NBR;

- in phase D1 are appropriately decoded the 11 bits of the fields just read to find an address CHAN_ADR of a word allocated in the initial 2048-word area of the external RAM of the DSP (area PTR of FIG. 8);

- in phase D2 is transcribed in a register ACCO the external RAM address word CHAN_ADR; said word is made up of two fields. i.e. the bit $\underline{a}$, and a pointer indicated by FRETABXY which represents one of the 100 possible pointers FRETAB00 to FRETAB99 of FIG. 7. These fields are initially at value zero and will be filled during operation of the system in the manner described below;

- in phase D3 is completed a test of the value of the bit $\underline{a}$, and if it is 1 it means that the area reserved for the channel had already been assigned and in this case the program continues with phase D4 in which is transcribed in the register Q the field FRETABXY contained in ACC0; the function of the register Q was clarified during the discussion of FIG. 13;

- in the following phase D5 the content of the register Q is increased by one unit to prepare the address of the second word of the present internal RAM table pointed to by FRETABXY which contains the address bit of page zero or one of external RAM;

- the program then enters phase D6 in which it reads said page bit and in phase D7 it uses it to command writing of the corresponding control point PG in the register SC.REG (FIG. 3);

- the following phase D8 is like D5 but in this case it serves to prepare the address of the third table word which contains the starting address, inside the page, of the external RAM area associated with the table;

- in the following phase D9 the third word is read in internal RAM (see last phase) and memorized in a register INTAB;

- after which in the phase D10 there is a return to the main program where is transferred the content of the register INTAB to be used by the program and by the subprogram LETMESS in the manner described above.

In view of the foregoing, it can be noted that the search in external RAM of the area assigned to the present channel does not take place from mere decoding of the MEASUREMENT_RESULT message fields which identify the channel but passes through the addressing tables of FIG. 7. It is just this passing through which allows dynamic assignment, as will be seen presently.

- Returning to the test on the bit $\underline{a}$ of phase D3 left in suspense, if the value read is zero it means that to the channel in question has not yet been assigned a 1024-word area in external RAM, and in this case the program jumps to phase D11 for the related assignment;

- in phase D11 is transcribed the address of FRETABPTR (FIG. 7) in the register Q;

- in the following phase D12 FRETABPTR is read in internal RAM and transcribed in the register ACC0, which now thus contains the starting address of the first 'free' table in the list of FIG. 7;

- the following phase D13 is a test of the value of ACC0 to establish whether it is equal to the hexadecimal value FFFF, and if it is it means that the 100 areas of external RAM have all been assigned, and in this case the program jumps to point B for reading of another message, ignoring the present message which is lost.

- But if in phase D13 the value of FRETABPTR is different from FFFF it means that there are still areas available and the program goes into phase D14 in which the content of ACC0, i.e. the FRETABPTR, is transcribed in external RAM in the address word CHAN_ADR, and specifically in the field FRETABXY thereof;

- in the following phase D15 the bit $\underline{a}$ is written to value 1 of said word to signal that an area for processing of the channel in question has been temporarily assigned, after which the program in the following phases from D16 to D19 updates in internal RAM the value of FRETABPTR, since the table of FIG. 7 which was formerly free is now engaged.

Specifically:

- in phase D16 the content of the register ACC0, i.e. the pointer FRETABPTR which pointed to the internal RAM table just engaged, is transcribed in register Q in order to address the first word of said table;

- in phase D17 the first word of said table is read and transcribed in a register ACC1, which thus contains the new pointer to the next free table in the list;

- phase D18 is like D11 and serves to prepare the FRETABPTR address;
- in phase D19 the content of ACC1 is transcribed in FRETABPTR which is thereby updated;
- the next phase D20 is like D16 and produces the same effects, the value contained in ACC0 not being changed at the same time;
- at this point the program jumps to the start of phase D5 and performs in succession phases D5 to D10 described above.

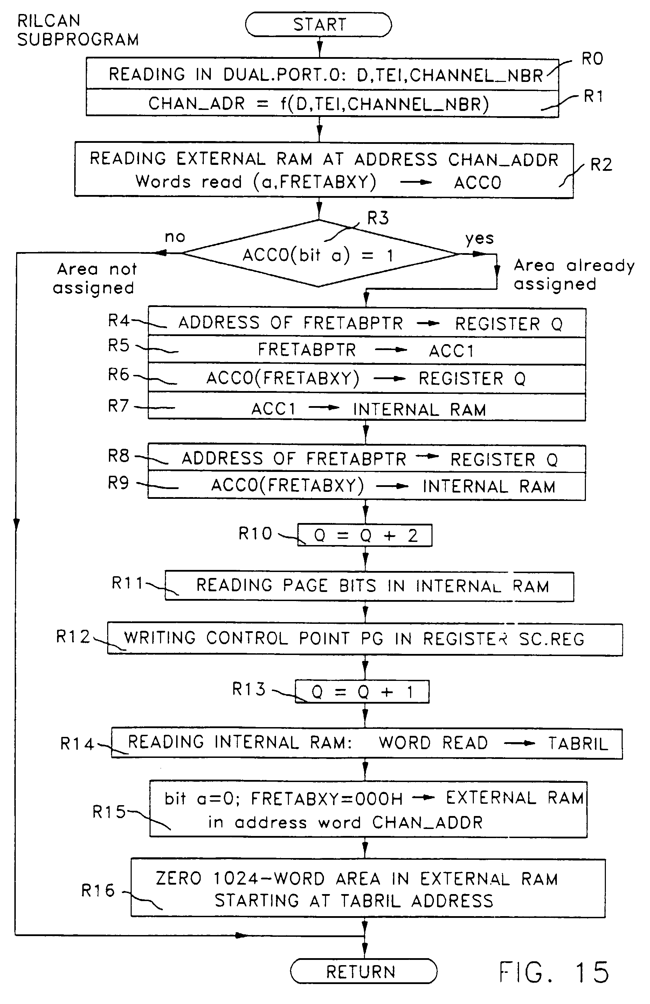

With reference to FIG. 15 there is now described the subprogram RILCAN whose purpose is to release a 1024-word area of external RAM presently occupied because there has arrived a RESET message regarding the channel which occupies this area. The processing completed in the various phases of RILCAN are as follows:

- phases R0, R1, R2 and R3 are identical with phases D0, D1, D2 and D3 respectively of the preceding subprogram INDINAM, to which reference is made for the description. In particular, in phase R2 the word read in external RAM at the CHAN_ADR address comprises certainly the bit a and the FRETABXY field because the subprogram operates on an area already assigned.
  The test on the bit a of phase R3 is completed anyway, despite the previous statement, to protect against possible errors of the system software which could erroneously address a RESET message to an unassigned memory area. In this case the subprogram immediately returns into the main program without performing any processing. In the more general case, the subprogram passes instead from phase R3 to phase R4; all the following phases up to the return instruction are performed without program jumps and therefore the sequential order of the instructions also respects the order of execution thereof.
- in the phase R4 is transcribed the FRETABPTR address (FIG. 7) in register Q; the function of this register was explained during the discussion of FIG. 13;
- in phase R5 the value of FRETABPTR is read in internal RAM and memorized in a register ACC1;
- in phase R6 is transcribed in register Q the FRETABAXY field contained in ACC0;
- in phase R7 the content of ACC1, i.e. FRETABPTR, is written in internal RAM.

What is actually done in phases R4 to R7 is transcription of FRETABPTR in the first FRETABXY address word of the table of FIG. 7 to be made newly available.

- In phase R8 the FRETABPTR address is copied again in the register Q; and
- in phase R9 the FRETABXY field is written in internal RAM.

With the processing of the two above phases the FRETABPTR is updated and now contains the FRETABXY address of the first word of said table which now becomes the first free table of the list.

Processing of the following phases R10 to R14 allows obtaining the control point PG within the external RAM page of the 1024-word area which must be freed. Said phases are identical to those indicated by D5 to D9 in the subprogram INDINAM with the only difference that the address of the 1024-word area is now indicated by TABRIL, and that in phase R10 register Q is increased by two units instead of one.

- In phase R15 the address word CHAN_ADR is zeroed in external RAM;
- In phase R16 the external RAM area addressed by TABRIL is zeroed, after which there is a return into the main program.

Thanks to the above detailed discussion of the flow charts of FIG. 4, FIGS. 9 to 15 and the memory charts of FIGS. 7 and 8 and using the information available in the operating and programing manuals of the microprocessors indicated, or equivalent, and those of the GSM specifications from time to time indicated, one skilled in the art of microprocessors can provide the governing programs of the processing units included in the processor of telephone signalling originated by transmission measurements which are the object of the present invention.

From the sum of the above considerations on the software governing the operation of the CPU and the DSP there emerges another advantage and specifically that of the opportuneness of the processor in question in suiting its operational decisions to the short-term variations of the transmission conditions. Indeed, said decisions are updated every 480ms.

**Claims**

1. Processor of telephone signalling generated by transmission measurements (PPLD) for digital mobile radio systems belonging to a control apparatus (BSC) of multiple fixed radio stations (BTS) located in respective territorial cells and comprising transceivers in connection with mobile telephone equipments (MS) to which are assigned respective communication channels subject to Handover; said control apparatus (BSC) being in communication with the fixed radio stations (BTS) by means of first numerical flows (1) and with a mobile radio system switching station (MSC) and an operation and maintenance center by means of second numerical flows (2); said first and second numerical flows consisting of bit sequences in recognizable and numbered serial frames divided in traffic and signalling channels, the signalling channels carrying telephone messages comprising control fields and "informative contents" underlying a communication protocol with multiple hierarchical levels; said control apparatus (BSC) comprising also: a processor dedicated to management of the radio resources (TDPC) on the basis of the mobility of users which is connected to said telephone signalling processor generated by transmission measurements (PPLD) and to a peripheral interface processor (PPCC) to said second numerical flows (2); and administrative processor (MPCC) which carries out functions of supervision and maintenance of the control apparatus (BSC) and of the fixed radio stations (BTS) and is connected to each of said processors; first extracting/inserting means (OTLP, SN64) which extract from said first numerical flows (1) the respective signalling channels and convey them to said processor of telephone signalling generated by transmission measurements (PPLD), and which insert in said first numerical flows (1) the signalling channels from said processor (PPLD); second extracting/inserting means (OTLP, SN64) which extract from said second numerical flows (2) the respective signalling channels and convey them to said peripheral interface processor and vice versa, characterized in that it comprises:

- a first interfacing means (SN64.INT) to said first means (SN64, OTLP) which extract/insert the signalling channels from/into said first numerical flows (1);
- a second interfacing means (DUAL.PORT.1, TDPC.INT) to said processor dedicated to the management of the radio resources (TDPC);
- a third interfacing means (MPCC.INT) to said administrative processor (MPCC) which carries out functions of supervision and maintenance of the control apparatus (BSC) and of the fixed radio stations (BTS);
- general-purpose processing means (80C186.CIRCUITS) connected to all said interfacing means for managing the lower level of signalling existing on the first numerical flows (1) to allow flow of high-level messages in both transmission directions, and for selecting among the messages those generated by transmission measurements, sending the others to corresponding address members (BTS, MS, TDPC, MSC);
- arithmetical processing means (DSP.CIRCUITS, DSP164) for processing the "informative contents" of the selected messages concerning transmission measurements, obtaining "processed messages" comprising indications for performance of said Handovers and for controlling the transmitting power of the transmitters included in said mobile telephones (MS) or in said fixed radio stations (BTS);
- first dual access memory means (DUAL.PORT.0) connected both to said general-purpose processing means (80C186.CIRCUITS) and the arithmetical processing means (DSP.CIRCUITS, DSP164);
- first buffering means belonging to said first dual access memory means (DUAL.PORT.0), for buffering a queue of said "informative contents" of the selected messages concerning transmission measurements to be sent to said arithmetical processing means;
- second buffering means belonging to said first dual access memory means (DUAL.PORT.0), for buffering a queue of said "processed messages" to be sent to said general-purpose processing means;
- internal memory means (RAM) belonging to said arithmetical processing means (DSP.CIRCUITS), for buffering said "informative contents" concerning transmission measurements into areas dynamically assigned to said signalling channels.

2. Processor of telephone signalling generated by transmission measurements in accordance with claim 1, characterized in that said first interfacing means (SN64.INT) comprise:

- demultiplexing means of the incoming signalling channels (LAPD.LK.IN) extracted from said first numerical flows (1);
- serial communication means for receiving serial messages from the demultiplexed signalling channels (LAPD.LK.IN) and transferring them in parallelized form to said general-purpose processing means (80C186.CIRCUITS), and for serializing parallel messages received from said general-purpose processing means and transferring them to outgoing signalling channels (LAPD.LK.OUT);
- multiplexing means of the outgoing signalling channels (LAPD.LK.OUT) to be insert into said first numerical flows (1).

3. Processor of telephone signalling generated by transmission measurements in accordance with claim 1, characterized in that said second interfacing means (DUAL.PORT.1, TDPC.INT) comprise:

- second dual access memory means (DUAL.PORT.1) connected between said general-purpose processing means (80C186.CIRCUITS) and said processor dedicated to the management of the radio resources (TDPC);
- third buffering means belonging to said second dual access memory means, for buffering a queue of messages to be sent to the processor dedicated to the management of the radio resources (TDPC);

- fourth buffering means belonging to said second dual access memory means, for buffering a queue of messages to be sent to the general-purpose processing means (80C186.CIRCUITS);

- programmable means for governing the read and write accesses to the third and fourth buffering means by both the processor dedicated to the management of the radio resources (TDPC) and the general-purpose processing means (80C186.CIRCUITS).

4. Method of managing the telephone signalling generated by transmission measurements, governing the operation of the processor of telephone signalling of the claim 1, characterised in that it comprises the following phases:

1) checking, continuously, the setting of a logic condition indicating the arrival of an incoming telephone message originated in a Base Station (BS) and sent through first numerical flows (1) carrying signalling channels;

2) executing the level 2 operations of a communication protocol with multiple hierarchical levels for checking out the validity of the message, and memorizing valid received messages in a receiving buffer;

3) analysing the address field of the buffered messages to establish to whom a received message is addressed;

4) transferring the buffered messages into a first dual access memory means in which there are provided respective queues of received messages (DUAL.PORT.0, DUAL.PORT.1, 80C186.CIRCUITS, MPCC.INT) to be sent to corresponding address members (DSP.CIRCUITS, TDPC, BTS, MPCC), among which members there is an arithmetical processor (DSP.CIRCUITS, DSP164) dedicated to the processing of transmission measurements;

5) transferring the "informative contents" of queued messages concerning transmission measurements from first buffering means in the first dual access memory means to an internal memory (RAM) of said arithmetical processor, dynamically assigned to the signalling channels;

6) processing said "informative contents" transferred into said internal memory (RAM), obtaining "processed messages" comprising indications for performance of Handovers and for controlling the transmitting power of the transmitters included in mobile telephones (MS) or in fixed radio stations (BS);

7) memorizing said "processed messages" into second buffering means belonging to the first dual access memory means in which there is provided a respective queue of messages (DUAL.PORT.0) to be sent to corresponding address members (80C186.CIRCUITS);

8) executing level 2 operations of said communication protocol on the queued received messages, and on the "processed messages", for assembling valid messages memorized into respective queues of transmitting messages (DUAL.PORT.1, 80C186.CIRCUITS, MPCC.INT) to be sent to corresponding address members (TDPC, BTS, MPCC).

5. Method of managing the telephone signalling generated by transmission measurements in accordance with claim 4, characterized in that said arithmetical processor (DSP.CIRCUITS, DSP164) performs a processor initialization phase (F0) of the content of said internal memory (RAM), mainly upon starting and after each reinitialization, and a following processing cycle iterated indefinitely; said initialization phase (F0) comprising the following steps:

i1) writing of some parameters (E&M) necessary for the subsequent processing in a first zone of said internal memory (RAM);

i2) writing of a list including a number of M tables in a second zone of said internal memory (RAM), said tables being utilized in said dynamic assignment of areas (CELL.SER, CELL.AD) of said internal memory (RAM) to the "informative contents" of said signalling channels; said number M beings lower than the number of said signalling channels, and being evaluated with criteria dependent upon telephone traffic existing in the territory served by the control apparatus (BSC) of the fixed radio stations (BTS);

i3) zeroing of a third zone of said internal memory (RAM) reserved for memorization of "channel words" designed to set a linked, or not linked, status of M tables to said signalling channels;

i4) zeroing of a fourth zone of said internal memory (RAM) optionally divided in two or more memory partitions reserved to said areas to be dynamically assigned to the signalling channels;

each iteration of said processing cycle performed indefinitely comprising the following processing phases performed in chronological order (MAIN):

a) reading in said respective queue of received messages (DUAL.PORT.0) of a first and second field (MESSAGE_TYPE;

D,TEI,CHANNEL_NBR) belonging to said "informative contents" of a higher-priority message, said first field (MESSAGE_TYPE) being designed to identify the message type to be processed (MEASUREMENT_RESULT, MS_RF_POWER_CAPABILITY, HO_CANDIDATE_ENQUIRE_INVOKE, RESET), said second field (D,TEI,CHANNEL_NBR) identifying a signalling channel with which is associated said message to be processed;

b) analysis of said first field (MESSAGE_TYPE) and identification of the message type;

c) possible "dynamic", assignment of one of said M memory areas (CELL_SER, CELL.AD) to a signalling channel identified by said second field (D,TEI,CHANNEL_NBR) for the duration of a communication served by said channel;

d) reading in said respective queue of received messages (DUAL.PORT.0) of remaining third fields of said "informative contents" comprising transmission measurement values, and writing of the same in said area assigned dynamically to said channel;

e) performance of said appropriate processing concerning said remaining third fields of said "informative contents" and obtaining of said "processed messages", the appropriate processing depending on the preceding message type identification;

f) writing of said "processed messages" in said respective queue of messages (DUAL.PORT.0) to be sent to corresponding address members (80C186.CIRCUITS);

g) unconditional repetition of the cycle consisting of the preceding phases a) to f) during subsequent iterations of said processing cycle, there being read and processed "informative contents" of subsequent messages memorized in priority order.

6. Method of managing the telephone signalling generated by transmission measurements in accordance with claim 5, characterized in that:

- in the fourth phase d) of the processing cycle the remaining third fields of said "informative contents" written in said area assigned to said channel are written in respective sequences of K values for each third field, with K preferable equal to 32, said sequences being allocated in adjacent memory zones and constituting a succession of sequences;

- said remaining third fields processed in the fifth phase e) of said processing cycle contain values of respective transmission measurements (RXLEV_(FULL/SUB)_UL, RXQUAL_(FULL/SUB)_UL, RXLEV_(FULL/SUB)_DL, RXQUAL_(FULL/SUB)_DL, TIMING_ADVANCE) for a "serving" cell with which a generic mobile telephone is affiliated, and transmission measurement values (RXLEV_NCELL_(n)) for a number n of adjacent cells; said appropriate processing comprising averages performed on the terms of each said sequence of K values;

- in the sixth phase f) of said processing cycle are written in said respective queue of messages (DUAL.PORT.0) to be sent to corresponding address members (80C186.CIRCUITS) first "processed messages" (CHANGE_MS_POWER, CHANGE_BS_POWER) for control of the transmission power of the fixed or mobile sets, or second, "processed messages" (CONDITION_FOR_INTERCELL_HO, CONDITION_FOR_INTRACELL_HO) comprising indications for performance of Handovers.

7. Method of managing the telephone signalling generated by transmission measurements in accordance with claim 6, characterized in that the updating of said sequences executed in said fourth phase d) of said processing-cycle includes the following steps performed in chronological order (LETMESS):

d1) reading of a said third field of said "informative contents";

d2) generation of a write address of said third field in a respective sequence of K values, the write address being calculated by adding with the start address (INTAB) of said memory area assigned to said channel, a respective offset value corresponding to the difference between a start address of said respective sequence and a start address of a first sequence of said succession of sequences, and also adding to the two preceding terms a count value reached by a K modulus forward counter located at the tail of said respective sequence and associated therewith;

d3) writing of said third field in a word of said respective sequence whose address is calculated in the preceding step d2);

d4) initialization of a K modulus back counter associated with said respective sequence with the count value currently reached by said K modulus forward counter;

d5) modulus K increase of said forward counter;

d6) checking out the existence of additional sequences to be updated and, if affirmative, repetition of the preceding steps d1) to d5) for another sequence to be updated.

8. Method of managing the telephone signalling generated by transmission measurements in accordance with claim 6, characterized in that said appropriate processing executed in the fifth phase e) includes the following processing steps performed in chronological succession:

> e1) choice of a type of average to be used in the following operations;
> e2) execution of said chosen average on each of said respective sequences of K values;
> e3) comparison of the average values obtained as set forth in the above point e2) for particularly significant sequences as concerns control of the transmission power (RXLEV_(FULL/SUB)_UL, RXQUAL_(FULL/SUB)_UL, RXLEV_(FULL/SUB)_DL, RXQUAL_(FULL/SUB)_DL) with a first group of respective thresholds having preset values, obtaining first criteria directly usable for the generation of a first "processed message" (CHANGE_MS_POWER, CHANGE_BS_POWER) comprising indication for controlling the transmission power;
> e4) evaluation of said first criteria and possible generation of said first "processed message" or execution of the remaining sequential steps e5) ... e9);
> e5) comparison of average values obtained in accordance with the above point e2) for particularly significant sequences as concerns management of the Handover operations (RXLEV_(FULL/SUB)_UL, RXQUAL_(FULL/SUB)_UL, RXLEV_(FULL/SUB)_DL, RXQUAL_(FULL/SUB)_DL, TIMING_ADVANCE, RXLEV_NCELL_(n)), with a second group of respective thresholds having preset values, obtaining second criteria usable for generation of a second "processed message";
> e6) calculation of appropriate merit parameters (POWER BUDGET) related to the quality of the radio connection between a mobile telephone and a group of adjacent cells;
> e7) comparison of said merit parameters with a respective third group of thresholds having preset values and obtaining third criteria (HO_MARGIN(n)) usable for generation of said second "processed message";
> e8) compilation of a list of preferred adjacent cells arranged in order of priority as concerns execution of Handover operation on the basis of said first, second and third criteria;
> e9) evaluation of said first, second and third criteria and generation of said second "processed message" (CONDITION_FOR_INTERCELL_HO, CONDITION_FOR_INTRACELL_HO) comprising indications for execution of a Handover, among whose indications is comprised said list of preferred adjacent cells.

9. Method of managing the telephone signalling generated by transmission measurements in accordance with claim 7, characterized in that said respective K module back counter supplies values for calculation of K address of generic terms in a respective sequence for processing thereof.

10. Method of managing the telephone signalling generated by transmission measurements in accordance with claim 5, characterized in that the initialization phase. (F0) concerning tables belonging to said list of M tables written in said second zone of the internal memory (RAM), comprises the following steps:

- assignment as many first memory words as M tables are provided, by writing in the first words a respective initial address of another table in sequential position in said list; the tables being concatenated with the respective preceding ones by means of said initial addresses having pointer functions (FRETABXY, 00...99);
- assignment as many second words as M tables are provided, the second words containing respective third fields used for addressing said two or more partitions of said fourth memory zone of said internal memory (RAM);
- assignment as many third words as M tables are provided, by writing in the third words a respective initial address (1000H....D400H) of a correspondent said memory area to be assigned dynamically to the channels inside a generic partition and, only in the case of a last Mth table of the list, an indicator (FFFFH) of the lack of further memory areas to be assigned to the channels;
- assignment of one additional pointer (FRETABPTR) at the whole list of the tables, indicating the start of a first free table of the list, being considered free a table which is not linked to any signaling channel by means of a respective said "channel word";

being said table list used in the third phase c) of said processing cycle to assign a memory area to a signalling channel identified by said second field (D, TEI, CHANNEL_NBR), or for release of said area in case said first field identifies a release message (RESET) of the signalling channel resources, the area released remaining available for subsequent reassignment to a different channel or optionally to the same one.

11. Method of managing the telephone signalling generated by transmission measurements in accordance with claim 10, characterized in that the third phase c) of said processing cycle in which said memory area is assigned "dynamically" to a signalling channel, includes the following processing steps performed in chronological succession (INDINAM):

c1) decoding of a said second field (D,TEI, CHANNEL_NBR) and generation of a read address (CHAN_ADR) of a "channel word" and reading thereof;

c2) decoding of the logic state of a fourth field (a), included in the "channel word", containing indications on the linkage or non-linkage state of said table of the list with the signalling channel identified by said second field (D,TEI, CHANNEL_NBR) and either execution of five processing steps c3)...c7) immediately sequential to the step c2) currently being performed, or of remaining sequential steps c8)...c10, in case of non-linkage or linkage respectively;

c3) reading of said additional pointer (FRETABPTR) indicating a first free table of the list and either prosecution from the beginning of said processing cycle, phase a), or execution of four processing steps c4)...c7) immediately sequential to the step c3) currently being performed, in case respectively said pointer (FRETABPTR) coincides, or not, with said indicator (FFFFH) of lack of additional memory areas to be assigned to the channels;

c4) writing of said additional pointer (FRETABPTR) in a fifth field (FRETABXY), belonging to said "channel word", and concomitant writing in said fourth field (a) of the same word, of a logical value indicating completed state of linkage to said signaling channel of said first free table of the list;

c5) reading of said first word (FRETABXY) belonging to the table addressed by said additional pointer (FRETABPTR) and replacement of said additional pointer (FRETABPTR) by said first word read (FRETABXY);

c6) reading of a said second word belonging to the table addressed by said additional pointer (FRETABPTR), decoding of said third field and selection of a partition of said fourth memory zone;

c7) reading of said third word belonging to the table addressed at the preceding step c6) and writing of the third word in a first register used to generate a start address (INTAB) of said memory area assigned to the channel in said selected partitions;

execution of the following steps, after step c2), as an alternative to steps c3) to c7):

c8) reading of a fifth field (FRETABXY) belonging to said "channel word" and use of the value read as pointer to a table of the list previously assigned to said signalling channel;

c9) reading of said second word belonging to the table assigned to the channel, decoding of said third field and selection of a respective partition of said fourth memory zone;

c10) reading of said third word belonging to the table assigned to the channel and writing of said third word in a first register used to generate a start address (INTAB) of said memory area assigned to said channel in said selected partition.

12. Method of managing the telephone signalling generated by transmission measurements in accordance with claim 11, characterized in that said third phase c) in which said memory area assigned to said channel must be released also comprises the following processing steps (RILCAN) performed in chronological succession:

r1) decoding of said second field (D,TEI, CHANNEL_NBR) for generation of an address (CHAN_ADR) of a said "channel word" and reading thereof;

r2) reading of said pointer (FRETABXY) memorized in said fifth field of the "channel word";

r3) writing of said additional pointer (FRETABPTR) indicating a first free table of the list in said first word of a said table addressed by said pointer (FRETABXY) read in said fifth field of the "channel word";

r4) replacement of said additional pointer (FRETABPTR) indicating a first free table of the list by said pointer (FRETABXY) read in said fifth field of the "channel word";

r5) reading of said second word belonging to the table addressed in the preceding step r3), decoding of said third field and selection of a respective partition of said fourth memory zone in which is allocated a said area to be released;

r6) reading of said third word belonging to the table addressed in the preceding step r3) and writing of said third word in said first register used for generating a start address (TABRIL) of said area which must be released;

r7) release of said area which must be released by zeroing it;

r8) writing in said fourth field (a) of said "channel word" of a logical value indicating the state of non-linkage of said table addressed to the preceding step r3) with said released area.

**Patentansprüche**

1. Prozessor von durch Übertragungspegelmessungen erzeugter Telefonsignalisierung (PPLD) für digitale Mobilfunksysteme, der zu einer Steuereinrichtung (BSC) von mehrfachen Festfunkstellen (BTS) gehört, die sich in entsprechenden Regionalzellen befinden, und mit Sender/Empfängern in Verbindung mit Mobilfunkgeräten (MS), denen in Abhängigkeit vom Handover entsprechende Kommunikationskanäle zugewiesen werden, wobei die Steuereinrichtung (BSC) mittels erster numerischer Flüsse (1) mit den Festfunkstellen (BTS) und mittels zweiter numerischer Flüsse (2) mit einer Mobilfunksystem-Vermittlungsstelle (MSC) und einem Betriebs- und Wartungszentrum in Kommunikation steht; wobei die ersten und zweiten numerischen Flüsse aus Bitfolgen in erkennbaren und numerierten seriellen Rahmen, die in Verkehrs- und Signalisierungskanäle aufgeteilt sind, bestehen, wobei die Signalisierungskanäle Telefonmitteilungen mit Steuerfeldern und "Informationsinhalt" führen, die einem Kommunikationsprotokoll mit mehrfachen hierarchischen Ebenen unterliegen; wobei die Steuereinrichtung (BSC) auch einen der Verwaltung der Funkmittel zugeordneten Prozessor (TDPC) auf Grundlage der Mobilität von Benutzern umfaßt, der mit dem Prozessor von durch Übertragungspegelmessungen erzeugter Telefonsignalisierung (PPLD) und einem Peripherieschnittstellenprozessor (PPCC) zu den zweiten numerischen Flüssen (2) umfaßt; und einen Verwaltungsprozessor (MPCC), der Überwachungs- und Wartungsfunktionen der Steuereinrichtung (BSC) und der Festfunkstellen (BTS) ausführt und mit jedem der Prozessoren verbunden ist; erste Ausblend/Einblendmittel (OTLP, SN64), die aus den ersten numerischen Flüssen (1) die entsprechenden Signalisierungskanäle ausblenden und sie zu dem Prozessor von durch Übertragungspegelmessungen erzeugter Telefonsignalisierung (PPLD) übermitteln und die die Signalisierungskanäle von dem Prozessor (PPLD) in erste numerische Flüsse (1) einblenden; zweite Ausblend-/Einblendmittel (OTLP, SN64), die die entsprechenden Signalisierungskanäle aus zweiten numerischen Flüssen (2) ausblenden und sie zu dem Peripherieschnittstellenprozessor übermitteln und umgekehrt, dadurch gekennzeichnet, daß er folgendes umfaßt:

   - ein erstes Schnittstellenmittel (SN64.INT) zu ersten Mitteln (SN64, OTLP), die die Signalisierungskanäle aus/in die ersten numerischen Flüsse (1) ausblenden/einblenden;

   - ein zweites Schnittstellenmittel (DUAL.PORT.1, TDPC.INT) zu dem, der Verwaltung der Funkmittel zugeordneten Prozessor (TDPC);

   - ein drittes Schnittstellenmittel (MPCC.INT) zum Verwaltungsprozessor (MPCC), der Funktionen der Überwachung und Wartung der Steuereinrichtung (BSC) und der Festfunkstelle (BTS) ausführt;

   - Universalverarbeitungsmittel (80C186.CIRCUITS), die mit allen Schnittstellenmitteln verbunden sind, um die untere Ebene der auf den ersten numerischen Flüssen (1) bestehenden Signalisierung zu verwalten, um einen Fluß von Mitteilungen auf höherer Ebene in beiden Übertragungsrichtungen zu erlauben, und um unter den Mitteilungen diejenigen auszuwählen, die durch Übertragungspegelmessungen erzeugt wurden, und die anderen zu entsprechenden Adressgliedern (BTS, MS, TDPC, MSC) zu senden;

   - Arithmetikverarbeitungsmittel (DSP. CIRCUITS, DSP164) zum Verarbeiten des "Informationsinhalts" der ausgewählten Mitteilungen bezüglich Übertragungspegelmessungen, das "verarbeitete Mitteilungen" mit Anzeigen zur Durchführung der Handover und zum Steuern der Sendeleistung der in Mobilfunkgeräten (MS) oder in Festfunkstellen (BTS) enthaltenen Sender;

   - erste Doppelzugriffs-Speichermittel (DUAL.PORT.0), die sowohl mit den Universalverarbeitungsmitteln (80C186.CIRCUITS) und den Arithmetikverarbeitungsmitteln (DSP.CIRCUITS, DSP164) verbunden sind;

   - erste Puffermittel, die zu dem ersten Doppelzugriff-Speichermittel (DUAL.PORT.0) gehören, zum Puffern einer Warteschlange des "Informationsinhalts" der ausgewählten Mitteilungen bezüglich Übertragungspegelmessungen, die zum Arithmetikverarbeitungsmittel zu senden sind;

   - zweite Puffermittel, die zum ersten Doppelzugriff-Speichermittel (DUAL.PORT.0) gehören, zum Puffern einer Warteschlange der "verarbeiteten Mitteilungen", die zum Universalverarbeitungsmittel zu senden sind;

   - interne Speichermittel (RAM), die zum Arithmetikverarbeitungsmittel (DSP.CIRCUITS) gehören, zum Puffern des "Informationsinhalts" bezüglich Übertragungspegel-messungen in den Signalisierungskanälen dynamisch zugewiesenen Bereichen.

2. Prozessor von durch Übertragungspegelmessungen erzeugter Telefonsignalisierung nach Anspruch 1, dadurch gekennzeichnet, daß die ersten Schnittstellenmittel (SN64.INT) folgendes umfassen:

- Demultiplexermittel der ankommenden Signalisierungskanäle (LAPD.LK.IN), die aus den ersten numerischen Flüssen (1) ausgeblendet werden;
- serielle Kommunikationsmittel zum Empfangen serieller Mitteilungen aus den gedemultiplexten Signalisierungskanälen (LAPD.LK.IN) und Übertragen derselben in parallelisierter Form zu den Universalverarbeitungsmitteln (80C186.CIRCUITS) und zum Serialisieren von von den Universalverarbeitungsmitteln empfangenen parallelen Mitteilungen und Übertragen derselben zu abgehenden Signalisierungskanälen (LAPD.LK.OUT); - Multiplexermittel von den in die ersten numerischen Flüsse (1) einzublendenden abgehenden Signalisierungskanälen (LAPD.LK.OUT).

3. Prozessor von durch Übertragungspegelmessungen erzeugter Telefonsignalisierung nach Anspruch 1, dadurch gekennzeichnet, daß die zweiten Schnittstellenmittel (DUAL. PORT. 1, TDPC. INT) folgendes umfassen:

- zweite Doppelzugriff-Speichermittel (DUAL.PORT.1), die zwischen die Universalverarbeitungs-mittel (80C186.CIRCUITS) und den, der Verwaltung der Funkmittel (TDPC) zugeordneten Prozessor geschaltet sind;
- dritte Puffermittel, die zu dem zweiten Doppelzugriff-Speichermittel gehören, zum Puffern einer Warteschlange von Mitteilungen, die zu dem der Verwaltung der Funkmittel (TDPC) zugeordneten Prozessor zu senden sind;
- vierte Puffermittel, die zu dem zweiten Doppelzugriff-Speichermittel gehören, zum Puffern einer Warteschlange von Mitteilungen, die zu den Universalverarbeitungsmitteln (80C186.CIRCUITS) zu senden sind;
- programmierbare Mittel zum Bestimmen der Lese- und Schreibzugriffe auf die dritten und vierten Puffermittel sowohl durch den der Verwaltung der Funkmittel (TDPC) zugeordneten Prozessor als auch die Universalverarbeitungmittel (80C186.CIRCUITS).

4. Verfahren zum Verwalten der durch Übertragungspegelmessungen erzeugten Telefonsignalisierung, das die Funktionsweise des Prozessors von Telefonsignalisierung nach Anspruch 1 bestimmt, dadurch gekennzeichnet, daß es die folgenden Phasen umfaßt:

1) Fortlaufendes Überprüfen der Einstellung eines Logikzustandes, der die Ankunft einer ankommenden Telefonmitteilung anzeigt, die von einer Basisstation (BS) kommt und durch erste numerische Flüsse (1), die Signalisierungskanäle führen, gesandt wurde;
2) Ausführen der Operationen der Ebene 2 eines Kommunikationsprotokolls mit mehrfachen hierarchischen Ebenen zum Überprüfen der Gültigkeit der Mitteilung und Speichern von gültigen empfangenen Mitteilungen in einem Empfangspuffer;
3) Auswerten des Adressfeldes der gepufferten Mitteilungen, um festzustellen, an wen eine empfangene Mitteilung adressiert ist;
4) Übertragen der gepufferten Mitteilungen in ein erstes Doppelzugriff-Speichermittel, indem entsprechende Warteschlangen von empfangenen Mitteilungen vorgesehen sind (DUAL.PORT.0, DUAL.PORT.1, 80C186.CIRCUITS, MPCC.INT), die an entsprechende Adressglieder zu senden sind (DSP.CIRCUITS, TDPC, BTS, MPCC), unter denen sich ein Arithmetikprozessor (DSP.CIRCUITS.DSP164) befindet, der der Verarbeitung von Übertragungspegelmessungen zugeordnet ist;
5) Übertragen des "Informationsinhalts" von in eine Warteschlange eingereihten Mitteilungen bezüglich Übertragungspegelmessungen aus ersten Puffermitteln im ersten Doppelzugriff-Speichermittel zu einem internen Speicher (RAM) des Arithmetikprozessors, der den Signalisierungskanälen dynamisch zugewiesen ist;
6) Verarbeiten des in dem internen Speicher (RAM) übertragenen "Informationsinhalts", erhalten von "verarbeiteten Mitteilungen" mit Anzeigen für die Durchführung von Handover und zum Steuern der Sendeleistung der in Mobilfunkgeräten (MS) oder in Festfunkstellen (BS) enthaltenen Sender;
7) Einspeichern der "verarbeiteten Mitteilungen" in zweite Puffermittel, die zu dem ersten Doppelzugriff-Speichermittel gehören, indem eine entsprechende Warteschlange von zu entsprechenden Adressgliedern (80C186.CIRCUITS) zu sendenden Mitteilungen vorgesehen ist (DUAL.PORT.0);
8) Ausführen von Operationen der Ebene 2 des Kommunikationsprotokolls an den in eine Warteschlange eingereihten empfangenen Mitteilungen und an den "verarbeiteten Mitteilungen" zum Zusammenstellen von gültigen Mitteilungen, die in entsprechende Warteschlangen von an entsprechende Adressglieder (TDPC, BTS, MPCC) zu sendenden Sendemitteilungen eingespeichert werden (DUAL.PORT.1, 80C186.CIRCUITS, MPCC.INT).

5. Verfahren zum Verwalten der durch Übertragungspegelmessungen erzeugten Telefonsignalisierung nach Anspruch 4, dadurch gekennzeichnet, daß der Arithmetikprozessor (DSP.CIRCUITS, DSP164) eine Prozessorinitialisierungsphase (F0) des Inhalts des internen Speichers (RAM) durchführt, hauptsächlich bei dem Start und nach jeder Neuinitialisierung, und einen nachfolgenden, auf unbestimmte Zeit wiederholten Verarbeitungszyklus, wobei die Initialisierungsphase (F0) die folgenden Schritte umfaßt:

i1) Einschreiben von einigen Parametern (E&M), die für die nachfolgende Verarbeitung notwendig sind, in eine erste Zone des internen Speichers (RAM);

i2) Einschreiben einer Liste mit einer Anzahl von M Tabellen in eine zweite Zone des internen Speichers (RAM), wobei die Tabellen in der dynamischen Zuweisung von Bereichen (CELL.SER, CELL.AD) des internen Speichers (RAM) zu dem "Informationsinhalt" der Signalisierungskanäle benutzt werden; wobei die Anzahl M niedriger als die Anzahl der Signalisierungskanäle ist, und mit Kriterien ausgewertet werden, die von dem Fernsprechverkehr abhängig sind, der in dem von der Steuereinrichtung (BSC) der Festfunkstellen (BTS) bedienten Gebiet besteht; i3) auf Null setzen einer dritten Zone des internen Speichers (RAM), die zur Speicherung von "Kanalworten" reserviert ist, und zum Einstellen eines verketteten oder nichtverketteten Zustandes von M Tabellen auf die Signalisierungskanäle ausgelegt ist;

i4) auf Null setzen einer vierten Zone des internen Speichers (RAM), die wahlweise in zwei oder mehr Speicherblöcke aufgeteilt ist, die für die, den Signalisierungskanälen dynamisch zuzuweisenden Bereiche reserviert sind;

wobei jede Wiederholung des, auf unbestimmte Zeit durchgeführten Verarbeitungszyklus die folgenden Verarbeitungsphasen umfaßt, die in zeitlicher Reihenfolge durchgeführt werden (MAIN):

a) Lesen in der entsprechenden Warteschlange von empfangenen Mitteilungen (DUAL.PORT.0) eines ersten und zweiten Feldes (MESSAGE_TYPE; D,TEI;CHANNEL_NBR), die zu dem "Informationsinhalt" einer Mitteilung mit höherer Priorität gehören, wobei das erste Feld (MESSAGE_TYPE) dazu ausgelegt ist, die zu verarbeitende Mitteilungsart zu identifizieren (MEASUREMENT_RESULT, MS_RF_POWER_CAPABILITY, HO_CANDIDATE_ENQUIRE_INVOKE, RESET), wobei das zweite Feld (D,TEI,CHANNEL_NBR) einen Signalisierungskanal identifiziert, mit dem die zu verarbeitende Mitteilung verbunden ist;

b) Auswertung des ersten Feldes (MESSAGE_TYPE) und Identifizierung der Mitteilungsart;

c) mögliche "dynamische" Zuweisung eines der M Speicherbereiche (CELL_SER, CELL.AD) zu einem durch das zweite Feld (D,TEI,CHANNEL_NBR) identifizierten Signalisierungskanal für die Dauer einer durch den Kanal bedienten Kommunikation;

d) Lesen in der entsprechenden Warteschlange von empfangenen Mitteilungen (DUAL.PORT.0) von übrigen dritten Feldern des "Informationsinhalts" mit Übertragungspegelmeß-werten und Einschreiben derselben in den, dynamisch dem Kanal zugewiesenen Bereich;

e) Durchführung der entsprechenden Verarbeitung bezüglich der übrigen dritten Felder des "Informationsinhalts" und Erhalten der "verarbeiteten Mitteilungen", wobei die entsprechende Verarbeitung von der vorhergehenden Mitteilungsartidentifizierung abhängig ist;

f) Einschreiben der "verarbeiteten Mitteilungen" in die entsprechende Warteschlange von an entsprechende Adressglieder (80C186.CIRCUITS) zu sendenden Mitteilungen (DUAL.PORT.0);

g) bedingungslose Wiederholung des aus den vorhergehenden Phasen a) bis f) bestehenden Zyklus während nachfolgender Wiederholungen des Verarbeitungszyklus, wobei "Informationsinhalt" für nachfolgende Mitteilungen, die in Prioritätsreihenfolge gespeichert sind, gelesen und verarbeitet wird.

6. Verfahren zum Verwalten der durch Übertragungspegelmessungen erzeugten Telefonsignalisierung nach Anspruch 5, dadurch gekennzeichnet, daß:

- in der vierten Phase d) des Verarbeitungszyklus die übrigen dritten Felder des "Informationsinhalts" der in den dem Kanal zugewiesenen Bereich eingeschrieben ist, in entsprechenden Folgen von K Werte für jedes dritte Feld geschrieben werden, wobei K vorzugsweise gleich 32 ist, wobei die Folgen in benachbarten Speicherzonen zugeteilt werden und eine Folge von Folgen bilden;

- die übrigen dritten Felder, die in der fünften Phase e) des Verarbeitungszyklus verarbeitet werden, Werte von entsprechenden Übertragungspegelmessungen (RXLEV_(FULL/SUB)_UL, RXQUAL_(FULL/SUB)_UL, RXLEV_(FULL/SUB)_DL, RXQUAL_(FULL/SUB)_DL, TIMING_ADVANCE) für eine "bedienende" Zelle, an die ein generisches Mobilfunkgerät angeschlossen ist, und Übertragungspegelmeßwerte (RXLEV_NCELL_(n)) für eine Anzahl n von benachbarten Zellen enthalten; wobei die entsprechende Verarbeitung Mittelwerte umfaßt, die an den Gliedern jeder Folge von K Werten erhalten werden;

- in der sechsten Phase f) des Verarbeitungszyklus in die entsprechende Warteschlange von an entsprechende Adressglieder (80C186.CIRCUITS) zu sendende Mitteilungen (DUAL.PORT.0) erste "verarbeitete Mitteilungen" (CHANGE_MS_POWER, CHANGE_BS_POWER) zur Steuerung der Sendeleistung der festen oder mobilen Geräte oder zweite "verarbeitete Mitteilungen" (CONDITION_FOR_INTERCELL_HO, CONDITION_FOR_INTRACELL_HO) mit Anzeigen zur Durchführung von Handover eingeschrieben werden.

7. Verfahren zum Verwalten der durch Übertragungspegelmessungen erzeugten Telefonsignalisierung nach Anspruch 6, dadurch gekennzeichnet, daß die Aktualisierung der in der vierten Phase d) des Verarbeitungszyklus ausgeführten Folgen die folgenden Schritte umfaßt, die in zeitlicher Reihenfolge durchgeführt werden (LETMESS):

d1) Lesen eines dritten Feldes des "Informationsinhalts";
d2) Erzeugung einer Schreibadresse des dritten Feldes in einer entsprechenden Folge von K Werten, wobei die Schreibadresse durch Hinzuaddieren zu der Startadresse (INTAB) des dem Kanal zugewiesenen Speicherbereichs eines entsprechenden Relativzeigerwertes entsprechend der Differenz zwischen einer Startadresse der entsprechenden Folge und einer Startadresse einer ersten Folge der Folge von Folgen und auch hinzuaddieren zu den zwei vorhergehenden Gliedern eines Zählwertes, der durch einen K-Modulo-Vorwärtszähler erreicht wird, der sich am Schwanz der entsprechenden Folge befindet und damit verbunden ist, berechnet wird; d3) Einschreiben des dritten Feldes in ein Wort der entsprechenden Folge, deren Adresse im vorhergehenden Schritt d2) berechnet wird;
d4) Initialisierung eines K-Modulo-Rückwärtszählers, der mit der entsprechenden Folge verbunden ist, mit dem gegenwärtig durch den K-Modulo-Vorwärtszähler erreichten Zählwert;
d5) Modulo-K-Erhöhung des Vorwärtszählers;
d6) Überprüfen des Bestehens von zusätzlichen, zu aktualisierenden Folgen und, wenn ja, Wiederholung der vorhergehenden Schritte d1) bis d5) für eine weitere zu aktualisierende Folge.

8. Verfahren zum Verwalten der durch Übertragungspegelmessungen erzeugten Telefonsignalisierung nach Anspruch 6, dadurch gekennzeichnet, daß die entsprechende Verarbeitung, die in der fünften Phase e) ausgeführt wird, die folgenden, in zeitlicher Reihenfolge durchgeführten Verarbeitungsschritte enthält:

e1) Wahl einer Art von Mittelwert, der in den folgenden Operationen zu benützen ist;
e2) Ausführung des gewählten Mittelwertes an jedem der entsprechenden Folgen von K Werten;
e3) Vergleich der nach dem obigen Punkt e2) erhaltenen Mittelwerte für besonders wichtige Folgen bezüglich der Steuerung der Sendeleistung (RXLEV_ (FULL/SUB) _UL, RXQUAL_ (FULL/SUB) _UL, RXLEV_ (FULL/SUB) _DL, RXQUAL_ (FULL/SUB)_ DL) mit einer ersten Gruppe entsprechender Schwellwerte mit voreingestellten Werten, Erhalten von ersten Kriterien, die direkt für die Erzeugung einer ersten "verarbeiteten Mitteilung" (CHANGE_MS_POWER, CHANGE_BS_POWER), mit Anzeige zur Steuerung der Sendeleistung benutzt werden können;
e4) Auswertung der ersten Kriterien und mögliche Erzeugung der ersten "verarbeiteten Mitteilung" oder Ausführung der übrigen Folgeschritte e5)...e9);
e5) Vergleich von nach dem obigen Punkt e2) erhaltenen Mittelwerten für besonders wichtige Folgen bezüglich der Verwaltung der Handover-Operationen (RXLEV_ (FULL/SUB) _UL, RXQUAL_ (FULL/SUB) _UL, RXLEV_ (FULL/SUB)_ DL, RXQUAL_(FULL/SUB)_DL), TIMING_ADVANCE, RXLEV_NCELL_ (n)) mit einer zweiten Gruppe entsprechender Schwellwerte mit voreingestellten Werten, Erhalten von zweiten Kriterien, die für die Erzeugung einer zweiten "verarbeiteten Mitteilung" benutzt werden können;
e6) Berechnung von entsprechenden Güteparametern (POWER BUDGET), die auf die Güte der Funkverbindung zwischen einem Mobilfunkgerät und einer Gruppe benachbarter Zellen bezogen sind;
e7) Vergleich der Güteparameter mit einer entsprechenden dritten Gruppe von Schwellwerten mit voreingestellten Werten und Erhalten von dritten Kriterien (HO_MARGIN(n)), die für die Erzeugung der zweiten "verarbeiteten Mitteilung" benutzt werden können;
e8) Aufstellen einer Liste bevorzugter benachbarter Zellen, die in Prioritätsreihenfolge bezüglich der Ausführung einer Handover-Operation auf Grundlage der ersten, zweiten und dritten Kriterien angeordnet sind;

e9) Auswertung der ersten, zweiten und dritten Kriterien und Erzeugung der zweiten "verarbeiteten Mitteilung" (CONDITION_FOR_INTERCELL_HO, CONDITION_FOR_INTRACELL_HO) mit Anzeigen zur Ausführung eines Handover, wobei zu diesen Anzeigen die Liste bevorzugter benachbarter Zellen gehört.

9. Verfahren zum Verwalten der durch Übertragungspegelmessungen erzeugten Telefonsignalisierung nach nach Anspruch 7, dadurch gekennzeichnet, daß der entsprechende K-Modulo-Rückwärtszähler Werte zur Berechnung von K Adressen von generischen Gliedern in einer entsprechenden Folge zu deren Verarbeitung liefert.

10. Verfahren zum Verwalten der durch Übertragungspegelmessungen erzeugten Telefonsignalisierung nach Anspruch 5, dadurch gekennzeichnet, daß die Initialisierungsphase (F0) bezüglich Tabellen, die zu der Liste von M Tabellen gehören, die in die zweite Zone des internen Speichers (RAM) eingeschrieben sind, die folgende Schritte umfaßt:

- Zuweisung derselben Anzahl von ersten Speicherworten wie M Tabellen vorgesehen sind durch Einschreiben einer entsprechenden Anfangsadresse einer anderen Tabelle an sequenzieller Stellung in der Liste in die ersten Worte, wobei die Tabellen mittels der Anfangsadressen mit Zeigerfunktionen (FRETABXY, 00...99) mit den entsprechenden vorhergehenden verkettet sind;
- Zuweisung derselben Anzahl von zweiten Worten wie M Tabellen vorgesehen sind, wobei die zweiten Worte entsprechende dritte Felder enthalten, die zur Adressierung der zwei oder mehr Speicherblöcke der vierten Speicherzone des internen Speichers (RAM) benutzt werden;
- Zuweisung von derselben Anzahl von dritten Worten, wie M Tabellen vorgesehen sind, durch Einschreiben einer entsprechenden Anfangsadresse (1000H...D400H) eines entsprechenden Speicherbereichs, der den Kanälen innerhalb eines generischen Speicherblockes dynamisch zuzuweisen ist, in die dritten Worte und nur im Fall einer letzten Mten Tabelle der Liste eines Anzeigers (FFFFH) des Mangels weiterer, den Kanälen zuzuweisender Speicherbereiche;
- Zuweisung eines zusätzlichen Zeigers (FRETABPTR) an der Gesamtliste der Tabellen, der den Beginn einer ersten freien Tabelle der Liste anzeigt, wobei eine Tabelle als frei angesehen wird, die nicht mittels eines entsprechenden "Kanalwortes" mit irgendeinem Signalisierungskanal verkettet ist;

wobei die Tabellenliste in der dritten Phase c) des Verarbeitungszyklus benutzt wird, um einen Speicherbereich einem durch das zweite Feld (D,TEI, CHANNEL_NBR) identifizierten Signalisierungskanal zuzuweisen, oder zur Freigabe des Bereichs im Falle daß das erste Feld eine Freigabemessage (RESET) der Signalisierungs-kanalmittel identifiziert, wobei der freigegebene Bereich für nachfolgende Neuzuweisung an einen anderen Kanal oder wahlweise denselben verfügbar bleibt.

11. Verfahren zum Verwalten der durch Übertragungspegelmessungen erzeugten Telefonsignalisierung nach Anspruch 10, dadurch gekennzeichnet, daß die dritte Phase c) des Verarbeitungszyklus, in dem der Speicherbereich "dynamisch" einem Signalisierungskanal zugewiesen wird, die folgenden Verarbeitungsschritte enthält, die in zeitlicher Reihenfolge durchgeführt werden (INDINAM) :

c1) Dekodieren eines zweiten Feldes (D, TEI, CHANNEL_NBR) und Erzeugung einer Leseadresse (CHAN_ADR) eines 'Kanalwortes' und Lesen desselben;

c2) Dekodieren des Logikzustandes eines im 'Kanalwort' enthaltenen vierten Feldes (a) mit Anzeigen des Verknüpfungs- oder Nichtverknüpfungszustandes der Tabelle der Liste mit dem durch das zweite Feld (D, TEI, CHANNEL_NBR) identifizierten Signalisierungskanal und entweder Ausführung von fünf Verarbeitungsschritten c3) ... c7) unmittelbar nach dem Schritt c2), der gegenwärtig durchgeführt wird, oder von übrigen Folgeschritten c8) ... c10) im Fall einer Nichtverknüpfung bzw. Verknüpfung;

c3) Lesen des zusätzlichen Zeigers (FRETABPTR), der eine erste freie Tabelle der Liste anzeigt, und entweder Durchführung von Beginn des Verarbeitungszyklus Phase a) oder Ausführung von vier Verarbeitungsschritten c4) ... c7), die dem Schritt c3), der gegenwärtig durchgeführt wird, direkt folgen, wenn der Zeiger (FRETABPTR) mit dem Anzeiger (FFFFH) des Mangels zusätzlicher, den Kanälen zuzuweisender Speicherbereiche zusammentrifft bzw. nicht zusammentrifft;

c4) Einschreiben des zusätzlichen Zeigers (FRETABPTR)in ein zum 'Kanalwort' gehörendes fünftes Feld (FRETABXY) und gleichzeitiges Einschreiben in das vierte Feld (a) desselben Wortes von einem Logikwert, der den abgeschlossenen Zustand der Verknüpfung zum Signalisierungskanal der ersten freien Tabelle der Liste anzeigt;

c5) Lesen des ersten Wortes (FRETABXY), das zu der durch den zusätzlichen Zeiger (FRETABPTR) adressierten Tabelle gehört, und Ersetzen des zusätzlichen Zeigers (FRETABPTR) durch das erste gelesene Wort (FRETABXY);

c6) Lesen eines zweiten Wortes, das zu der durch den zusätzlichen Zeiger (FRETABPTR) adressierten Tabelle gehört, Dekodieren des dritten Feldes und Auswahl eines Speicherblocks der vierten Speicherzone;

c7) Lesen des dritten Wortes, das zu der im vorhergehenden Schritt c6) adressierten Tabelle gehört, und Einschreiben des dritten Wortes in ein erstes Register, das zum Erzeugen einer Startadresse (INTAB) des dem Kanal im ausgewählten Speicherblock zugewiesenen Speicherbereichs benutzt wird;

Ausführung der folgenden Schritte nach Schritt c2) als Alternative zu Schritten c3) bis c7):

c8) Lesen eines fünften Feldes (FRETABXY), das zu dem 'Kanalwort' gehört, und Verwendung des gelesenen Wertes als Zeiger auf eine Tabelle der Liste, die dem Signalisierungskanal vorher zugewiesen wurde;

c9) Lesen des zweiten Wortes, das zu der dem Kanal zugewiesenen Tabelle gehört, Dekodieren des dritten Feldes und Auswahl eines entsprechenden Speicherblocks der vierten Speicherzone;

c10) Lesen des dritten Wortes, das zu der dem Kanal zugewiesenen Tabelle gehört und Einschreiben des dritten Wortes in ein erstes Register, das zum Erzeugen einer Startadresse (INTAB) des Speicherbereichs benutzt wird, der dem Kanal im ausgewählten Speicherblock zugewiesen worden ist.

**12.** Verfahren zum Verwalten der durch Übertragungspegelmessungen erzeugten Telefonsignalisierung nach Anspruch 11, dadurch gekennzeichnet, daß die dritte Phase c), in der der dem Kanal zugewiesene Speicherbereich freigegeben werden muß und auch die folgenden Verarbeitungsschritte (RILCAN) umfaßt, die in zeitlicher Reihenfolge durchgeführt werden:

r1) Dekodieren des zweiten Feldes (D, TEI, CHANNEL_NBR) zur Erzeugung einer Adresse (CHAN_ADR) eines "Kanalwortes" und lesen desselben;

r2) Lesen des in dem fünften Feld des "Kanalwortes" gespeicherten Zeigers (FRETABXY);

r3) Einschreiben des eine erste freie Tabelle der Liste anzeigenden zusätzlichen Zeigers (FRETABPTR) in das erste Wort der Tabelle, die durch den in dem fünften Feld des "Kanalwortes" gelesenen Zeiger (FRETABXY) adressiert wird;

r4) Ersetzen des zusätzlichen Zeigers (FRETABPTR), der eine erste freie Tabelle der Liste anzeigt, durch den im fünften Feld des "Kanalwortes" gelesenen Zeiger (FRETABXY);

r5) Lesen des zweiten Wortes, das zu der im vorhergehenden Schritt r3) adressierten Tabelle gehört, Dekodieren des dritten Feldes und Auswahl eines entsprechenden Speicherblocks der vierten Speicherzone, der ein freizugebender Bereich zugeordnet ist;

r6) Lesen des dritten Wortes, das zu der im vorhergehenden Schritt r3) adressierten Tabelle gehört und Einschreiben des dritten Wortes in das erste Register, das zum Erzeugen einer Startadresse (TABRIL) des Bereichs benutzt wird, der freigegeben werden muß;

r7) Freigeben des Bereichs, der freigegeben werden muß, durch Setzen desselben auf Null;

r8) Einschreiben in das vierte Feld (a) des "Kanalwortes" von einem Logikwert, der den Zustand einer Nichtverknüpfung der durch den vorhergehenden Schritt r3) adressierten Tabelle mit dem freigegebenen Bereich anzeigt.

## Revendications

**1.** Processeur de signalisation téléphonique générée par des mesures de transmission (PPLD) pour systèmes radio mobiles numériques appartenant à un dispositif de commande (BSC) de stations radio fixes (BTS) multiples situées dans des cellules territoriales respectives et comprenant des émetteurs-récepteurs en connexion avec des équipements téléphoniques mobiles (MS) auxquels sont assignés des canaux de communication respectifs sujets à un Transfert ; ledit dispositif de commande (BSC) étant en communication avec les stations radio fixes (BTS) au moyen de premiers flux numériques (1) et avec une station de commutation de système radio mobile (MSC) et un centre d'exploitation et de maintenance au moyen de deuxièmes flux numériques (2) ; lesdits premiers et deuxièmes flux numériques consistant en séquences de bits dans des trames série reconnaissables et numérotées divisées en canaux de trafic et de signalisation, les canaux de signalisation acheminant des messages téléphoniques comprenant des champs de commande et un "contenu informatif" sous-jacent à un protocole de communication à multiples niveaux hiérarchiques ; ledit dispositif de commande (BSC) comprenant aussi : un processeur dédié à la gestion des ressources radio (TDPC) en fonction de la mobilité des utilisateurs qui est connecté audit processeur de signalisation téléphonique générée par des mesures de transmission (PPLD) et à un processeur d'interface périphérique (PPCC) avec lesdits deuxièmes flux numériques (2) ; et un processeur administratif (MPCC) qui effectue des fonctions de supervision et de maintenance du dispositif de commande (BSC) et des stations radio fixes (BTS) et est connecté à chacun desdits processeurs ; des premiers moyens d'extraction/insertion (OTLP, SN64) qui extraient à partir desdits premiers flux numériques (1) les canaux de signalisation respectifs et acheminent ceux-ci audit processeur de signalisation téléphonique générée par des mesures de transmission (PPLD), et qui insèrent dans lesdits premiers flux numériques (1) les canaux de signalisation provenant dudit processeur (PPLD) ; des deuxièmes moyens d'extraction/insertion (OTLP, SN64) qui extraient à partir desdits deuxièmes flux numériques (2) les canaux de signalisation respectifs et acheminent ceux-ci audit processeur d'interface périphérique et vice versa, caractérisé en ce qu'il comprend :

- un premier moyen d'interfaçage (SN64.INT) avec lesdits premiers moyens (SN64, OTLP) qui extraient/insèrent les canaux de signalisation à partir desdits/dans lesdits premiers flux numériques (1) ;
- un deuxième moyen d'interfaçage (DOUBLE PORT 1, TDPC.INT) avec ledit processeur dédié à la gestion des ressources radio (TDPC) ;
- un troisième moyen d'interfaçage (MPCC.INT) avec ledit processeur administratif (MPCC) qui effectue des fonctions de supervision et de maintenance du dispositif de commande (BSC) et des stations radio fixes (BTS) ;
- des moyens de traitement universels (CIRCUITS 80C186) connectés à tous lesdits moyens d'interfaçage pour gérer le niveau inférieur de signalisation existant sur les premiers flux numériques (1) pour permettre un flux de messages de haut niveau dans les deux sens de transmission, et pour sélectionner parmi les messages ceux générés par les mesures de transmission, envoyant les autres à des éléments d'adresse correspondants (BTS, MS, TDPC, MSC) ;
- des moyens de traitement arithmétiques (CIRCUITS DSP, DSP164) pour traiter le "contenu informatif" des messages sélectionnés concernant les mesures de transmission, obtenant des "messages traités" comprenant des indications des performances desdits Transferts et pour commander la puissance d'émission des émetteurs inclus dans lesdits téléphones mobiles (MS) ou dans lesdites stations radio fixes (BTS) ;
- des premiers moyens de mémoire à double accès (DOUBLE PORT 0) connectés à la fois auxdits moyens de traitement universels (CIRCUITS 80C186) et aux moyens de traitement arithmétiques (CIRCUITS DSP, DSP164) ;
- des premiers moyens de mémoire tampon appartenant auxdits premiers moyens de mémoire à double accès (DOUBLE PORT 0), pour mettre en mémoire tampon une file d'attente dudit "contenu informatif" des messages sélectionnés concernant les mesures de transmission à envoyer auxdits moyens de traitement arithmétiques ;
- des deuxièmes moyens de mémoire tampon appartenant auxdits premiers moyens de mémoire à double accès (DOUBLE PORT 0), pour mettre en mémoire tampon une file d'attente desdits "messages traités" à envoyer auxdits moyens de traitement universels ;
- des moyens de mémoire internes (RAM) appartenant auxdits moyens de traitement arithmétiques (CIRCUITS DSP), pour mettre en mémoire tampon le "contenu informatif" concernant les mesures de transmission dans des zones assignées dynamiquement auxdits canaux de signalisation.

2. Processeur de signalisation téléphonique générée par des mesures de transmission selon la revendication 1, caractérisé en ce que lesdits premiers moyens d'interfaçage (SN64.INT) comprennent :

- des moyens de démultiplexage des canaux de signalisation entrants (LAPD.LK.IN) extraits à partir desdits premiers flux numériques (1) ;
- des moyens de communication série pour recevoir des messages série à partir des canaux de signalisation démultiplexés (LAPD.LK.IN) et les transférer sous forme parallèle auxdits moyens de traitement universels (CIRCUITS 80C186), et pour mettre sous forme série les messages parallèles reçus à partir desdits moyens de traitement universels et les transférer à des canaux de signalisation sortants (LAPD.LK.OUT) ;
- des moyens de multiplexage des canaux de signalisation sortants (LAPD.LK.OUT) à insérer dans lesdits premiers flux numériques (1).

3. Processeur de signalisation téléphonique générée par des mesures de transmission selon la revendication 1, caractérisé en ce que lesdits deuxièmes moyens d'interfaçage (DOUBLE PORT 1, TDPC.INT) comprennent :

- des deuxièmes moyens de mémoire à double accès (DOUBLE PORT 1) connectés entre lesdits moyens de traitement universels (CIRCUITS 80C186) et ledit processeur dédié à la gestion des ressources radio (TDPC) ;

- des troisièmes moyens de mémoire tampon appartenant auxdits deuxièmes moyens de mémoire à double accès, pour mettre en mémoire tampon une file d'attente de messages à envoyer au processeur dédié à la gestion des ressources radio (TDPC) ;

- des quatrièmes moyens de mémoire tampon appartenant auxdits deuxièmes moyens de mémoire à double accès pour mettre en mémoire tampon une file d'attente de messages à envoyer aux moyens de traitement universels (CIRCUTIS 80C186) ;

- des moyens programmables pour régir les accès de lecture et d'écriture aux troisièmes et quatrièmes moyens de mémoire tampon par à la fois le processeur dédié à la gestion des ressources radio (TDPC) et les moyens de traitement universels (CIRCUITS 80C186).

4. Procédé de gestion de la signalisation téléphonique générée par des mesures de transmission, régissant le fonctionnement du processeur de signalisation téléphonique de la revendication 1, caractérisé en ce qu'il comprend les phases suivantes :

1) vérification, en permanence, du réglage d'une condition logique indiquant l'arrivée d'un message téléphonique entrant créé dans une Station de Base (BS) et envoyé à travers des premiers flux numériques (1) acheminant des canaux de signalisation ;

2) exécution d'opérations de niveau 2 d'un protocole de communication à multiples niveaux hiérarchiques pour vérifier la validité du message, et mémorisation des messages reçus valables dans une mémoire tampon de réception ;

3) analyse du champ d'adresse des messages mis en mémoire tampon en vue d'établir à qui un message reçu est adressé ;

4) transfert des messages mis en mémoire tampon dans un premier moyen de mémoire à double accès dans lequel sont fournies des files d'attente respectives de messages reçus (DOUBLE PORT 0, DOUBLE PORT 1, CIRCUITS 80C186, MPCC.INT) à envoyer à des éléments d'adresse correspondants (CIRCUITS DSP, TDPC, BTS, MPCC), parmi lesquels membres se trouve un processeur arithmétique (CIRCUITS DSP, DSP164) dédié au traitement des mesures de transmission ;

5) transfert du "contenu informatif" des messages mis en file d'attente concernant les mesures de transmission depuis des premiers moyens de mémoire tampon dans les premiers moyens de mémoire à double accès jusque dans une mémoire interne (RAM) dudit processeur arithmétique, assignée dynamiquement aux canaux de signalisation ;

6) traitement dudit "contenu informatif" transféré dans ladite mémoire interne (RAM), en obtenant des "messages traités" comprenant des indications de performance des Transferts et pour commander la puissance d'émission des émetteurs inclus dans les téléphones mobiles (MS) ou dans les stations radio fixes (BS) ;

7) mémorisation desdits "messages traités" dans des deuxièmes moyens de mémoire tampon appartenant aux premiers moyens de mémoire à double accès dans lesquels est fournie une file d'attente respective de messages (DOUBLE PORT 0) à envoyer à des éléments d'adresse correspondants (CIRCUITS 80C186) ;

8) exécution d'opérations de niveau 2 dudit protocole de communication sur les messages reçus mis en file d'attente, et sur les "messages traités", pour assembler lesdits messages valables mémorisés dans des files d'attente respectives de messages émis (DOUBLE PORT 1, CIRCUITS 80C186, MPCC.INT) à envoyer à des éléments d'adresse correspondants (TDPC, BTS, MPCC).

5. Procédé de gestion de la signalisation téléphonique générée par des mesures de transmission selon la revendication 4, caractérisé en ce que ledit processeur arithmétique (CIRCUITS DSP, DSP164) exécute une phase d'initialisation de processeur (F0) du contenu de ladite mémoire interne (RAM), principalement à la mise en marche et après chaque réinitialisation, et un cycle de traitement suivant itéré indéfiniment ; ledit processus d'initialisation (F0) comprenant les étapes suivantes :

i1) écriture de certains paramètres (E&M) nécessaires pour le traitement ultérieur dans une première zone de ladite mémoire interne (RAM) ;

i2) écriture d'une liste comportant un certain nombre de M tables dans une deuxième zone de ladite mémoire interne (RAM), lesdites tables étant utilisées dans ladite assignation dynamique de zones (CELL.SER, CELL.AD) de ladite mémoire interne (RAM) au "contenu informatif" desdits canaux de signalisation ; ledit nombre M étant inférieur au nombre desdits canaux de signalisation, et étant évalué avec des critères dépendant du trafic téléphonique existant dans le territoire desservi par le dispositif de commande (BSC) des stations radio fixes (BTS) ;

i3) mise à zéro d'une troisième zone de ladite mémoire interne (RAM) réservée à la mémorisation de "mots de canaux" conçus pour établir un état lié, ou non lié, des M tables avec lesdits canaux de signalisation ;

i4) mise à zéro d'une quatrième zone de ladite mémoire interne (RAM) divisée optionnellement en deux ou plusieurs partitions de mémoire réservées auxdites zones à assigner dynamiquement aux canaux de signalisation ;

chaque itération dudit cycle de traitement effectué indéfiniment comprenant les phases de traitement suivantes exécutées dans l'ordre chronologique (MAIN) :

a) lecture dans ladite file d'attente respective de messages reçus (DOUBLE PORT 0) d'un premier et d'un deuxième champ (MESSAGE_TYPE ; D, TEI, CHANNEL_NBR) appartenant audit "contenu informatif" d'un message de priorité supérieure, ledit premier champ (MESSAGE_TYPE) étant conçu pour identifier le type de message à traiter (MEASUREMENT_RESULT, MS_RF_POWER_CAPABILITY, HO_CANDIDATE_ENQUIRE_INVOKE, RESET), ledit deuxième champ (D, TEI, CHANNEL_NBR) identifiant un canal de signalisation auquel est associé ledit message à traiter.

b) analyse dudit premier champ (MESSAGE_TYPE) et identification du type de message ;

c) assignation "dynamique" éventuelle d'une desdites M zones de mémoire (CELL_SER, CELL.AD) à un canal de signalisation identifié par ledit deuxième champ (D, TEI, CHANNEL_NBR) pour la durée d'une communication desservie par ledit canal ;

d) lecture dans ladite file d'attente respective de messages reçus (DOUBLE PORT 0) de troisièmes champs restants dudit "contenu informatif" comprenant des valeurs de mesures de transmission, et écriture de celles-ci dans ladite zone assignée dynamiquement audit canal ;

e) exécution dudit traitement approprié concernant lesdits troisièmes champs restants dudit "contenu informatif" et obtention desdits "messages traités", le traitement approprié dépendant de l'identification du type de message précédent ;

f) écriture desdits "messages traités" dans ladite file d'attente respective des messages (DOUBLE PORT 0) à envoyer aux éléments d'adresse correspondants (CIRCUITS 80C186) ;

g) répétition inconditionnelle du cycle consistant en les phases précédentes a) à f) durant des itérations ultérieures dudit cycle de traitement, le "contenu informatif" des messages ultérieurs mémorisés dans l'ordre de priorité étant lu et traité.

6. Procédé de gestion de la signalisation téléphonique générée par des mesures de transmission selon la revendication 5, caractérisé en ce que :

- dans la quatrième phase d) du cycle de traitement les troisièmes champs restants dudit "contenu informatif" écrits dans ladite zone assignée audit canal sont écrits dans des séquences respectives de K valeurs pour chaque troisième champ, K étant de préférence égal à 32, lesdites séquences étant assignées dans des zones de mémoire adjacentes et constituant une succession de séquences ;

- lesdits troisièmes champs restants traités dans la cinquième phase e) dudit cycle de traitement contiennent des valeurs de mesures de transmission respectives (RXLEV_(FULL/SUB)_UL, RXQUAL_(FULL/SUB)_UL, RXLEV_(FULL/SUB)_DL, RXQUAL_(FULL/SUB)_DL, TIMING_ADVANCE) pour une cellule "serveuse" à laquelle un téléphone mobile générique est affilié, et des valeurs de mesures de transmission (RXLEV_NCELL_(n)) pour un nombre n de cellules adjacentes ; ledit traitement approprié comprenant des moyennes exécutées sur les termes de chaque dite séquence de K valeurs ;

- dans la sixième phase f) dudit cycle de traitement sont écrits dans ladite file d'attente respective de messages (DOUBLE PORT 0) à envoyer à des éléments d'adresse correspondants (CIRCUITS 80C186) des premiers "messages traités" (CHANGE_MS_POWER, CHANGE_BS_POWER) pour la commande de la puissance de transmission des postes fixes ou mobiles, ou de deuxièmes "messages traités" (CONDITION_FOR_INTERCELL_HO, CONDITION_FOR_INTRACELL_HO) comprenant des indications de performance des Transferts.

7. Procédé de gestion de la signalisation téléphonique générée par des mesures de transmission conformément à la revendication 6, caractérisé en ce que la mise à jour desdites séquences exécutées dans ladite quatrième phase d) dudit cycle de traitement comporte les étapes suivantes exécutées dans l'ordre chronologique (LETMESS) :

d1) lecture d'un dit troisième champ dudit "contenu informatif" ;

d2) génération d'une adresse d'écriture dudit troisième champ dans une séquence respective de K valeurs, l'adresse d'écriture étant calculée en ajoutant à l'adresse de départ (INTAB) de ladite zone de mémoire assignée audit canal, une valeur de décalage respective correspondant à la différence entre une adresse de départ de ladite séquence respective et une adresse de départ d'une première séquence de ladite succession de séquences, et en ajoutant aussi aux deux termes précédents une valeur de compte atteinte par un compteur progressif de module K situé à la queue de ladite séquence respective et associé à celle-ci ;

d3) écriture dudit troisième champ dans un mot de ladite séquence respective dont l'adresse est calculée dans l'étape précédente d2) ;

d4) initialisation d'un compteur dégressif de module K de ladite séquence respective avec la valeur de compte actuellement atteinte par ledit compteur progressif de module K ;

d5) augmentation de module K dudit compteur progressif ;

d6) vérification de l'existence de séquences supplémentaires à mettre à jour et, dans l'affirmative, répétition des étapes précédentes d1) à d5) pour une autre séquence à mettre à jour.

8. Procédé de gestion de la signalisation téléphonique générée par des mesures de transmission conformément à la revendication 6, caractérisé en ce que ledit traitement approprié exécuté dans la cinquième phase e) comporte les étapes de traitement suivantes exécutées en succession chronologique :

e1) choix d'un type de moyenne à utiliser dans les opérations suivantes ;

e2) exécution de ladite moyenne choisie sur chacune desdites séquences respectives de K valeurs ;

e3) comparaison des valeurs moyennes obtenues comme cela est présenté dans le point supérieur e2) pour des séquences particulièrement pertinentes en ce qui concerne la commande de la puissance de transmission (RXLEV_(FULL/SUB)_UL, RXQUAL_(FULL/SUB)_UL, RXLEV_(FULL/SUB)_DL, RXQUAL_(FULL/SUB)_DL) avec un premier groupe de seuils respectifs ayant des valeurs prédéfinies, en obtenant des premiers critères directement utilisables pour la génération d'un premier "message traité" (CHANGE_MS_POWER, CHANGE_BS_POWER) comprenant une indication pour la commande de la puissance de transmission ;

e4) évaluation desdits premiers critères et génération éventuelle dudit premier "message traité" ou exécution des étapes séquentielles restantes e5) ...e9) ;

e5) comparaison de valeurs moyennes obtenues conformément au point précédent e2) pour des séquences particulièrement importantes en ce qui concerne la gestion des opérations de Transfert (RXLEV_(FULL/SUB)_UL, RXQUAL_(FULL/SUB)_UL, RXLEV_(FULL/SUB)_DL, RXQUAL_(FULL/SUB)_DL, TIMING_ADVANCE, RXLEV_NCELL_(n)), à un deuxième groupe de seuils respectifs ayant des valeurs préréglées, en obtenant des deuxièmes critères utilisables pour la génération d'un deuxième "message traité".

e6) calcul de paramètres de mérite appropriés (BUDGET DE PUISSANCE) liés à la qualité de la connexion radio entre un téléphone mobile et un groupe de cellules adjacentes ;

e7) comparaison desdits paramètres de mérite à un troisième groupe respectif de seuils ayant des valeurs préréglées et en obtenant des troisièmes critères (HO_MARGIN(n)) utilisables pour la génération dudit deuxième "message traité"

e8) compilation d'une liste de cellules adjacentes préférées disposées par ordre de priorité en ce qui concerne l'exécution de l'opération de Transfert en fonction desdits premiers, deuxièmes et troisièmes critères ;

e9) évaluation desdits premiers, deuxièmes et troisièmes critères et génération dudit deuxième "message traité" (CONDITION_FOR_INTERCELL_HO, CONDITION_FOR_INTRACELL_HO) comprenant des indications pour l'exécution d'un Transfert, parmi lesquelles indications est comprise ladite liste de cellules adjacentes préférées.

9. Procédé de gestion de la signalisation téléphonique générée par des mesures de transmission selon la revendication 7, caractérisé en ce que ledit compteur dégressif de module K respectif fournit des valeurs pour le calcul de l'adresse K de termes génériques dans une séquence respective pour le traitement de celle-ci.

10. Procédé de gestion de la signalisation téléphonique générée par des mesures de transmission selon la revendication 5, caractérisé en ce que la phase d'initialisation (F0) concernant les tables appartenant à ladite liste de M tables écrites dans ladite deuxième zone de la mémoire interne (RAM) comprend les étapes suivantes :

- assignation d'autant de premiers mots de mémoire que de M tables fournies, en écrivant dans les premiers mots une adresse initiale respective d'une autre table en position séquentielle dans ladite liste, les tables étant enchaînées avec les tables précédentes respectives au moyen desdites adresses initiales ayant des fonctions de pointeurs (FRETABXY, 00...99) ;

- assignation d'autant de deuxièmes mots que de M tables fournies, les deuxièmes mots contenant des troisièmes champs respectifs pour solliciter lesdites deux ou plusieurs partitions de ladite quatrième zone de mémoire de ladite mémoire interne (RAM) ;

- assignation d'autant de troisièmes mots que de M tables fournies, en écrivant dans les troisièmes mots une adresse initiale respective (1000H...D400H) d'une dite zone de mémoire correspondante à assigner dynamiquement aux canaux à l'intérieur d'une partition générique et, seulement dans le cas d'une dernière $M^e$ table de la liste, un indicateur (FFFFH) du manque d'autres zones de mémoire à assigner aux canaux ;

- assignation d'un pointeur supplémentaire (FRETABPTR) à la liste complète des tables, indiquant le début d'une première table libre de la liste, une table étant considérée libre quand elle n'est liée à aucun canal de signalisation au moyen d'un dit "mot de canal" respectif ;

ladite liste de tables étant utilisée dans la troisième phase c) dudit cycle de traitement pour assigner une zone de mémoire à un canal de signalisation identifié par ledit deuxième champ (D, TEI, CHANNEL_NBR), ou pour libérer ladite zone au cas où ledit premier champ identifie un message de libération (RESET) des ressources du canal de signalisation, la zone libérée restant disponible pour une réassignation ultérieure à un canal différent ou en option au même canal.

11. Procédé de gestion de la signalisation téléphonique générée par des mesures de transmission conformément à la revendication 10, caractérisé en ce que la troisième phase c) dudit cycle de traitement dans lequel ladite zone de mémoire est assignée "dynamiquement" à un canal de signalisation, comporte les étapes de traitement suivantes exécutées en succession chronologique (INDINAM) :

c1) décodage d'un dit deuxième champ (D, TEI, CHANNEL_NBR) et génération d'une adresse de lecture (CHAN_ADR) d'un "mot de canal" et lecture de celui-ci ;

c2) décodage de l'état logique d'un quatrième champ (a), inclus dans le "mot de canal", contenant des indications sur l'état de liaison ou de non-liaison de ladite table de la liste avec le canal de signalisation identifié par ledit deuxième champ (D, TEI, CHANNEL_NBR) et soit l'exécution de cinq étapes de traitement c3) ...c7) immédiatement après l'étape c2) en cours d'exécution, soit des étapes séquentielles restantes c8) ...c10, en cas de non-liaison ou liaison respectivement ;

c3) lecture dudit pointeur supplémentaire (FRETABPTR) indiquant une première table libre de la liste et soit la continuation à partir du début dudit cycle de traitement, phase a), soit l'exécution de quatre étapes de traitement c4)... c7) immédiatement après l'étape c3) en cours d'exécution, dans le cas où respectivement ledit pointeur (FRETABPTR) coïncide ou non audit indicateur (FFFFH) du manque de zones de mémoire supplémentaires à assigner aux canaux.

c4) écriture dudit pointeur supplémentaire (FRETABPTR) dans un cinquième champ (FRETABXY), appartenant audit "mot de canal", et écriture simultanée dans ledit quatrième champ (a) du même mot, d'une valeur logique indiquant l'état terminé de la liaison avec ledit canal de signalisation de ladite première table libre de la liste ;

c5) lecture dudit premier mot (FRETABXY) appartenant à la table sollicitée par ledit pointeur supplémentaire (FRETABFTR) et remplacement dudit pointeur supplémentaire (FRETABPTR) par ledit premier mot lu (FRETABXY) ;

c6) lecture dudit deuxième mot appartenant à la table sollicitée par ledit pointeur supplémentaire (FRETABPTR); décodage dudit troisième champ et sélection d'une partition de ladite quatrième zone de mémoire ;

c7) lecture dudit troisième mot appartenant à la table sollicitée à l'étape précédente c6) et écriture du troisième mot dans un premier registre utilisé pour générer une adresse de début (INTAB) de ladite zone de mémoire assignée au canal dans ladite partition sélectionnée ;

exécution des étapes suivantes, après l'étape c2), en variante aux étapes c3) à c7) ;

c8) lecture d'un cinquième champ (FRETABXY) appartenant audit "mot de canal" et utilisation de la valeur lue comme pointeur vers une table de la liste précédemment assignée audit canal de signalisation ;

c9) lecture dudit deuxième mot appartenant à la table assignée au canal, décodage dudit troisième champ et sélection d'une partition respective de ladite quatrième zone de mémoire ;

c10) lecture dudit troisième mot appartenant à la table assignée au canal et écriture dudit troisième mot dans un premier registre utilisé pour générer une adresse de début (INTAB) de ladite zone de mémoire assignée audit canal dans ladite partition sélectionnée.

12. Procédé de gestion de la signalisation téléphonique générée par des mesures de transmission conformément à la revendication 11, caractérisé en ce que ladite troisième phase c) dans laquelle ladite zone de mémoire assignée audit canal doit être libérée comprend aussi les étapes de traitement suivantes (RILCAN) exécutées en succession chronologique :

r1) décodage dudit deuxième champ (D, TEI, CHANNEL_NBR) pour la génération d'une adresse (CHAN_ADR) d'un dit "mot de canal" et lecture de celui-ci ;
r2) lecture dudit pointeur (FRETABXY) mémorisé dans ledit cinquième champ du "mot de canal" ;
r3) écriture dudit pointeur supplémentaire (FRETABPTR) indiquant une première table libre de la liste dans ledit premier mot d'une dite table sollicitée par ledit pointeur (FRETABXY) lu dans ledit cinquième champ du "mot de canal" ;
r4) remplacement dudit pointeur supplémentaire (FRETABPTR) indiquant une première table libre de la liste par ledit pointeur (FRETABXY) lu dans ledit cinquième champ du "mot de canal" ;
r5) lecture dudit deuxième mot appartenant à la table sollicitée à l'étape précédente r3), décodage dudit troisième champ et sélection d'une partition respective de ladite quatrième zone de mémoire dans laquelle est attribuée une dite zone à libérer;
r6) lecture dudit troisième mot appartenant à la table sollicitée à l'étape précédente r3) et écriture dudit troisième mot dans ledit premier registre utilisé pour générer une adresse de début (TABRIL) de ladite zone de mémoire qui doit être libérée ;
r7) libération de ladite zone qui doit être libérée en la mettant en zéro ;
r8) écriture dans ledit quatrième champ (a) dudit "mot de canal" d'une valeur logique indiquant l'état de non-liaison de ladite table sollicitée par l'étape précédente r3) avec ladite zone libérée.

FIG. 1

EP 0 705 521 B1

FIG. 2

PPLD

MPCC.INT

9
9(0)
9(1)

6
CK/SYNC(0)
2MSN.IN(0)
2MSN.OUT(0)
CK/SYNC(1)
2MSN.IN(1)
2MSN.OUT(1)

8
8.IND(0)
8.DAT(0)
8.IND(1)
8.DAT(1)

SEL-S
12
SN64.INT
LAPD.CK
LAPD.LK.IN
LAPD.LK.OUT

SEL-T
TDPC.INT
8.IND
8.DAT

10.IND
10.DAT

10.IND

DUAL.PORT.1

10.IND
10.DAT
DUAL.PORT.0
10.DAT

80C186.CIRCUITS

11.DAT
11.IND

ALARM-DSP

RESET-DSP

DSP.CIRCUITS

FIG. 3

FIG. 4

FIG. 5

FIG. 6a

measurements by BTS {

| RXQUAL_SUB_UP |
| TIMING_ADVANCE |
| N°_CELL |

measurements by MS {

| RXLEV_NCELL_1 | } 1st cell |
| BSIC_BCCH_1 | |

| RXLEV_NCELL_N | } nth cell |
| · BSIC_BCCH_N | |

## FIG. 6b

TABLES IN                    DSP INTERNAL RAM

FRETABPTR ──→ FRETAB00

FRETAB00 ──→ 
| FRETAB01 | } |
| 0 | } 1st table |
| 1000H | } |

FRETAB01 ──→ 
| FRETAB02 | } |
| 0 | } 2nd table |
| 1400H | } |

FRETAB49 ──→ 
| FRETAB50 | } |
| 0 | } 50th table |
| D400H | } |

FRETAB50 ──→ 
| FRETAB51 | } |
| 1 | } 51st table |
| 1000H | } |

FRETAB99 ──→ 
| FFFFH | } |
| 1 | } 100th table (last) |
| D400H | } |

## FIG. 7

EXTERNAL RAM CONTENT DSP — PAGE 0

| D | TEI | CHAN_NBR |

PTR

0
2047

| a | FRETABXY (00 – 99) |

1000H →
(4096B)

CELL.SER

1st
CHANNEL

CELL.AD

| RXLEV_(FULL/SUB)_UL(1...32) | G1 |
| INBF_LU / DEBF_LU | |
| RXQUAL_(FULL/SUB)_UL(1...32) | G2 |
| INBF_QU / DEBF_QU | |
| TIMING_ADVANCE(1...32) | G3 |
| INBF_TA / DEBF_TA | |
| RXLEV_(FULL/SUB)_DL(1...32) | G4 |
| INBF_LD / DEBF_LD | |
| RXQUAL_(FULL/SUB)_DL(1...32) | G5 |
| INBF_QD / DEBF_QD | |
| MS_RF_CAP | |
| b BSIC_BCCH_1 | sub-table 1 |
| AV_RXLEV_NCELL_1 | |
| RXLEV_NCELL_1(1...32) | |
| INBF_LD1 / DEBF_LD1 | |
| b BSIC_BCCH_16 | sub-table 16 |
| AV_RXLEV_NCELL_16 | |
| RXLEV_NCELL_16(1...32) | |
| INBF_LD16 / DEBF_LD16 | |

D400H →
(54272B)

| RXLEV_(FULL/SUB)_UL(1...32) |

50th
CHANNEL

FIG. 8

MAIN
DSP
PROGRAM

INTERNAL DSP RAM
INITIALIZATION — F0

(B)

F1 — SEM_TX = FREE — no

si

F2 — ENGAGE SEM_TX & READ MESSAGE_TYPE IN DUAL.PORT.0

no — F3 — MESSAGE_TYPE =
MEASUREMENT_RESULT — yes — (C)

F4 — MESSAGE_TYPE =
MS_RF_POWER_CAPABILITY — yes

no

F5 — RUN INDINAM
SUBPROGRAM

F6 — UPDATE MS CLASSES
IN CHANNEL RAM

F7 — RELEASE SEM_TX

(B)

F8 — MESSAGE_TYPE = RESET — yes

no

F9 — RUN RILCAN
SUBPROGRAM

F10 — RELEASE SEM_TX

(B)

F11 — MESSAGE_TYPE =
HO_CANDIDATE_
ENQUIRE_INVOKE — no

yes

F13 — RELEASE SEM_TX

F14 — RUN INVOKE PROCEDURE

F12 — RELEASE SEM_TX

(B)

F15 — SEM_RX = FREE — no

yes

F16 — ENGAGE SEM_RX

F18 — (B) — RELEASE
SEM_RX

F17 — WRITE
HO_CANDIDATE_ENQUIRE_COMPLETE
IN DUAL.PORT.0

FIG. 9

MAIN
DSP
PROGRAM
(cont'd)

F19 — RUN INDINAM SUBPROGRAM

F20 — RUN LETMESS SUBPROGRAM

F21 — RELEASE SEM_TX

F22 — MEAN TYPE
CLASSICAL — ACCORDION

F23 — MEAN CALCULATION IN SERVING CELL

F24 — COMPARISONS WITH THRESHOLD FOR POWER CONTROL AND HANDOVER

F25 — same as F23
F26 — same as F24

F27 — ADJACENT CELLS MEAN CALCULATION

F28 — POWER BUDGET CALCULAT. AND COMPAR. WITH THRESHOLDS

F29 — PREFERRED CELLS LIST COMPILATION

F30 — POWER_CONTROL SITUATION
no — yes

F35 — HANDOVER SITUATION
no — yes

F36 — SEM_RX = FREE
no

F31 — SEM_RX = FREE
no

F32 — ENGAGE SEM_RX

F37 — ENGAGE SEM_RX

F38 — WRITE CONDITION_FOR_INTER_ (or INTRA)_CELL_HO MESSAGE IN DUAL.PORT.0

F33 — WRITE CHANGE_MS_POWER (CHANGE_BS_POWER) MESSAGE IN DUAL.PORT.0

F39 — RELEASE SEM_RX

F34 — RELEASE SEM_RX

B

FIG. 10

B

LETMESS
SUBPROGRAM

START

READ IN INTERNAL RAM: INTAB
READ IN DUAL.PORT.0: DTX_UL e DTX_DL — M0

DTX_UL = 1 — M1
no / yes

READ IN DUAL.PORT.0:
RXLEV_FULL_UL
RXQUAL_FULL_UL — M2

READ IN EXTERNAL RAM:
INBF_LU e INBF_QU — M3

WRITE IN EXTERNAL RAM:
RXLEV_FULL_UL
RXQUAL_FULL_UL — M4

INBF_LU → DEBF_LU
INBF_QU → DEBF_QU — M5

INCREASE MODULUS 32
INBF_LU e INBF_QU — M6

READ IN DUAL.PORT.0:
RXLEV_SUB_UL
RXQUAL_SUB_UL — M7

READ IN EXTERNAL RAM:
INBF_LU e INBF_QU — M8

WRITE IN EXTERNAL RAM
RXLEV_SUB_UL
RXQUAL_SUB_UL — M9

INBF_LU → DEBF_LU
INBF_QU → DEBF_QU — M10

INCREASE MODULUS 32
INBF_LU e INBF_QU — M11

READ IN DUAL.PORT.0: TIMING-ADVANCE — M12
READ IN EXTERNAL RAM: INBF_TA — M13
WRITE IN EXTERNAL RAM: TIMING_ADVANCE — M14
INBF_TA → DEBF_TA — M15
INCREASE MODULUS 32 INBF_TA — M16

DTX_DL = 1 — M17
no / yes

READ IN DUAL.PORT.0:
RXLEV_FULL_DL
RXQUAL_FULL_DL — M18

READ IN EXTERNAL RAM:
INBF_LD e INBF_QD — M19

READ IN DUAL.PORT.0:
RXLEV_SUB_DL
RXQUAL_SUB_DL — M23

READ IN EXTERNAL RAM:
INBF_LD e INBF_QD — M24

D                E

FIG. 11

(cont'd)
LETMESS SUBPROGRAM

D

E

M20 — WRITE IN EXTERNAL RAM:
RXLEV_FULL_DL
RXQUAL_FULL_DL

M21 — INBF_LD → DEBF_LD
INBF_QD → DEBF_QD

M22 — INCREASE MODULUS 32
INBF_LD e INBF_QD

WRITE IN EXTERNAL RAM:
RXLEV_SUB_DL
RXQUAL_SUB_DL — M25

INBF_LD → DEBF_LD
INBF_QD → DEBF_QD — M26

INCREASE MODULUS 32
INBF_LD e INBF_QD — M27

READ IN DUAL.PORT.0:
RXLEV_NCELL_(N); BSIC_BCCH_(N); N°_CELL — M28

M29 — n = 0

M30
bit b = 0 in
subtable n
1st word

(subtable occupied)
no

(subtable free)
yes

M37
BSIC_BCCH_(N) =
= BSIC_BCCH_(n)

no

yes

WRITE IN EXTERNAL RAM
BSIC_BCCH_(N) and 1 in bit b — M31

M32
READ IN EXTERNAL RAM: INBF_LD(n)

M33 — RXLEV_NCELL_(N) → RXLEV_NCELL_(n)

M38 — n = n + 1

M34 — INBF_LD_(n) → DEBF_LD_(n)

INCREASE MODULUS 32 INBF_LD(n)

M35

M39
no — n = 16 — yes

M36
N = N°_CELL — no

yes

FIG. 12

RETURN

MAIN
DSP
PROGRAM
(PHASE F0)

| WRITE E&M PARAMETERS | — IN0 |
| WRITE FRETAB00 IN REGISTERS L and Q | — IN1 |
| K = 0C00H ; I = 0 | — IN2 |
| Q = Q − 1 (FRETABPTR ADDRESS) | — IN3 |
| WRITE CONTENT OF L IN INTERNAL RAM | — IN4 |
| Q = Q + 1 | — IN5 |

| K = K+0400H | — IN6 |
| L = L+3 | — IN7 |
| WRITE CONTENT OF L IN INTERNAL RAM | — IN8 |
| Q = Q + 1 | — IN9 |
| WRITE 0000H IN INTERNAL RAM | — IN10 |
| Q = Q + 1 | — IN11 |
| WRITE K IN INTERNAL RAM | — IN12 |
| Q = Q + 1 | — IN13 |

I = I+1 — IN14

no — I = 50 — IN15

yes

| K = 0C00H ; I = 0 | IN16 |

| K = K+0400H | — IN17 |
| L = L+3 | — IN18 |
| WRITE CONTENT OF L IN INTERNAL RAM | — IN19 |
| Q = Q + 1 | — IN20 |
| WRITE 1111H IN INTERNAL RAM | — IN21 |
| Q = Q + 1 | — IN22 |
| WRITE K IN INTERNAL RAM | — IN23 |
| Q = Q + 1 | — IN24 |

I = I+1 — IN25

no — I = 49 — IN26

yes

| K = K+0400H | — IN27 |
| WRITE FFFFH IN INTERNAL RAM | — IN28 |
| Q = Q + 1 | — IN29 |
| WRITE 1111H IN INTERNAL RAM | — IN30 |
| Q = Q + 1 | — IN31 |
| WRITE K IN INTERNAL RAM | — IN32 |

| ZERO EXTERNAL DSP RAM | — IN33 |

FIG. 13    (B)

INDINAM
SUBPROGRAM

START

READING IN DUAL.PORT.0: D,TEI,CHANNEL_NBR — D0

CHAN_ADR = f(D,TEI,CHANNEL_NBR) — D1

READING EXTERNAL RAM AT ADDRESS CHAN_ADDR — D2
Words read (a,FRETABXY) ⟶ ACC0

D3

Area already assigned        ACC0(bit a) = 1        Area not assigned

yes                                                    no

D4 ACC0(FRETABXY) ⟶ Q        D11 ADDRESS OF FRETABPTR ⟶ Q

D12 READING INTERNAL RAM
FRETABPTR ⟶ ACC0

D5 Q = Q + 1

B (fig.8)

yes        D13 ACC0 = FFFFH

D6 READING PAGE BITS
IN INTERNAL RAM

All areas
assigned

no    Areas available

D7 WRITING CONTROL POINT
PG IN REGISTER SC.REG

D14 ACC0 ⟶ EXTERNAL RAM
to address CHAN_ADDR

D15 bit a=1 ⟶ EXTERNAL RAM
to address CHAN_ADDR

D8 Q = Q + 1

D16 ACC0 ⟶ Q

D17 READING NEW POINTER
IN INTERNAL RAM
WORD READ ⟶ ACC1

D9 READING INTERNAL RAM
WORD READ ⟶ INTAB

D18 ADDRESS FRETABPTR ⟶ Q

D19 WRITING NEW POINTER
IN INTERNAL RAM
ACC1 ⟶ FRETABPTR

RETURN (INTAB address)

D10

D20 ACC0 ⟶ Q

FIG. 14

RILCAN
SUBPROGRAM

START

READING IN DUAL.PORT.O: D,TEI,CHANNEL_NBR — R0

CHAN_ADR = f(D,TEI,CHANNEL_NBR) — R1

READING EXTERNAL RAM AT ADDRESS CHAN_ADDR — R2
Words read (a,FRETABXY) ⟶ ACC0

R3

no    ACC0(bit a) = 1    yes

Area not assigned          Area already assigned

R4 — ADDRESS OF FRETABPTR ⟶ REGISTER Q
R5 — FRETABPTR ⟶ ACC1
R6 — ACC0(FRETABXY) ⟶ REGISTER Q
R7 — ACC1 ⟶ INTERNAL RAM

R8 — ADDRESS OF FRETABPTR ⟶ REGISTER Q
R9 — ACC0(FRETABXY) ⟶ INTERNAL RAM

R10 — Q = Q + 2

R11 — READING PAGE BITS IN INTERNAL RAM

R12 — WRITING CONTROL POINT PG IN REGISTER SC.REG

R13 — Q = Q + 1

R14 — READING INTERNAL RAM: WORD READ ⟶ TABRIL

R15 — bit a=0; FRETABXY=000H ⟶ EXTERNAL RAM in address word CHAN_ADDR

R16 — ZERO 1024-WORD AREA IN EXTERNAL RAM STARTING AT TABRIL ADDRESS

RETURN        FIG. 15